# EUROPEAN PATENT SPECIFICATION

(11) **EP 4 380 246 B1**
(45) Date of publication and mention of the grant of the patent: **28.10.2026**
(21) Application number: 24158437.4
(22) Date of filing: 02.08.2019
(51) Int. Cl.: H04W 52/02

(54) **BEAM FAILURE RECOVERY PROCEDURE IN DORMANT STATE**
STRAHLAUSFALLWIEDERHERSTELLUNGSVERFAHREN IM RUHEZUSTAND
PROCÉDURE DE REPRISE APRÈS DÉFAILLANCE DE FAISCEAU DANS UN ÉTAT INACTIF

(30) Priority: 03.08.2018 US 201862714207 P
(43) Date of publication of application: 05.06.2024
(62) Document number(s) of the earlier application(s) in accordance with Art. 76 EPC: 19752896.1 / 3 811 689
(73) Proprietor: TOYOTA JIDOSHA KABUSHIKI KAISHA, Toyota-shi, Aichi-ken 471-8571 (JP)
(72) Inventor: CIRIK, Ali Cagatay, Reston, 20190 (US); DINAN, Esmael Hejazi, Reston, 20190 (US); ZHOU, Hua, Reston, 20190 (US); JEON, Hyoungsuk, Reston, 20190 (US); BABAEI, Alireza, Reston, 20190 (US); PARK, Kyungmin, Reston, 20190 (US)
(74) Representative: Simmons & Simmons

(56) References cited:
- HUAWEI ET AL: "CR on TS38.133 for link recovery procedure requirements", vol. RAN WG4, no. Montreal, Canada; 20180702 - 20180706, 11 July 2018 (2018-07-11), XP051583754, Retrieved from the Internet <URL:http://www.3gpp.org/ftp/tsg%5Fran/WG4%5FRadio/TSGR4%5FAHs/TSGR4%5FAH%2D1807/Docs/R4%2D1809568%2Ezip> [retrieved on 20180711]
- MEDIATEK INC: "Summary 2 on Remaing issues on Beam Failure Recovery", vol. RAN WG1, no. Busan, Korea; 20180521 - 20180525, 24 May 2018 (2018-05-24), XP051463405, Retrieved from the Internet <URL:http://www.3gpp.org/ftp/tsg%5Fran/WG1%5FRL1/TSGR1%5F93/Docs> [retrieved on 20180524]
- INTERDIGITAL INC: "BFR on SCell", vol. RAN WG2, no. Busan, Republic of Korea; 20180521 - 20180525, 20 May 2018 (2018-05-20), XP051443272, Retrieved from the Internet <URL:http://www.3gpp.org/ftp/Meetings%5F3GPP%5FSYNC/RAN2/Docs/> [retrieved on 20180520]
- HUAWEI ET AL: "BFR with SCell deactivation and MAC reset", vol. RAN WG2, no. Busan, Korea; 20180521 - 20180525, 20 May 2018 (2018-05-20), XP051444692, Retrieved from the Internet <URL:http://www.3gpp.org/ftp/Meetings%5F3GPP%5FSYNC/RAN2/Docs/> [retrieved on 20180520]

## Description

### TECHNICAL FIELD

This application relates to the field of wireless communication systems such as LTE or 5G communication systems, other communication systems compatible with LTE or 5G communication systems, and related methods, systems and apparatuses.

### BACKGROUND

With regard to the technical background, reference is made to the 3GPP publications Huawei et al., "CR on TS38.133 for link recovery procedure requirements", 3GPP doc. R4-1809568, 3GPP TSG-RAN WG4 Meeting #AH-1807 Montreal, Canada, July 2-5, 2018*;* MediaTek Inc., "Summary 2 on Remaing issues on Beam Failure Recovery", 3GPP doc.; R1-1807796, 33GPP TSG RAN WG1 Meeting #93, Busan, Korea, May 21th - 25th, 2018*;* InterDigital, Inc., "BFR on SCell", in; 3GPP doc. R2-1806821, 3GPP TSG-RAN WG2, RAN2#102, Busan, Korea, May 21-25, 2018*;* and Huawei et al., "BFR with SCell deactivation and MAC reset", in: 3GPP doc. R2-1808418, id*.*

### SUMMARY

The invention is set out in the appended claims. Accordingly, a method for a wireless device of a wireless communication system is described herein. In one embodiment, the method includes receiving - by the wireless device - one or more radio resource control (RRC) messages comprising beam failure detection parameters of a secondary cell, wherein the beam failure detection parameters indicate: one or more channel state information reference signal (CSI-RS) of the secondary cell, and a maximum beam failure instance count. The method further includes performing a beam failure detection of the secondary cell in a dormant state, wherein the beam failure detection of the secondary cell is based on: one or more radio link qualities of the one or more CSI-RS of the secondary cell; a block error rate (BLER) threshold, and the maximum beam failure instance count. Furthermore, the method includes performing a beam failure recovery of the secondary cell in the dormant state based on detecting a beam failure of the secondary cell. Moreover, related apparatuses and devices are described.

### BRIEF DESCRIPTION OF THE SEVERAL VIEWS OF THE DRAWINGS

Examples of several of the various embodiments of the present disclosure are described herein with reference to the drawings.
FIG. 1 is a diagram of an example RAN architecture as per an aspect of an embodiment of the present disclosure.
FIG. 2A is a diagram of an example user plane protocol stack as per an aspect of an embodiment of the present disclosure.
FIG.2B is a diagram of an example control plane protocol stack as per an aspect of an embodiment of the present disclosure.
FIG. 3 is a diagram of an example wireless device and two base stations as per an aspect of an embodiment of the present disclosure.
FIG. 4A, FIG. 4B, FIG. 4C and FIG. 4D are example diagrams for uplink and downlink signal transmission as per an aspect of an embodiment of the present disclosure.
FIG. 5A is a diagram of an example uplink channel mapping and example uplink physical signals as per an aspect of an embodiment of the present disclosure.
FIG. 5B is a diagram of an example downlink channel mapping and example downlink physical signals as per an aspect of an embodiment of the present disclosure.
FIG. 6 is a diagram depicting an example transmission time or reception time for a carrier as per an aspect of an embodiment of the present disclosure.
FIG. 7A and FIG. 7B are diagrams depicting example sets of OFDM subcarriers as per an aspect of an embodiment of the present disclosure.
FIG. 8 is a diagram depicting example OFDM radio resources as per an aspect of an embodiment of the present disclosure.
FIG. 9A is a diagram depicting an example CSI-RS and/or SS block transmission in a multi-beam system.
FIG. 9B is a diagram depicting an example downlink beam management procedure as per an aspect of an embodiment of the present disclosure.
FIG. 10 is an example diagram of configured BWPs as per an aspect of an embodiment of the present disclosure.
FIG. 11A, and FIG. 11B are diagrams of an example multi connectivity as per an aspect of an embodiment of the present disclosure.
FIG. 12 is a diagram of an example random access procedure as per an aspect of an embodiment of the present disclosure.
FIG. 13 is a structure of example MAC entities as per an aspect of an embodiment of the present disclosure.
FIG. 14 is a diagram of an example RAN architecture as per an aspect of an embodiment of the present disclosure.
FIG. 15 is a diagram of example RRC states as per an aspect of an embodiment of the present disclosure.
FIG. 16A, FIG. 16B and FIG. 16C are examples of MAC subheaders as per an aspect of an embodiment of the present disclosure.
FIG. 17A and FIG. 17B are examples of MAC PDUs as per an aspect of an embodiment of the present disclosure.
FIG. 18 is an example of LCIDs for DL-SCH as per an aspect of an embodiment of the present disclosure.
FIG. 19 is an example of LCIDs for UL-SCH as per an aspect of an embodiment of the present disclosure.
FIG. 20A is an example of an SCell Activation/Deactivation MAC CE of one octet as per an aspect of an embodiment of the present disclosure.
FIG. 20B is an example of an SCell Activation/Deactivation MAC CE of four octets as per an aspect of an embodiment of the present disclosure.
FIG. 21A is an example of an SCell hibernation MAC CE of one octet as per an aspect of an embodiment of the present disclosure.
FIG. 21B is an example of an SCell hibernation MAC CE of four octets as per an aspect of an embodiment of the present disclosure.
FIG. 21C is an example of MAC control elements for an SCell state transitions as per an aspect of an embodiment of the present disclosure.
FIG. 22 is an example of an SCell state transition mechanism based on signaling as per an aspect of an embodiment of the present disclosure.
FIG. 23 is an example of an SCell state transition mechanism based on timer as per an aspect of an embodiment of the present disclosure.
FIG. 24A and FIG. 24B are examples of downlink beam failure as per an aspect of an embodiment of the present disclosure.
FIG. 25 is an example flowchart of a downlink beam failure recovery procedure as per an aspect of an embodiment of the present disclosure.
FIG. 26 is an example of downlink beam failure instance indication as per an aspect of an embodiment of the present disclosure.
FIG. 27 is an example of downlink beam failure instance indication as per an aspect of an embodiment of the present disclosure.
FIG. 28 is an example of downlink beam failure recovery procedure in dormant state as per an aspect of an embodiment of the present disclosure.
FIG. 29A and FIG. 29B are examples of downlink beam failure recovery procedure as per aspects of embodiments of the present disclosure.

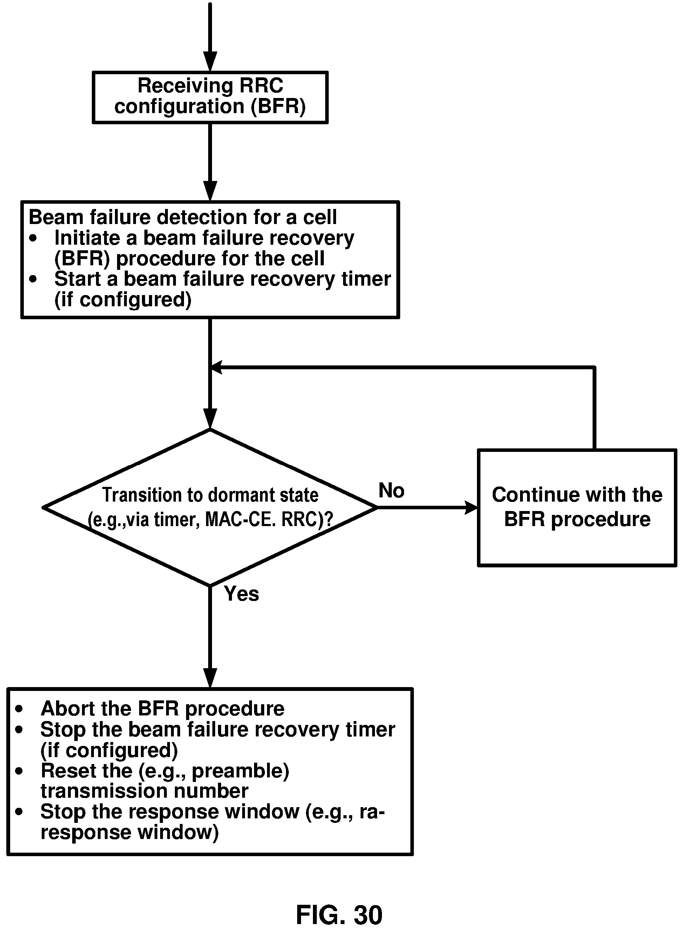

FIG. 30 is an example flowchart of FIG. 28 as per an aspect of an embodiment of the present disclosure.
FIG. 31 is an flow diagram as per an aspect of an example embodiment of the present disclosure.

### DETAILED DESCRIPTION OF EMBODIMENTS

Example embodiments of the present disclosure enable operation of beam failure recovery procedure. Embodiments of the technology disclosed herein may be employed in the technical field of multicarrier communication systems. More particularly, the embodiments of the technology disclosed herein may relate to beam failure recovery procedure in a multicarrier communication system.

The following Acronyms are used throughout the present disclosure:
- 3GPP: 3rd Generation Partnership Project
- 5GC: 5G Core Network
- ACK: Acknowledgement
- AMF: Access and Mobility Management Function
- ARQ: Automatic Repeat Request
- AS: Access Stratum
- ASIC: Application-Specific Integrated Circuit
- BA: Bandwidth Adaptation
- BCCH: Broadcast Control Channel
- BCH: Broadcast Channel
- BPSK: Binary Phase Shift Keying
- BWP: Bandwidth Part
- CA: Carrier Aggregation
- CC: Component Carrier
- CCCH: Common Control CHannel
- CDMA: Code Division Multiple Access
- CN: Core Network
- CP: Cyclic Prefix
- CP-OFDM: Cyclic Prefix- Orthogonal Frequency Division Multiplex
- C-RNTI: Cell-Radio Network Temporary Identifier
- CS: Configured Scheduling
- CSI: Channel State Information
- CSI-RS: Channel State Information-Reference Signal
- CQI: Channel Quality Indicator
- CSS: Common Search Space
- CU: Central Unit
- DAI: Downlink Assignment Index
- DC: Dual Connectivity
- DCCH: Dedicated Control Channel
- DCI: Downlink Control Information
- DL: Downlink
- DL-SCH: Downlink Shared CHannel
- DM-RS: DeModulation Reference Signal
- DRB: Data Radio Bearer
- DRX: Discontinuous Reception
- DTCH: Dedicated Traffic Channel
- DU: Distributed Unit
- EPC: Evolved Packet Core
- E-UTRA: Evolved UMTS Terrestrial Radio Access
- E-UTRAN: Evolved-Universal Terrestrial Radio Access Network
- FDD: Frequency Division Duplex
- FPGA: Field Programmable Gate Arrays
- F1-C: F1-Control plane
- F1-U: F1-User plane
- gNB: next generation Node B
- HARQ: Hybrid Automatic Repeat reQuest
- HDL: Hardware Description Languages
- IE: Information Element
- IP: Internet Protocol
- LCID: Logical Channel Identifier
- LTE: Long Term Evolution
- MAC: Media Access Control
- MCG: Master Cell Group
- MCS: Modulation and Coding Scheme
- MeNB: Master evolved Node B
- MIB: Master Information Block
- MME: Mobility Management Entity
- MN: Master Node
- NACK: Negative Acknowledgement
- NAS: Non-Access Stratum
- NG CP: Next Generation Control Plane
- NGC: Next Generation Core
- NG-C: NG-Control plane
- ng-eNB: next generation evolved Node B
- NG-U: NG-User plane
- NR: New Radio
- NR MAC: New Radio MAC
- NR PDCP: New Radio PDCP
- NR PHY: New Radio PHYsical
- NR RLC: New Radio RLC
- NR RRC: New Radio RRC
- NSSAI: Network Slice Selection Assistance Information
- O&M: Operation and Maintenance
- OFDM: orthogonal Frequency Division Multiplexing
- PBCH: Physical Broadcast CHannel
- PCC: Primary Component Carrier
- PCCH: Paging Control CHannel
- PCell: Primary Cell
- PCH: Paging CHannel
- PDCCH: Physical Downlink Control CHannel
- PDCP: Packet Data Convergence Protocol
- PDSCH: Physical Downlink Shared CHannel
- PDU: Protocol Data Unit
- PHICH: Physical HARQ Indicator CHannel
- PHY: PHYsical
- PLMN: Public Land Mobile Network
- PMI: Precoding Matrix Indicator
- PRACH: Physical Random Access CHannel
- PRB: Physical Resource Block
- PSCell: Primary Secondary Cell
- PSS: Primary Synchronization Signal
- pTAG: primary Timing Advance Group
- PT-RS: Phase Tracking Reference Signal
- PUCCH: Physical Uplink Control CHannel
- PUSCH: Physical Uplink Shared CHannel
- QAM: Quadrature Amplitude Modulation
- QFI: Quality of Service Indicator
- QoS: Quality of Service
- QPSK: Quadrature Phase Shift Keying
- RA: Random Access
- RACH: Random Access CHannel
- RAN: Radio Access Network
- RAT: Radio Access Technology
- RA-RNTI: Random Access-Radio Network Temporary Identifier
- RB: Resource Blocks
- RBG: Resource Block Groups
- RI: Rank indicator
- RLC: Radio Link Control
- RLM: Radio Link Monitoring
- RRC: Radio Resource Control
- RS: Reference Signal
- RSRP: Reference Signal Received Power
- SCC: Secondary Component Carrier
- SCell: Secondary Cell
- SCG: Secondary Cell Group
- SC-FDMA: Single Carrier-Frequency Division Multiple Access
- SDAP: Service Data Adaptation Protocol
- SDU: Service Data Unit
- SeNB: Secondary evolved Node B
- SFN: System Frame Number
- S-GW: Serving GateWay
- SI: System Information
- SIB: System Information Block
- SMF: Session Management Function
- SN: Secondary Node
- SpCell: Special Cell
- SRB: Signaling Radio Bearer
- SRS: Sounding Reference Signal
- SS: Synchronization Signal
- SSS: Secondary Synchronization Signal
- sTAG: secondary Timing Advance Group
- TA: Timing Advance
- TAG: Timing Advance Group
- TAI: Tracking Area Identifier
- TAT: Time Alignment Timer
- TB: Transport Block
- TCI: Transmission Configuration Indication
- TC-RNTI: Temporary Cell-Radio Network Temporary Identifier
- TDD: Time Division Duplex
- TDMA: Time Division Multiple Access
- TTI: Transmission Time Interval
- UCI: Uplink Control Information
- UE: User Equipment
- UL: Uplink
- UL-SCH: Uplink Shared CHannel
- UPF: User Plane Function
- UPGW: User Plane Gateway
- VHDL: VHSIC Hardware Description Language
- Xn-C: Xn-Control plane
- Xn-U: Xn-User plane

Example embodiments of the disclosure may be implemented using various physical layer modulation and transmission mechanisms. Example transmission mechanisms may include, but are not limited to: Code Division Multiple Access (CDMA), Orthogonal Frequency Division Multiple Access (OFDMA), Time Division Multiple Access (TDMA), Wavelet technologies, and/or the like. Hybrid transmission mechanisms such as TDMA/CDMA, and OFDM/CDMA may also be employed. Various modulation schemes may be applied for signal transmission in the physical layer. Examples of modulation schemes include, but are not limited to: phase, amplitude, code, a combination of these, and/or the like. An example radio transmission method may implement Quadrature Amplitude Modulation (QAM) using Binary Phase Shift Keying (BPSK), Quadrature Phase Shift Keying (QPSK), 16-QAM, 64-QAM, 256-QAM, 1024-QAM, and/or the like. Physical radio transmission may be enhanced by dynamically or semi-dynamically changing the modulation and coding scheme depending on transmission requirements and radio conditions.

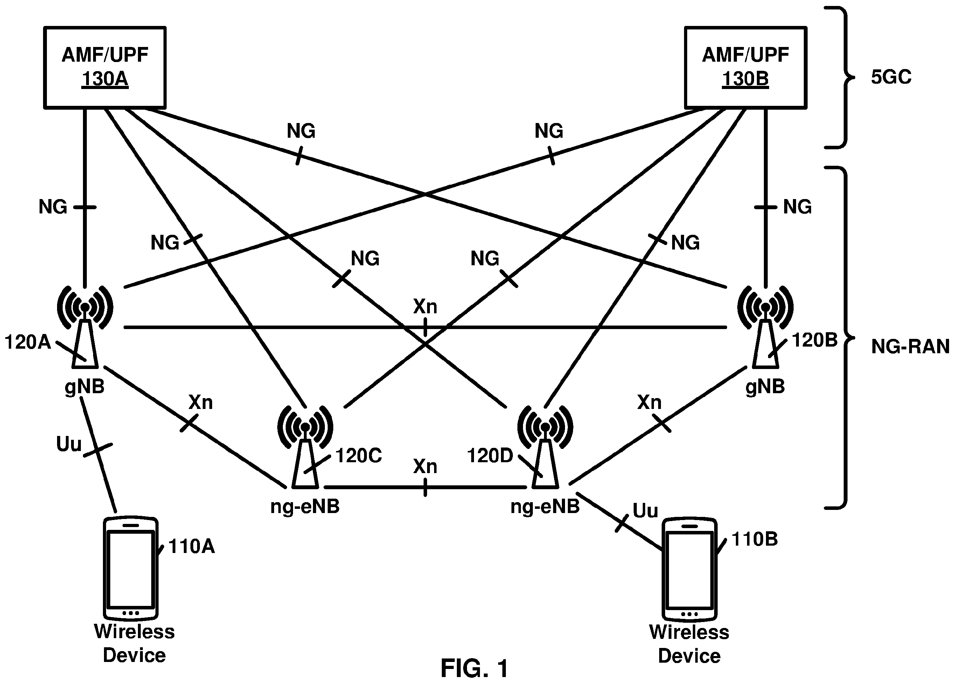

FIG. 1 is an example Radio Access Network (RAN) architecture as per an aspect of an embodiment of the present disclosure. As illustrated in this example, a RAN node may be a next generation Node B (gNB) *(e.g.* 120A, 120B) providing New Radio (NR) user plane and control plane protocol terminations towards a first wireless device *(e.g.* 110A). In an example, a RAN node may be a next generation evolved Node B (ng-eNB) *(e.g.* 120C, 120D), providing Evolved UMTS Terrestrial Radio Access (E-UTRA) user plane and control plane protocol terminations towards a second wireless device (*e.g.* 110B). The first wireless device may communicate with a gNB over a Uu interface. The second wireless device may communicate with a ng-eNB over a Uu interface.

A gNB or an ng-eNB may host functions such as radio resource management and scheduling, IP header compression, encryption and integrity protection of data, selection of Access and Mobility Management Function (AMF) at User Equipment (UE) attachment, routing of user plane and control plane data, connection setup and release, scheduling and transmission of paging messages (originated from the AMF), scheduling and transmission of system broadcast information (originated from the AMF or Operation and Maintenance (O&M)), measurement and measurement reporting configuration, transport level packet marking in the uplink, session management, support of network slicing, Quality of Service (QoS) flow management and mapping to data radio bearers, support of UEs in RRC_INACTIVE state, distribution function for Non-Access Stratum (NAS) messages, RAN sharing, dual connectivity or tight interworking between NR and E-UTRA.

In an example, one or more gNBs and/or one or more ng-eNBs may be interconnected with each other by means of Xn interface. A gNB or an ng-eNB may be connected by means of NG interfaces to 5G Core Network (5GC). In an example, 5GC may comprise one or more AMF/User Plan Function (UPF) functions (*e.g*. 130A or 130B). A gNB or an ng-eNB may be connected to a UPF by means of an NG-User plane (NG-U) interface. The NG-U interface may provide delivery (*e.g*. non-guaranteed delivery) of user plane Protocol Data Units (PDUs) between a RAN node and the UPF. A gNB or an ng-eNB may be connected to an AMF by means of an NG-Control plane (NG-C) interface. The NG-C interface may provide functions such as NG interface management, UE context management, UE mobility management, transport of NAS messages, paging, PDU session management, configuration transfer or warning message transmission.

In an example, a UPF may host functions such as anchor point for intra-/inter-Radio Access Technology (RAT) mobility (when applicable), external PDU session point of interconnect to data network, packet routing and forwarding, packet inspection and user plane part of policy rule enforcement, traffic usage reporting, uplink classifier to support routing traffic flows to a data network, branching point to support multi-homed PDU session, QoS handling for user plane, *e.g.* packet filtering, gating, Uplink (UL)/Downlink (DL) rate enforcement, uplink traffic verification (*e.g*. Service Data Flow (SDF) to QoS flow mapping), downlink packet buffering and/or downlink data notification triggering.

In an example, an AMF may host functions such as NAS signaling termination, NAS signaling security, Access Stratum (AS) security control, inter Core Network (CN) node signaling for mobility between 3^{rd} Generation Partnership Project (3GPP) access networks, idle mode UE reachability (e.g., control and execution of paging retransmission), registration area management, support of intra-system and inter-system mobility, access authentication, access authorization including check of roaming rights, mobility management control (subscription and policies), support of network slicing and/or Session Management Function (SMF) selection.

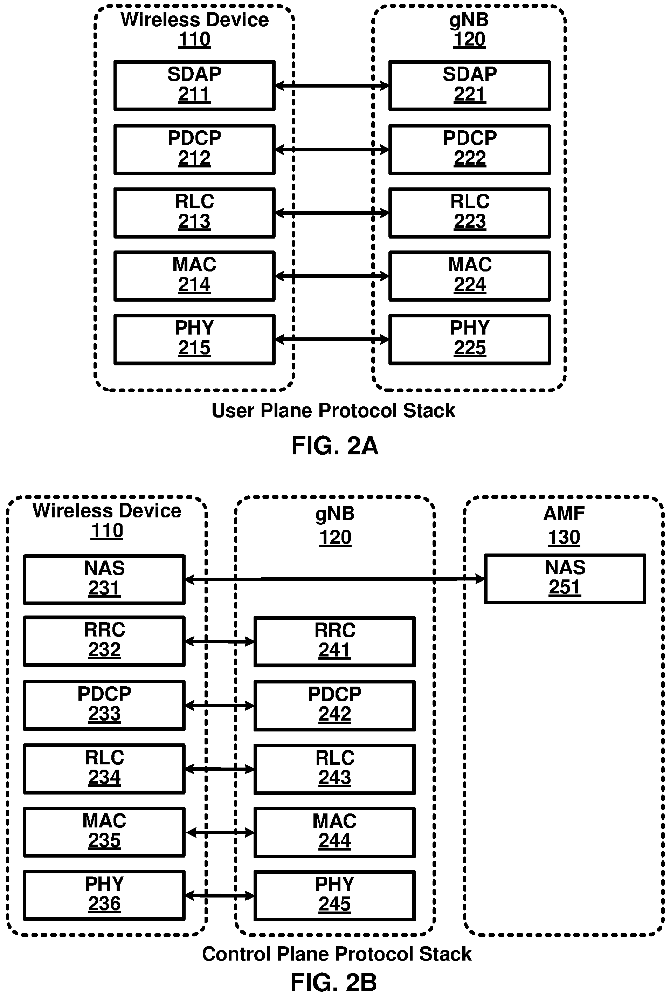

FIG. 2A is an example user plane protocol stack, where Service Data Adaptation Protocol (SDAP) (*e.g.* 211 and 221), Packet Data Convergence Protocol (PDCP) (*e.g.* 212 and 222), Radio Link Control (RLC) (*e.g.* 213 and 223) and Media Access Control (MAC) (*e.g.* 214 and 224) sublayers and Physical (PHY) (*e.g.* 215 and 225) layer may be terminated in wireless device (*e.g.* 110) and gNB (*e.g.* 120) on the network side. In an example, a PHY layer provides transport services to higher layers (*e.g*. MAC, RRC, etc.). In an example, services and functions of a MAC sublayer may comprise mapping between logical channels and transport channels, multiplexing/demultiplexing of MAC Service Data Units (SDUs) belonging to one or different logical channels into/from Transport Blocks (TBs) delivered to/from the PHY layer, scheduling information reporting, error correction through Hybrid Automatic Repeat request (HARQ) (*e.g.* one HARQ entity per carrier in case of Carrier Aggregation (CA)), priority handling between UEs by means of dynamic scheduling, priority handling between logical channels of one UE by means of logical channel prioritization, and/or padding. A MAC entity may support one or multiple numerologies and/or transmission timings. In an example, mapping restrictions in a logical channel prioritization may control which numerology and/or transmission timing a logical channel may use. In an example, an RLC sublayer may supports transparent mode (TM), unacknowledged mode (UM) and acknowledged mode (AM) transmission modes. The RLC configuration may be per logical channel with no dependency on numerologies and/or Transmission Time Interval (TTI) durations. In an example, Automatic Repeat Request (ARQ) may operate on any of the numerologies and/or TTI durations the logical channel is configured with. In an example, services and functions of the PDCP layer for the user plane may comprise sequence numbering, header compression and decompression, transfer of user data, reordering and duplicate detection, PDCP PDU routing (*e.g.* in case of split bearers), retransmission of PDCP SDUs, ciphering, deciphering and integrity protection, PDCP SDU discard, PDCP reestablishment and data recovery for RLC AM, and/or duplication of PDCP PDUs. In an example, services and functions of SDAP may comprise mapping between a QoS flow and a data radio bearer. In an example, services and functions of SDAP may comprise mapping Quality of Service Indicator (QFI) in DL and UL packets. In an example, a protocol entity of SDAP may be configured for an individual PDU session.

FIG. 2B is an example control plane protocol stack where PDCP (*e.g.* 233 and 242), RLC (*e.g.* 234 and 243) and MAC (*e.g.* 235 and 244) sublayers and PHY (*e.g.* 236 and 245) layer may be terminated in wireless device (*e.g.* 110) and gNB (*e.g.* 120) on a network side and perform service and functions described above. In an example, RRC (*e.g.* 232 and 241) may be terminated in a wireless device and a gNB on a network side. In an example, services and functions of RRC may comprise broadcast of system information related to AS and NAS, paging initiated by 5GC or RAN, establishment, maintenance and release of an RRC connection between the UE and RAN, security functions including key management, establishment, configuration, maintenance and release of Signaling Radio Bearers (SRBs) and Data Radio Bearers (DRBs), mobility functions, QoS management functions, UE measurement reporting and control of the reporting, detection of and recovery from radio link failure, and/or NAS message transfer to/from NAS from/to a UE. In an example, NAS control protocol (*e.g.* 231 and 251) may be terminated in the wireless device and AMF (*e.g.* 130) on a network side and may perform functions such as authentication, mobility management between a UE and a AMF for 3GPP access and non-3GPP access, and session management between a UE and a SMF for 3GPP access and non-3GPP access.

In an example, a base station may configure a plurality of logical channels for a wireless device. A logical channel in the plurality of logical channels may correspond to a radio bearer and the radio bearer may be associated with a QoS requirement. In an example, a base station may configure a logical channel to be mapped to one or more TTIs/numerologies in a plurality of TTIs/numerologies. The wireless device may receive a Downlink Control Information (DCI) via Physical Downlink Control CHannel (PDCCH) indicating an uplink grant. In an example, the uplink grant may be for a first TTI/numerology and may indicate uplink resources for transmission of a transport block. The base station may configure each logical channel in the plurality of logical channels with one or more parameters to be used by a logical channel prioritization procedure at the MAC layer of the wireless device. The one or more parameters may comprise priority, prioritized bit rate, etc. A logical channel in the plurality of logical channels may correspond to one or more buffers comprising data associated with the logical channel. The logical channel prioritization procedure may allocate the uplink resources to one or more first logical channels in the plurality of logical channels and/or one or more MAC Control Elements (CEs). The one or more first logical channels may be mapped to the first TTI/numerology. The MAC layer at the wireless device may multiplex one or more MAC CEs and/or one or more MAC SDUs (*e*.*g.,* logical channel) in a MAC PDU (*e.g.,* transport block). In an example, the MAC PDU may comprise a MAC header comprising a plurality of MAC subheaders. A MAC sub-header in the plurality of MAC sub-headers may correspond to a MAC CE or a MAC SUD (logical channel) in the one or more MAC CEs and/or one or more MAC SDUs. In an example, a MAC CE or a logical channel may be configured with a Logical Channel IDentifier (LCID). In an example, LCID for a logical channel or a MAC CE may be fixed/pre-configured. In an example, LCID for a logical channel or MAC CE may be configured for the wireless device by the base station. The MAC sub-header corresponding to a MAC CE or a MAC SDU may comprise LCID associated with the MAC CE or the MAC SDU.

In an example, a base station may activate and/or deactivate and/or impact one or more processes (*e.g*., set values of one or more parameters of the one or more processes or start and/or stop one or more timers of the one or more processes) at the wireless device by employing one or more MAC commands. The one or more MAC commands may comprise one or more MAC control elements. In an example, the one or more processes may comprise activation and/or deactivation of PDCP packet duplication for one or more radio bearers. The base station may transmit a MAC CE comprising one or more fields, the values of the fields indicating activation and/or deactivation of PDCP duplication for the one or more radio bearers. In an example, the one or more processes may comprise Channel State Information (CSI) transmission of on one or more cells. The base station may transmit one or more MAC CEs indicating activation and/or deactivation of the CSI transmission on the one or more cells. In an example, the one or more processes may comprise activation or deactivation of one or more secondary cells. In an example, the base station may transmit a MA CE indicating activation or deactivation of one or more secondary cells. In an example, the base station may transmit one or more MAC CEs indicating starting and/or stopping one or more Discontinuous Reception (DRX) timers at the wireless device. In an example, the base station may transmit one or more MAC CEs indicating one or more timing advance values for one or more Timing Advance Groups (TAGs).

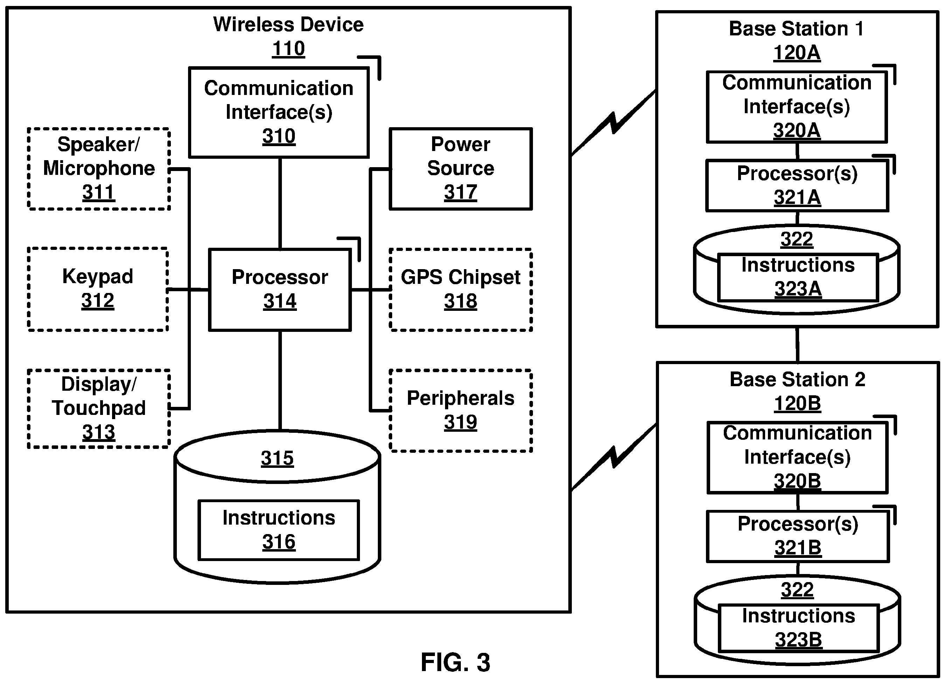

FIG. 3 is a block diagram of base stations (base station 1, 120A, and base station 2, 120B) and a wireless device 110. A wireless device may be called an UE. A base station may be called a NB, eNB, gNB, and/or ng-eNB. In an example, a wireless device and/or a base station may act as a relay node. The base station 1, 120A, may comprise at least one communication interface 320A (*e.g.* a wireless modem, an antenna, a wired modem, and/or the like), at least one processor 321A, and at least one set of program code instructions 323A stored in non-transitory memory 322A and executable by the at least one processor 321A. The base station 2, 120B, may comprise at least one communication interface 320B, at least one processor 321B, and at least one set of program code instructions 323B stored in non-transitory memory 322B and executable by the at least one processor 321B.

A base station may comprise many sectors for example: 1, 2, 3, 4, or 6 sectors. A base station may comprise many cells, for example, ranging from 1 to 50 cells or more. A cell may be categorized, for example, as a primary cell or secondary cell. At Radio Resource Control (RRC) connection establishment/re-establishment/handover, one serving cell may provide the NAS (non-access stratum) mobility information (*e.g.* Tracking Area Identifier (TAI)). At RRC connection re-establishment/handover, one serving cell may provide the security input. This cell may be referred to as the Primary Cell (PCell). In the downlink, a carrier corresponding to the PCell may be a DL Primary Component Carrier (PCC), while in the uplink, a carrier may be an UL PCC. Depending on wireless device capabilities, Secondary Cells (SCells) may be configured to form together with a PCell a set of serving cells. In a downlink, a carrier corresponding to an SCell may be a downlink secondary component carrier (DL SCC), while in an uplink, a carrier may be an uplink secondary component carrier (UL SCC). An SCell may or may not have an uplink carrier.

A cell, comprising a downlink carrier and optionally an uplink carrier, may be assigned a physical cell ID and a cell index. A carrier (downlink or uplink) may belong to one cell. The cell ID or cell index may also identify the downlink carrier or uplink carrier of the cell (depending on the context it is used). In the disclosure, a cell ID may be equally referred to a carrier ID, and a cell index may be referred to a carrier index. In an implementation, a physical cell ID or a cell index may be assigned to a cell. A cell ID may be determined using a synchronization signal transmitted on a downlink carrier. A cell index may be determined using RRC messages. For example, when the disclosure refers to a first physical cell ID for a first downlink carrier, the disclosure may mean the first physical cell ID is for a cell comprising the first downlink carrier. The same concept may apply to, for example, carrier activation. When the disclosure indicates that a first carrier is activated, the specification may equally mean that a cell comprising the first carrier is activated.

A base station may transmit to a wireless device one or more messages (*e.g*. RRC messages) comprising a plurality of configuration parameters for one or more cells. One or more cells may comprise at least one primary cell and at least one secondary cell. In an example, an RRC message may be broadcasted or unicasted to the wireless device. In an example, configuration parameters may comprise common parameters and dedicated parameters.

Services and/or functions of an RRC sublayer may comprise at least one of: broadcast of system information related to AS and NAS; paging initiated by 5GC and/or NG-RAN; establishment, maintenance, and/or release of an RRC connection between a wireless device and NG-RAN, which may comprise at least one of addition, modification and release of carrier aggregation; or addition, modification, and/or release of dual connectivity in NR or between E-UTRA and NR. Services and/or functions of an RRC sublayer may further comprise at least one of security functions comprising key management; establishment, configuration, maintenance, and/or release of Signaling Radio Bearers (SRBs) and/or Data Radio Bearers (DRBs); mobility functions which may comprise at least one of a handover (*e.g*. intra NR mobility or inter-RAT mobility) and a context transfer; or a wireless device cell selection and reselection and control of cell selection and reselection. Services and/or functions of an RRC sublayer may further comprise at least one of QoS management functions; a wireless device measurement configuration/reporting; detection of and/or recovery from radio link failure; or NAS message transfer to/from a core network entity (*e.g*. AMF, Mobility Management Entity (MME)) from/to the wireless device.

An RRC sublayer may support an RRC_Idle state, an RRC_Inactive state and/or an RRC_Connected state for a wireless device. In an RRC_Idle state, a wireless device may perform at least one of: Public Land Mobile Network (PLMN) selection; receiving broadcasted system information; cell selection/re-selection; monitoring/receiving a paging for mobile terminated data initiated by 5GC; paging for mobile terminated data area managed by 5GC; or DRX for CN paging configured via NAS. In an RRC_Inactive state, a wireless device may perform at least one of: receiving broadcasted system information; cell selection/re-selection; monitoring/receiving a RAN/CN paging initiated by NG-RAN/5GC; RAN-based notification area (RNA) managed by NG- RAN; or DRX for RAN/CN paging configured by NG-RAN/NAS. In an RRC_Idle state of a wireless device, a base station (*e.g.* NG-RAN) may keep a 5GC-NG-RAN connection (both C/U-planes) for the wireless device; and/or store a UE AS context for the wireless device. In an RRC_Connected state of a wireless device, a base station (*e.g*. NG-RAN) may perform at least one of: establishment of 5GC-NG-RAN connection (both C/U-planes) for the wireless device; storing a UE AS context for the wireless device; transmit/receive of unicast data to/from the wireless device; or network-controlled mobility based on measurement results received from the wireless device. In an RRC_Connected state of a wireless device, an NG-RAN may know a cell that the wireless device belongs to.

System information (SI) may be divided into minimum SI and other SI. The minimum SI may be periodically broadcast. The minimum SI may comprise basic information required for initial access and information for acquiring any other SI broadcast periodically or provisioned on-demand, i.e. scheduling information. The other SI may either be broadcast, or be provisioned in a dedicated manner, either triggered by a network or upon request from a wireless device. A minimum SI may be transmitted via two different downlink channels using different messages (*e.g. MasterInformationBlock* and *SystemInformationBlockType1*)*.* Another SI may be transmitted via *SystemInformationBlockType2.* For a wireless device in an RRC_Connected state, dedicated RRC signaling may be employed for the request and delivery of the other SI. For the wireless device in the RRC_Idle state and/or the RRC_Inactive state, the request may trigger a random-access procedure.

A wireless device may report its radio access capability information which may be static. A base station may request what capabilities for a wireless device to report based on band information. When allowed by a network, a temporary capability restriction request may be sent by the wireless device to signal the limited availability of some capabilities (*e.g*. due to hardware sharing, interference or overheating) to the base station. The base station may confirm or reject the request. The temporary capability restriction may be transparent to 5GC (*e.g.,* static capabilities may be stored in 5GC).

When CA is configured, a wireless device may have an RRC connection with a network. At RRC connection establishment/re-establishment/handover procedure, one serving cell may provide NAS mobility information, and at RRC connection re-establishment/handover, one serving cell may provide a security input. This cell may be referred to as the PCell. Depending on the capabilities of the wireless device, SCells may be configured to form together with the PCell a set of serving cells. The configured set of serving cells for the wireless device may comprise one PCell and one or more SCells.

The reconfiguration, addition and removal of SCells may be performed by RRC. At intra-NR handover, RRC may also add, remove, or reconfigure SCells for usage with the target PCell. When adding a new SCell, dedicated RRC signaling may be employed to send all required system information of the SCell i.e. while in connected mode, wireless devices may not need to acquire broadcasted system information directly from the SCells.

The purpose of an RRC connection reconfiguration procedure may be to modify an RRC connection, (*e.g*. to establish, modify and/or release RBs, to perform handover, to setup, modify, and/or release measurements, to add, modify, and/or release SCells and cell groups). As part of the RRC connection reconfiguration procedure, NAS dedicated information may be transferred from the network to the wireless device. The *RRCConnectionReconfiguration* message may be a command to modify an RRC connection. It may convey information for measurement configuration, mobility control, radio resource configuration (*e.g*. RBs, MAC main configuration and physical channel configuration) comprising any associated dedicated NAS information and security configuration. If the received RRC Connection Reconfiguration message includes the *sCellToReleaseList,* the wireless device may perform an SCell release. If the received RRC Connection Reconfiguration message includes the *sCellToAddModList,* the wireless device may perform SCell additions or modification.

An RRC connection establishment (or reestablishment, resume) procedure may be to establish (or reestablish, resume) an RRC connection. an RRC connection establishment procedure may comprise SRB1 establishment. The RRC connection establishment procedure may be used to transfer the initial NAS dedicated information/ message from a wireless device to E-UTRAN. The *RRCConnectionReestablishment* message may be used to re-establish SRB1.

A measurement report procedure may be to transfer measurement results from a wireless device to NG-RAN. The wireless device may initiate a measurement report procedure after successful security activation. A measurement report message may be employed to transmit measurement results.

The wireless device 110 may comprise at least one communication interface 310 *(e.g.* a wireless modem, an antenna, and/or the like), at least one processor 314, and at least one set of program code instructions 316 stored in non-transitory memory 315 and executable by the at least one processor 314. The wireless device 110 may further comprise at least one of at least one speaker/microphone 311, at least one keypad 312, at least one display/touchpad 313, at least one power source 317, at least one global positioning system (GPS) chipset 318, and other peripherals 319.

The processor 314 of the wireless device 110, the processor 321A of the base station 1 120A, and/or the processor 321B of the base station 2 120B may comprise at least one of a general-purpose processor, a digital signal processor (DSP), a controller, a microcontroller, an application specific integrated circuit (ASIC), a field programmable gate array (FPGA) and/or other programmable logic device, discrete gate and/or transistor logic, discrete hardware components, and the like. The processor 314 of the wireless device 110, the processor 321A in base station 1 120A, and/or the processor 321B in base station 2 120B may perform at least one of signal coding/processing, data processing, power control, input/output processing, and/or any other functionality that may enable the wireless device 110, the base station 1 120A and/or the base station 2 120B to operate in a wireless environment.

The processor 314 of the wireless device 110 may be connected to the speaker/microphone 311, the keypad 312, and/or the display/touchpad 313. The processor 314 may receive user input data from and/or provide user output data to the speaker/microphone 311, the keypad 312, and/or the display/touchpad 313. The processor 314 in the wireless device 110 may receive power from the power source 317 and/or may be configured to distribute the power to the other components in the wireless device 110. The power source 317 may comprise at least one of one or more dry cell batteries, solar cells, fuel cells, and the like. The processor 314 may be connected to the GPS chipset 318. The GPS chipset 318 may be configured to provide geographic location information of the wireless device 110.

The processor 314 of the wireless device 110 may further be connected to other peripherals 319, which may comprise one or more software and/or hardware modules that provide additional features and/or functionalities. For example, the peripherals 319 may comprise at least one of an accelerometer, a satellite transceiver, a digital camera, a universal serial bus (USB) port, a hands-free headset, a frequency modulated (FM) radio unit, a media player, an Internet browser, and the like.

The communication interface 320A of the base station 1, 120A, and/or the communication interface 320B of the base station 2, 120B, may be configured to communicate with the communication interface 310 of the wireless device 110 via a wireless link 330A and/or a wireless link 330B respectively. In an example, the communication interface 320A of the base station 1, 120A, may communicate with the communication interface 320B of the base station 2 and other RAN and core network nodes.

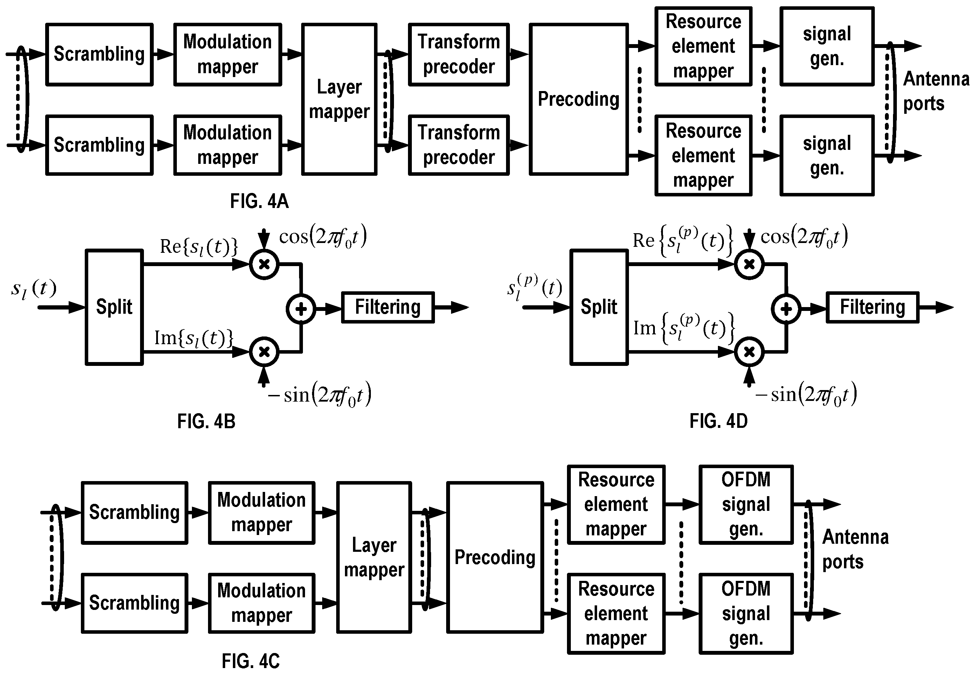

The wireless link 330A and/or the wireless link 330B may comprise at least one of a bidirectional link and/or a directional link. The communication interface 310 of the wireless device 110 may be configured to communicate with the communication interface 320A of the base station 1 120A and/or with the communication interface 320B of the base station 2 120B. The base station 1 120A and the wireless device 110 and/or the base station 2 120B and the wireless device 110 may be configured to send and receive transport blocks via the wireless link 330A and/or via the wireless link 330B, respectively. The wireless link 330A and/or the wireless link 330B may employ at least one frequency carrier. According to some of various aspects of embodiments, transceiver(s) may be employed. A transceiver may be a device that comprises both a transmitter and a receiver. Transceivers may be employed in devices such as wireless devices, base stations, relay nodes, and/or the like. Example embodiments for radio technology implemented in the communication interface 310, 320A, 320B and the wireless link 330A, 330B are illustrated in FIG. 4A, FIG. 4B, FIG. 4C, FIG. 4D, FIG. 6, FIG. 7A, FIG. 7B, FIG. 8, and associated text.

In an example, other nodes in a wireless network (*e.g*. AMF, UPF, SMF, etc.) may comprise one or more communication interfaces, one or more processors, and memory storing instructions.

A node (*e.g*. wireless device, base station, AMF, SMF, UPF, servers, switches, antennas, and/or the like) may comprise one or more processors, and memory storing instructions that when executed by the one or more processors causes the node to perform certain processes and/or functions. Example embodiments may enable operation of single-carrier and/or multicarrier communications. Other example embodiments may comprise a non-transitory tangible computer readable media comprising instructions executable by one or more processors to cause operation of single-carrier and/or multi-carrier communications. Yet other example embodiments may comprise an article of manufacture that comprises a non-transitory tangible computer readable machine-accessible medium having instructions encoded thereon for enabling programmable hardware to cause a node to enable operation of single-carrier and/or multi-carrier communications. The node may include processors, memory, interfaces, and/or the like.

An interface may comprise at least one of a hardware interface, a firmware interface, a software interface, and/or a combination thereof. The hardware interface may comprise connectors, wires, electronic devices such as drivers, amplifiers, and/or the like. The software interface may comprise code stored in a memory device to implement protocol(s), protocol layers, communication drivers, device drivers, combinations thereof, and/or the like. The firmware interface may comprise a combination of embedded hardware and code stored in and/or in communication with a memory device to implement connections, electronic device operations, protocol(s), protocol layers, communication drivers, device drivers, hardware operations, combinations thereof, and/or the like.

FIG. 4A, FIG. 4B, FIG. 4C and FIG. 4D are example diagrams for uplink and downlink signal transmission as per an aspect of an embodiment of the present disclosure. FIG. 4A shows an example uplink transmitter for at least one physical channel. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, an CP-OFDM signal for uplink transmission may be generated by FIG. 4A. These functions are illustrated as examples and it is anticipated that other mechanisms may be implemented in various embodiments.

An example structure for modulation and up-conversion to the carrier frequency of the complex-valued SC-FDMA or CP-OFDM baseband signal for an antenna port and/or the complex-valued Physical Random Access CHannel (PRACH) baseband signal is shown in FIG. 4B. Filtering may be employed prior to transmission.

An example structure for downlink transmissions is shown in FIG. 4C. The baseband signal representing a downlink physical channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments.

In an example, a gNB may transmit a first symbol and a second symbol on an antenna port, to a wireless device. The wireless device may infer the channel (*e.g.*, fading gain, multipath delay, etc.) for conveying the second symbol on the antenna port, from the channel for conveying the first symbol on the antenna port. In an example, a first antenna port and a second antenna port may be quasi co-located if one or more large-scale properties of the channel over which a first symbol on the first antenna port is conveyed may be inferred from the channel over which a second symbol on a second antenna port is conveyed. The one or more large-scale properties may comprise at least one of: delay spread; doppler spread; doppler shift; average gain; average delay; and/or spatial Receiving (Rx) parameters.

An example modulation and up-conversion to the carrier frequency of the complex-valued OFDM baseband signal for an antenna port is shown in FIG. 4D. Filtering may be employed prior to transmission.

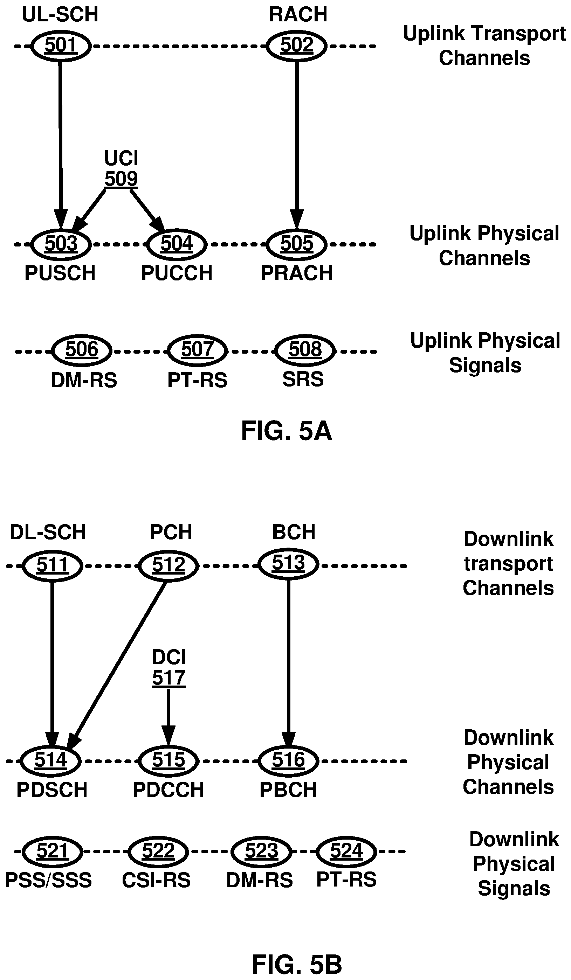

FIG. 5A is a diagram of an example uplink channel mapping and example uplink physical signals. FIG. 5B is a diagram of an example downlink channel mapping and a downlink physical signals. In an example, a physical layer may provide one or more information transfer services to a MAC and/or one or more higher layers. For example, the physical layer may provide the one or more information transfer services to the MAC via one or more transport channels. An information transfer service may indicate how and with what characteristics data are transferred over the radio interface.

In an example embodiment, a radio network may comprise one or more downlink and/or uplink transport channels. For example, a diagram in FIG. 5A shows example uplink transport channels comprising Uplink-Shared CHannel (UL-SCH) 501 and Random Access CHannel (RACH) 502. A diagram in FIG. 5B shows example downlink transport channels comprising Downlink-Shared CHannel (DL-SCH) 511, Paging CHannel (PCH) 512, and Broadcast CHannel (BCH) 513. A transport channel may be mapped to one or more corresponding physical channels. For example, UL-SCH 501 may be mapped to Physical Uplink Shared CHannel (PUSCH) 503. RACH 502 may be mapped to PRACH 505. DL-SCH 511 and PCH 512 may be mapped to Physical Downlink Shared CHannel (PDSCH) 514. BCH 513 may be mapped to Physical Broadcast CHannel (PBCH) 516.

There may be one or more physical channels without a corresponding transport channel. The one or more physical channels may be employed for Uplink Control Information (UCI) 509 and/or Downlink Control Information (DCI) 517. For example, Physical Uplink Control CHannel (PUCCH) 504 may carry UCI 509 from a UE to a base station. For example, Physical Downlink Control CHannel (PDCCH) 515 may carry DCI 517 from a base station to a UE. NR may support UCI 509 multiplexing in PUSCH 503 when UCI 509 and PUSCH 503 transmissions may coincide in a slot at least in part. The UCI 509 may comprise at least one of CSI, Acknowledgement (ACK)/Negative Acknowledgement (NACK), and/or scheduling request. The DCI 517 on PDCCH 515 may indicate at least one of following: one or more downlink assignments and/or one or more uplink scheduling grants

In uplink, a UE may transmit one or more Reference Signals (RSs) to a base station. For example, the one or more RSs may be at least one of Demodulation-RS (DM-RS) 506, Phase Tracking-RS (PT-RS) 507, and/or Sounding RS (SRS) 508. In downlink, a base station may transmit (e.g., unicast, multicast, and/or broadcast) one or more RSs to a UE. For example, the one or more RSs may be at least one of Primary Synchronization Signal (PSS)/Secondary Synchronization Signal (SSS) 521, CSI-RS 522, DM-RS 523, and/or PT-RS 524.

In an example, a UE may transmit one or more uplink DM-RSs 506 to a base station for channel estimation, for example, for coherent demodulation of one or more uplink physical channels (e.g., PUSCH 503 and/or PUCCH 504). For example, a UE may transmit a base station at least one uplink DM-RS 506 with PUSCH 503 and/or PUCCH 504, wherein the at least one uplink DM-RS 506 may be spanning a same frequency range as a corresponding physical channel. In an example, a base station may configure a UE with one or more uplink DM-RS configurations. At least one DM-RS configuration may support a front-loaded DM-RS pattern. A front-loaded DM-RS may be mapped over one or more OFDM symbols (e.g., 1 or 2 adjacent OFDM symbols). One or more additional uplink DM-RS may be configured to transmit at one or more symbols of a PUSCH and/or PUCCH. A base station may semi-statistically configure a UE with a maximum number of front-loaded DM-RS symbols for PUSCH and/or PUCCH. For example, a UE may schedule a single-symbol DM-RS and/or double symbol DM-RS based on a maximum number of front-loaded DM-RS symbols, wherein a base station may configure the UE with one or more additional uplink DM-RS for PUSCH and/or PUCCH. A new radio network may support, *e.g.,* at least for CP-OFDM, a common DM-RS structure for DL and UL, wherein a DM-RS location, DM-RS pattern, and/or scrambling sequence may be same or different.

In an example, whether uplink PT-RS 507 is present or not may depend on a RRC configuration. For example, a presence of uplink PT-RS may be UE-specifically configured. For example, a presence and/or a pattern of uplink PT-RS 507 in a scheduled resource may be UE-specifically configured by a combination of RRC signaling and/or association with one or more parameters employed for other purposes (*e.g*., Modulation and Coding Scheme (MCS)) which may be indicated by DCI. When configured, a dynamic presence of uplink PT-RS 507 may be associated with one or more DCI parameters comprising at least MCS. A radio network may support plurality of uplink PT-RS densities defined in time/frequency domain. When present, a frequency domain density may be associated with at least one configuration of a scheduled bandwidth. A UE may assume a same precoding for a DMRS port and a PT-RS port. A number of PT-RS ports may be fewer than a number of DM-RS ports in a scheduled resource. For example, uplink PT-RS 507 may be confined in the scheduled time/frequency duration for a UE.

In an example, a UE may transmit SRS 508 to a base station for channel state estimation to support uplink channel dependent scheduling and/or link adaptation. For example, SRS 508 transmitted by a UE may allow for a base station to estimate an uplink channel state at one or more different frequencies. A base station scheduler may employ an uplink channel state to assign one or more resource blocks of good quality for an uplink PUSCH transmission from a UE. A base station may semi-statistically configure a UE with one or more SRS resource sets. For an SRS resource set, a base station may configure a UE with one or more SRS resources. An SRS resource set applicability may be configured by a higher layer (*e.g.,* RRC) parameter. For example, when a higher layer parameter indicates beam management, a SRS resource in each of one or more SRS resource sets may be transmitted at a time instant. A UE may transmit one or more SRS resources in different SRS resource sets simultaneously. A new radio network may support aperiodic, periodic and/or semi-persistent SRS transmissions. A UE may transmit SRS resources based on one or more trigger types, wherein the one or more trigger types may comprise higher layer signaling (*e.g.,* RRC) and/or one or more DCI formats (*e.g.,* at least one DCI format may be employed for a UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH 503 and SRS 508 are transmitted in a same slot, a UE may be configured to transmit SRS 508 after a transmission of PUSCH 503 and corresponding uplink DM-RS 506.

In an example, a base station may semi-statistically configure a UE with one or more SRS configuration parameters indicating at least one of following: a SRS resource configuration identifier, a number of SRS ports, time domain behavior of SRS resource configuration (e.g., an indication of periodic, semi-persistent, or aperiodic SRS), slot (mini-slot, and/or subframe) level periodicity and/or offset for a periodic and/or aperiodic SRS resource, a number of OFDM symbols in a SRS resource, starting OFDM symbol of a SRS resource, a SRS bandwidth, a frequency hopping bandwidth, a cyclic shift, and/or a SRS sequence ID.

In an example, in a time domain, an SS/PBCH block may comprise one or more OFDM symbols (*e.g*., 4 OFDM symbols numbered in increasing order from 0 to 3) within the SS/PBCH block. An SS/PBCH block may comprise PSS/SSS 521 and PBCH 516. In an example, in the frequency domain, an SS/PBCH block may comprise one or more contiguous subcarriers (*e.g*., 240 contiguous subcarriers with the subcarriers numbered in increasing order from 0 to 239) within the SS/PBCH block. For example, a PSS/SSS 521 may occupy 1 OFDM symbol and 127 subcarriers. For example, PBCH 516 may span across 3 OFDM symbols and 240 subcarriers. A UE may assume that one or more SS/PBCH blocks transmitted with a same block index may be quasi co-located, *e.g.*, with respect to Doppler spread, Doppler shift, average gain, average delay, and spatial Rx parameters. A UE may not assume quasi co-location for other SS/PBCH block transmissions. A periodicity of an SS/PBCH block may be configured by a radio network (*e.g.,* by an RRC signaling) and one or more time locations where the SS/PBCH block may be sent may be determined by sub-carrier spacing. In an example, a UE may assume a band-specific subcarrier spacing for an SS/PBCH block unless a radio network has configured a UE to assume a different sub-carrier spacing.

In an example, downlink CSI-RS 522 may be employed for a UE to acquire channel state information. A radio network may support periodic, aperiodic, and/or semi-persistent transmission of downlink CSI-RS 522. For example, a base station may semi-statistically configure and/or reconfigure a UE with periodic transmission of downlink CSI-RS 522. A configured CSI-RS resources may be activated ad/or deactivated. For semi-persistent transmission, an activation and/or deactivation of CSI-RS resource may be triggered dynamically. In an example, CSI-RS configuration may comprise one or more parameters indicating at least a number of antenna ports. For example, a base station may configure a UE with 32 ports. A base station may semi-statistically configure a UE with one or more CSI-RS resource sets. One or more CSI-RS resources may be allocated from one or more CSI-RS resource sets to one or more UEs. For example, a base station may semi-statistically configure one or more parameters indicating CSI RS resource mapping, for example, time-domain location of one or more CSI-RS resources, a bandwidth of a CSI-RS resource, and/or a periodicity. In an example, a UE may be configured to employ a same OFDM symbols for downlink CSI-RS 522 and control resource set (coreset) when the downlink CSI-RS 522 and coreset are spatially quasi co-located and resource elements associated with the downlink CSI-RS 522 are the outside of PRBs configured for coreset. In an example, a UE may be configured to employ a same OFDM symbols for downlink CSI-RS 522 and SS/PBCH blocks when the downlink CSI-RS 522 and SS/PBCH blocks are spatially quasi co-located and resource elements associated with the downlink CSI-RS 522 are the outside of PRBs configured for SS/PBCH blocks.

In an example, a UE may transmit one or more downlink DM-RSs 523 to a base station for channel estimation, for example, for coherent demodulation of one or more downlink physical channels (*e.g*., PDSCH 514). For example, a radio network may support one or more variable and/or configurable DM-RS patterns for data demodulation. At least one downlink DM-RS configuration may support a front-loaded DM-RS pattern. A front-loaded DM-RS may be mapped over one or more OFDM symbols (*e.g*., 1 or 2 adjacent OFDM symbols). A base station may semi-statistically configure a UE with a maximum number of front-loaded DM-RS symbols for PDSCH 514. For example, a DM-RS configuration may support one or more DM-RS ports. For example, for single user-MIMO, a DM-RS configuration may support at least 8 orthogonal downlink DM-RS ports. For example, for multiuser-MIMO, a DM-RS configuration may support 12 orthogonal downlink DM-RS ports. A radio network may support, *e.g.,* at least for CP-OFDM, a common DM-RS structure for DL and UL, wherein a DM-RS location, DM-RS pattern, and/or scrambling sequence may be same or different.

In an example, whether downlink PT-RS 524 is present or not may depend on a RRC configuration. For example, a presence of downlink PT-RS 524 may be UE-specifically configured. For example, a presence and/or a pattern of downlink PT-RS 524 in a scheduled resource may be UE-specifically configured by a combination of RRC signaling and/or association with one or more parameters employed for other purposes (e.g., MCS) which may be indicated by DCI. When configured, a dynamic presence of downlink PT-RS 524 may be associated with one or more DCI parameters comprising at least MCS. A radio network may support plurality of PT-RS densities defined in time/frequency domain. When present, a frequency domain density may be associated with at least one configuration of a scheduled bandwidth. A UE may assume a same precoding for a DMRS port and a PT-RS port. A number of PT-RS ports may be fewer than a number of DM-RS ports in a scheduled resource. For example, downlink PT-RS 524 may be confined in the scheduled time/frequency duration for a UE.

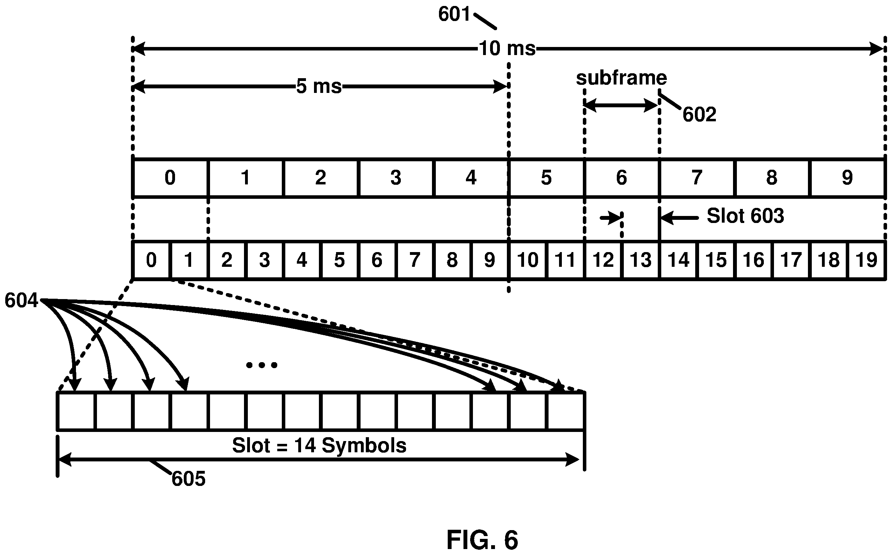

FIG. 6 is a diagram depicting an example transmission time and reception time for a carrier as per an aspect of an embodiment of the present disclosure. A multicarrier OFDM communication system may include one or more carriers, for example, ranging from 1 to 32 carriers, in case of carrier aggregation, or ranging from 1 to 64 carriers, in case of dual connectivity. Different radio frame structures may be supported (*e.g.,* for FDD and for TDD duplex mechanisms). FIG. 6 shows an example frame timing. Downlink and uplink transmissions may be organized into radio frames 601. In this example, radio frame duration is 10 ms. In this example, a 10 ms radio frame 601 may be divided into ten equally sized subframes 602 with 1 ms duration. Subframe(s) may comprise one or more slots (*e.g.* slots 603 and 605) depending on subcarrier spacing and/or CP length. For example, a subframe with 15 kHz, 30 kHz, 60 kHz, 120 kHz, 240 kHz and 480 kHz subcarrier spacing may comprise one, two, four, eight, sixteen and thirty-two slots, respectively. In FIG. 6, a subframe may be divided into two equally sized slots 603 with 0.5 ms duration. For example, 10 subframes may be available for downlink transmission and 10 subframes may be available for uplink transmissions in a 10 ms interval. Uplink and downlink transmissions may be separated in the frequency domain. Slot(s) may include a plurality of OFDM symbols 604. The number of OFDM symbols 604 in a slot 605 may depend on the cyclic prefix length. For example, a slot may be 14 OFDM symbols for the same subcarrier spacing of up to 480 kHz with normal CP. A slot may be 12 OFDM symbols for the same subcarrier spacing of 60kHz with extended CP. A slot may contain downlink, uplink, or a downlink part and an uplink part and/or alike.

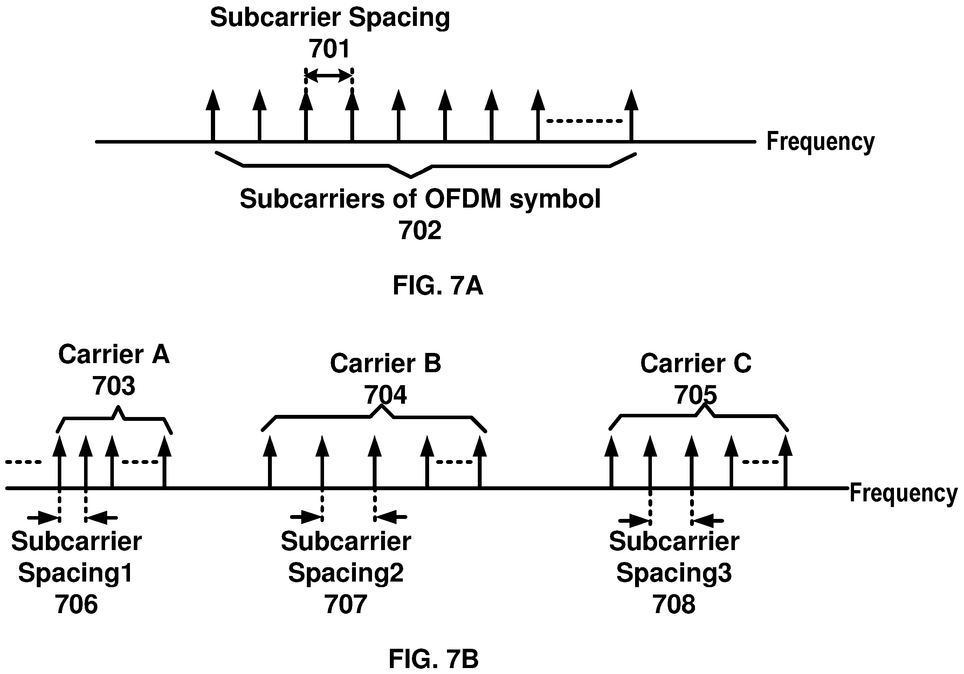

FIG. 7A is a diagram depicting example sets of OFDM subcarriers as per an aspect of an embodiment of the present disclosure. In the example, a gNB may communicate with a wireless device with a carrier with an example channel bandwidth 700. Arrow(s) in the diagram may depict a subcarrier in a multicarrier OFDM system. The OFDM system may use technology such as OFDM technology, SC-FDMA technology, and/or the like. In an example, an arrow 701 shows a subcarrier transmitting information symbols. In an example, a subcarrier spacing 702, between two contiguous subcarriers in a carrier, may be any one of 15KHz, 30KHz, 60 KHz, 120KHz, 240KHz etc. In an example, different subcarrier spacing may correspond to different transmission numerologies. In an example, a transmission numerology may comprise at least: a numerology index; a value of subcarrier spacing; a type of cyclic prefix (CP). In an example, a gNB may transmit to/receive from a UE on a number of subcarriers 703 in a carrier. In an example, a bandwidth occupied by a number of subcarriers 703 (transmission bandwidth) may be smaller than the channel bandwidth 700 of a carrier, due to guard band 704 and 705. In an example, a guard band 704 and 705 may be used to reduce interference to and from one or more neighbor carriers. A number of subcarriers (transmission bandwidth) in a carrier may depend on the channel bandwidth of the carrier and the subcarrier spacing. For example, a transmission bandwidth, for a carrier with 20MHz channel bandwidth and 15KHz subcarrier spacing, may be in number of 1024 subcarriers.

In an example, a gNB and a wireless device may communicate with multiple CCs when configured with CA. In an example, different component carriers may have different bandwidth and/or subcarrier spacing, if CA is supported. In an example, a gNB may transmit a first type of service to a UE on a first component carrier. The gNB may transmit a second type of service to the UE on a second component carrier. Different type of services may have different service requirement (*e.g.,* data rate, latency, reliability), which may be suitable for transmission via different component carrier having different subcarrier spacing and/or bandwidth. FIG. 7B shows an example embodiment. A first component carrier may comprise a first number of subcarriers 706 with a first subcarrier spacing 709. A second component carrier may comprise a second number of subcarriers 707 with a second subcarrier spacing 710. A third component carrier may comprise a third number of subcarriers 708 with a third subcarrier spacing 711. Carriers in a multicarrier OFDM communication system may be contiguous carriers, noncontiguous carriers, or a combination of both contiguous and non-contiguous carriers.

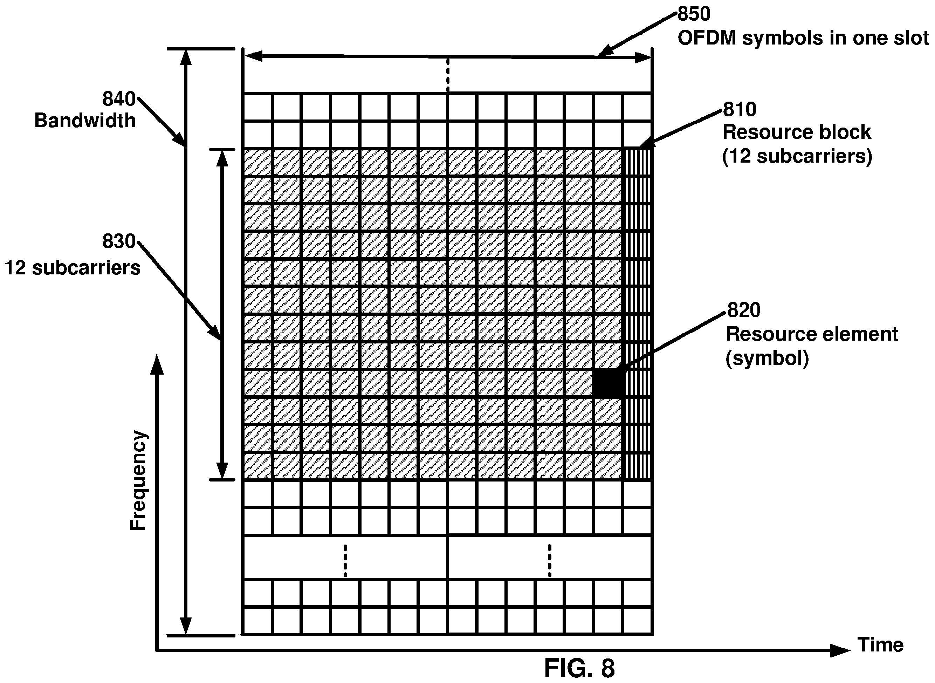

FIG. 8 is a diagram depicting OFDM radio resources as per an aspect of an embodiment of the present disclosure. In an example, a carrier may have a transmission bandwidth 801. In an example, a resource grid may be in a structure of frequency domain 802 and time domain 803. In an example, a resource grid may comprise a first number of OFDM symbols in a subframe and a second number of resource blocks, starting from a common resource block indicated by higher-layer signaling (*e.g*. RRC signaling), for a transmission numerology and a carrier. In an example, in a resource grid, a resource unit identified by a subcarrier index and a symbol index may be a resource element 805. In an example, a subframe may comprise a first number of OFDM symbols 807 depending on a numerology associated with a carrier. For example, when a subcarrier spacing of a numerology of a carrier is 15KHz, a subframe may have 14 OFDM symbols for a carrier. When a subcarrier spacing of a numerology is 30KHz, a subframe may have 28 OFDM symbols. When a subcarrier spacing of a numerology is 60Khz, a subframe may have 56 OFDM symbols, etc. In an example, a second number of resource blocks comprised in a resource grid of a carrier may depend on a bandwidth and a numerology of the carrier.

As shown in FIG. 8, a resource block 806 may comprise 12 subcarriers. In an example, multiple resource blocks may be grouped into a Resource Block Group (RBG) 804. In an example, a size of a RBG may depend on at least one of: a RRC message indicating a RBG size configuration; a size of a carrier bandwidth; or a size of a bandwidth part of a carrier. In an example, a carrier may comprise multiple bandwidth parts. A first bandwidth part of a carrier may have different frequency location and/or bandwidth from a second bandwidth part of the carrier.

In an example, a gNB may transmit a downlink control information comprising a downlink or uplink resource block assignment to a wireless device. A base station may transmit to or receive from, a wireless device, data packets (*e.g*. transport blocks) scheduled and transmitted via one or more resource blocks and one or more slots according to parameters in a downlink control information and/or RRC message(s). In an example, a starting symbol relative to a first slot of the one or more slots may be indicated to the wireless device. In an example, a gNB may transmit to or receive from, a wireless device, data packets scheduled on one or more RBGs and one or more slots.

In an example, a gNB may transmit a downlink control information comprising a downlink assignment to a wireless device via one or more PDCCHs. The downlink assignment may comprise parameters indicating at least modulation and coding format; resource allocation; and/or HARQ information related to DL-SCH. In an example, a resource allocation may comprise parameters of resource block allocation; and/or slot allocation. In an example, a gNB may dynamically allocate resources to a wireless device via a Cell-Radio Network Temporary Identifier (C-RNTI) on one or more PDCCHs. The wireless device may monitor the one or more PDCCHs in order to find possible allocation when its downlink reception is enabled. The wireless device may receive one or more downlink data package on one or more PDSCH scheduled by the one or more PDCCHs, when successfully detecting the one or more PDCCHs.

In an example, a gNB may allocate Configured Scheduling (CS) resources for down link transmission to a wireless device. The gNB may transmit one or more RRC messages indicating a periodicity of the CS grant. The gNB may transmit a DCI via a PDCCH addressed to a Configured Scheduling-RNTI (CS-RNTI) activating the CS resources. The DCI may comprise parameters indicating that the downlink grant is a CS grant. The CS grant may be implicitly reused according to the periodicity defined by the one or more RRC messages, until deactivated.

In an example, a gNB may transmit a downlink control information comprising an uplink grant to a wireless device via one or more PDCCHs. The uplink grant may comprise parameters indicating at least modulation and coding format; resource allocation; and/or HARQ information related to UL-SCH. In an example, a resource allocation may comprise parameters of resource block allocation; and/or slot allocation. In an example, a gNB may dynamically allocate resources to a wireless device via a C-RNTI on one or more PDCCHs. The wireless device may monitor the one or more PDCCHs in order to find possible resource allocation. The wireless device may transmit one or more uplink data package via one or more PUSCH scheduled by the one or more PDCCHs, when successfully detecting the one or more PDCCHs.

In an example, a gNB may allocate CS resources for uplink data transmission to a wireless device. The gNB may transmit one or more RRC messages indicating a periodicity of the CS grant. The gNB may transmit a DCI via a PDCCH addressed to a CS-RNTI activating the CS resources. The DCI may comprise parameters indicating that the uplink grant is a CS grant. The CS grant may be implicitly reused according to the periodicity defined by the one or more RRC message, until deactivated.

In an example, a base station may transmit DCI/control signaling via PDCCH. The DCI may take a format in a plurality of formats. A DCI may comprise downlink and/or uplink scheduling information (e.g., resource allocation information, HARQ related parameters, MCS), request for CSI *(e.g.,* aperiodic CQI reports), request for SRS, uplink power control commands for one or more cells, one or more timing information (*e.g.,* TB transmission/reception timing, HARQ feedback timing, etc.), etc. In an example, a DCI may indicate an uplink grant comprising transmission parameters for one or more transport blocks. In an example, a DCI may indicate downlink assignment indicating parameters for receiving one or more transport blocks. In an example, a DCI may be used by base station to initiate a contention-free random access at the wireless device. In an example, the base station may transmit a DCI comprising slot format indicator (SFI) notifying a slot format. In an example, the base station may transmit a DCI comprising pre-emption indication notifying the PRB(s) and/or OFDM symbol(s) where a UE may assume no transmission is intended for the UE. In an example, the base station may transmit a DCI for group power control of PUCCH or PUSCH or SRS. In an example, a DCI may correspond to an RNTI. In an example, the wireless device may obtain an RNTI in response to completing the initial access (*e.g.,* C-RNTI). In an example, the base station may configure an RNTI for the wireless (*e.g.,* CS-RNTI, TPC-CS-RNTI, TPC-PUCCH-RNTI, TPC-PUSCH-RNTI, TPC-SRS-RNTI). In an example, the wireless device may compute an RNTI (*e.g.,* the wireless device may compute RA-RNTI based on resources used for transmission of a preamble). In an example, an RNTI may have a pre-configured value (*e.g.,* P-RNTI or SI-RNTI). In an example, a wireless device may monitor a group common search space which may be used by base station for transmitting DCIs that are intended for a group of UEs. In an example, a group common DCI may correspond to an RNTI which is commonly configured for a group of UEs. In an example, a wireless device may monitor a UE-specific search space. In an example, a UE specific DCI may correspond to an RNTI configured for the wireless device.

A NR system may support a single beam operation and/or a multi-beam operation. In a multi-beam operation, a base station may perform a downlink beam sweeping to provide coverage for common control channels and/or downlink SS blocks, which may comprise at least a PSS, a SSS, and/or PBCH. A wireless device may measure quality of a beam pair link using one or more RSs. One or more SS blocks, or one or more CSI-RS resources, associated with a CSI-RS resource index (CRI), or one or more DM-RSs of PBCH, may be used as RS for measuring quality of a beam pair link. Quality of a beam pair link may be defined as a reference signal received power (RSRP) value, or a reference signal received quality (RSRQ) value, and/or a CSI value measured on RS resources. The base station may indicate whether an RS resource, used for measuring a beam pair link quality, is quasi-co-located (QCLed) with DM-RSs of a control channel. A RS resource and DM-RSs of a control channel may be called QCLed when a channel characteristics from a transmission on an RS to a wireless device, and that from a transmission on a control channel to a wireless device, are similar or same under a configured criterion. In a multi-beam operation, a wireless device may perform an uplink beam sweeping to access a cell.

In an example, a wireless device may be configured to monitor PDCCH on one or more beam pair links simultaneously depending on a capability of a wireless device. This may increase robustness against beam pair link blocking. A base station may transmit one or more messages to configure a wireless device to monitor PDCCH on one or more beam pair links in different PDCCH OFDM symbols. For example, a base station may transmit higher layer signaling (*e.g*. RRC signaling) or MAC CE comprising parameters related to the Rx beam setting of a wireless device for monitoring PDCCH on one or more beam pair links. A base station may transmit indication of spatial QCL assumption between an DL RS antenna port(s) (for example, cell-specific CSI-RS, or wireless device-specific CSI-RS, or SS block, or PBCH with or without DM-RSs of PBCH), and DL RS antenna port(s) for demodulation of DL control channel. Signaling for beam indication for a PDCCH may be MAC CE signaling, or RRC signaling, or DCI signaling, or specification-transparent and/or implicit method, and combination of these signaling methods.

For reception of unicast DL data channel, a base station may indicate spatial QCL parameters between DL RS antenna port(s) and DM-RS antenna port(s) of DL data channel. The base station may transmit DCI (*e.g.* downlink grants) comprising information indicating the RS antenna port(s). The information may indicate RS antenna port(s) which may be QCLed with the DM-RS antenna port(s). Different set of DM-RS antenna port(s) for a DL data channel may be indicated as QCL with different set of the RS antenna port(s).

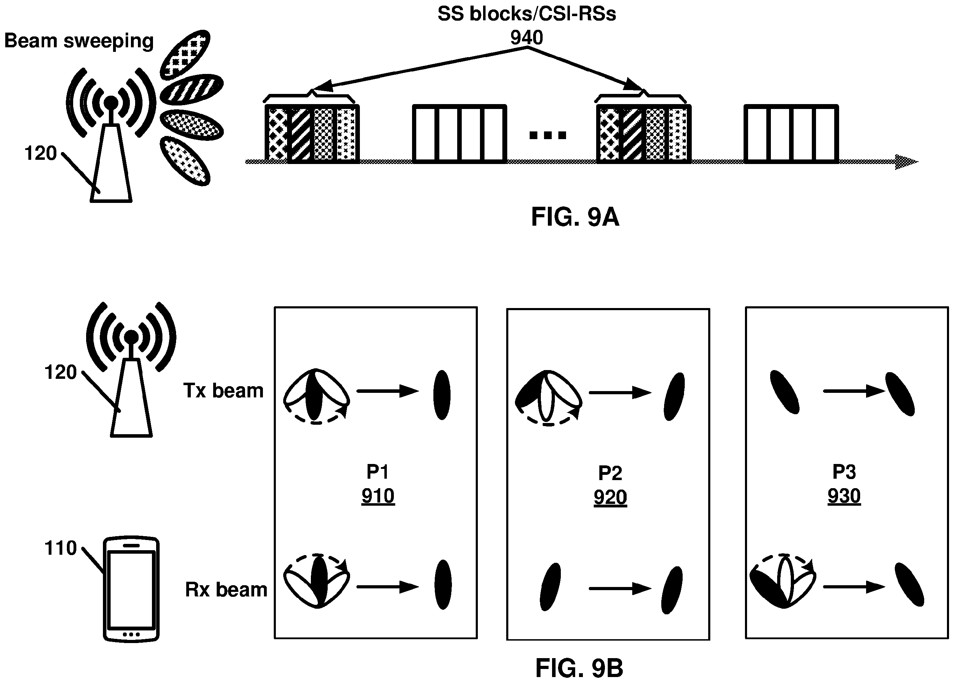

FIG. 9A is an example of beam sweeping in a DL channel. In an RRC_INACTIVE state or RRC_IDLE state, a wireless device may assume that SS blocks form an SS burst 940, and an SS burst set 950. The SS burst set 950 may have a given periodicity. For example, in a multi-beam operation, a base station 120 may transmit SS blocks in multiple beams, together forming a SS burst 940. One or more SS blocks may be transmitted on one beam. If multiple SS bursts 940 are transmitted with multiple beams, SS bursts together may form SS burst set 950.

A wireless device may further use CSI-RS in the multi-beam operation for estimating a beam quality of a links between a wireless device and a base station. A beam may be associated with a CSI-RS. For example, a wireless device may, based on a RSRP measurement on CSI-RS, report a beam index, as indicated in a CRI for downlink beam selection, and associated with a RSRP value of a beam. A CSI-RS may be transmitted on a CSI-RS resource including at least one of one or more antenna ports, one or more time or frequency radio resources. A CSI-RS resource may be configured in a cell-specific way by common RRC signaling, or in a wireless device-specific way by dedicated RRC signaling, and/or L1/L2 signaling. Multiple wireless devices covered by a cell may measure a cell-specific CSI-RS resource. A dedicated subset of wireless devices covered by a cell may measure a wireless device-specific CSI-RS resource.

A CSI-RS resource may be transmitted periodically, or using aperiodic transmission, or using a multi-shot or semi-persistent transmission. For example, in a periodic transmission in FIG. 9A, a base station 120 may transmit configured CSI-RS resources 940 periodically using a configured periodicity in a time domain. In an aperiodic transmission, a configured CSI-RS resource may be transmitted in a dedicated time slot. In a multi-shot or semi-persistent transmission, a configured CSI-RS resource may be transmitted within a configured period. Beams used for CSI-RS transmission may have different beam width than beams used for SS-blocks transmission.

FIG. 9B is an example of a beam management procedure in an example new radio network. A base station 120 and/or a wireless device 110 may perform a downlink L1/L2 beam management procedure. One or more of the following downlink L1/L2 beam management procedures may be performed within one or more wireless devices 110 and one or more base stations 120. In an example, a P-1 procedure 910 may be used to enable the wireless device 110 to measure one or more Transmission (Tx) beams associated with the base station 120 to support a selection of a first set of Tx beams associated with the base station 120 and a first set of Rx beam(s) associated with a wireless device 110. For beamforming at a base station 120, a base station 120 may sweep a set of different TX beams. For beamforming at a wireless device 110, a wireless device 110 may sweep a set of different Rx beams. In an example, a P-2 procedure 920 may be used to enable a wireless device 110 to measure one or more Tx beams associated with a base station 120 to possibly change a first set of Tx beams associated with a base station 120. A P-2 procedure 920 may be performed on a possibly smaller set of beams for beam refinement than in the P-1 procedure 910. A P-2 procedure 920 may be a special case of a P-1 procedure 910. In an example, a P-3 procedure 930 may be used to enable a wireless device 110 to measure at least one Tx beam associated with a base station 120 to change a first set of Rx beams associated with a wireless device 110.

A wireless device 110 may transmit one or more beam management reports to a base station 120. In one or more beam management reports, a wireless device 110 may indicate some beam pair quality parameters, comprising at least, one or more beam identifications; RSRP; Precoding Matrix Indicator (PMI)/Channel Quality Indicator (CQI)/Rank Indicator (RI) of a subset of configured beams. Based on one or more beam management reports, a base station 120 may transmit to a wireless device 110 a signal indicating that one or more beam pair links are one or more serving beams. A base station 120 may transmit PDCCH and PDSCH for a wireless device 110 using one or more serving beams.

In an example embodiment, new radio network may support a Bandwidth Adaptation (BA). In an example, receive and/or transmit bandwidths configured by an UE employing a BA may not be large. For example, a receive and/or transmit bandwidths may not be as large as a bandwidth of a cell. Receive and/or transmit bandwidths may be adjustable. For example, a UE may change receive and/or transmit bandwidths, *e.g.,* to shrink during period of low activity to save power. For example, a UE may change a location of receive and/or transmit bandwidths in a frequency domain, *e.g.* to increase scheduling flexibility. For example, a UE may change a subcarrier spacing, *e.g.* to allow different services.

In an example embodiment, a subset of a total cell bandwidth of a cell may be referred to as a Bandwidth Part (BWP). A base station may configure a UE with one or more BWPs to achieve a BA. For example, a base station may indicate, to a UE, which of the one or more (configured) BWPs is an active BWP.

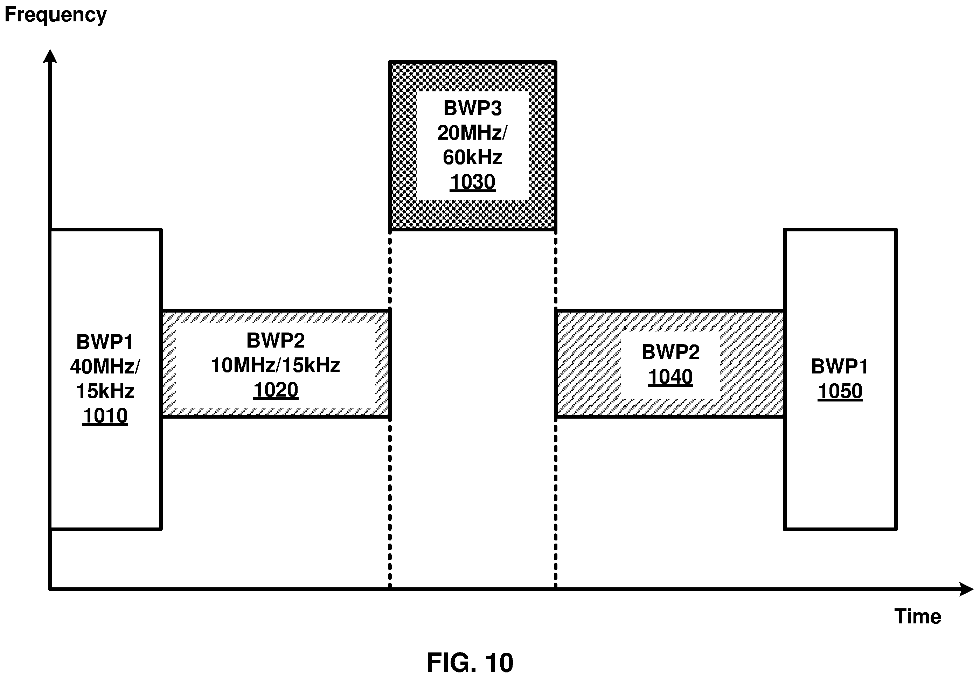

FIG. 10 is an example diagram of 3 BWPs configured: BWP1 (1010 and 1050) with a width of 40 MHz and subcarrier spacing of 15 kHz; BWP2 (1020 and 1040) with a width of 10 MHz and subcarrier spacing of 15 kHz; BWP3 1030 with a width of 20 MHz and subcarrier spacing of 60 kHz.

In an example, a UE, configured for operation in one or more BWPs of a cell, may be configured by one or more higher layers (*e.g.* RRC layer) for a cell a set of one or more BWPs (*e.g.,* at most four BWPs) for receptions by the UE (DL BWP set) in a DL bandwidth by at least one parameter DL-BWP and a set of one or more BWPs (*e.g.,* at most four BWPs) for transmissions by a UE (UL BWP set) in an UL bandwidth by at least one parameter UL-BWP for a cell.

To enable BA on the PCell, a base station may configure a UE with one or more UL and DL BWP pairs. To enable BA on SCells (*e.g.,* in case of CA), a base station may configure a UE at least with one or more DL BWPs (*e.g.*, there may be none in an UL).

In an example, an initial active DL BWP may be defined by at least one of a location and number of contiguous PRBs, a subcarrier spacing, or a cyclic prefix, for a control resource set for at least one common search space. For operation on the PCell, one or more higher layer parameters may indicate at least one initial UL BWP for a random access procedure. If a UE is configured with a secondary carrier on a primary cell, the UE may be configured with an initial BWP for random access procedure on a secondary carrier.

In an example, for unpaired spectrum operation, a UE may expect that a center frequency for a DL BWP may be same as a center frequency for a UL BWP.

For example, for a DL BWP or an UL BWP in a set of one or more DL BWPs or one or more UL BWPs, respectively, a base station may semi-statistically configure a UE for a cell with one or more parameters indicating at least one of following: a subcarrier spacing; a cyclic prefix; a number of contiguous PRBs; an index in the set of one or more DL BWPs and/or one or more UL BWPs; a link between a DL BWP and an UL BWP from a set of configured DL BWPs and UL BWPs; a DCI detection to a PDSCH reception timing; a PDSCH reception to a HARQ-ACK transmission timing value; a DCI detection to a PUSCH transmission timing value; an offset of a first PRB of a DL bandwidth or an UL bandwidth, respectively, relative to a first PRB of a bandwidth.

In an example, for a DL BWP in a set of one or more DL BWPs on a PCell, a base station may configure a UE with one or more control resource sets for at least one type of common search space and/or one UE-specific search space. For example, a base station may not configure a UE without a common search space on a PCell, or on a PSCell, in an active DL BWP.

For an UL BWP in a set of one or more UL BWPs, a base station may configure a UE with one or more resource sets for one or more PUCCH transmissions.

In an example, if a DCI comprises a BWP indicator field, a BWP indicator field value may indicate an active DL BWP, from a configured DL BWP set, for one or more DL receptions. If a DCI comprises a BWP indicator field, a BWP indicator field value may indicate an active UL BWP, from a configured UL BWP set, for one or more UL transmissions.

In an example, for a PCell, a base station may semi-statistically configure a UE with a default DL BWP among configured DL BWPs. If a UE is not provided a default DL BWP, a default BWP may be an initial active DL BWP.

In an example, a base station may configure a UE with a timer value for a PCell. For example, a UE may start a timer, referred to as BWP inactivity timer, when a UE detects a DCI indicating an active DL BWP, other than a default DL BWP, for a paired spectrum operation or when a UE detects a DCI indicating an active DL BWP or UL BWP, other than a default DL BWP or UL BWP, for an unpaired spectrum operation. The UE may increment the timer by an interval of a first value (*e.g.,* the first value may be 1 millisecond or 0.5 milliseconds) if the UE does not detect a DCI during the interval for a paired spectrum operation or for an unpaired spectrum operation. In an example, the timer may expire when the timer is equal to the timer value. A UE may switch to the default DL BWP from an active DL BWP when the timer expires.

In an example, a base station may semi-statistically configure a UE with one or more BWPs. A UE may switch an active BWP from a first BWP to a second BWP in response to receiving a DCI indicating the second BWP as an active BWP and/or in response to an expiry of BWP inactivity timer (for example, the second BWP may be a default BWP). For example, FIG. 10 is an example diagram of 3 BWPs configured, BWP1 (1010 and 1050), BWP2 (1020 and 1040), and BWP3 (1030). BWP2 (1020 and 1040) may be a default BWP. BWP1 (1010) may be an initial active BWP. In an example, a UE may switch an active BWP from BWP1 1010 to BWP2 1020 in response to an expiry of BWP inactivity timer. For example, a UE may switch an active BWP from BWP2 1020 to BWP3 1030 in response to receiving a DCI indicating BWP3 1030 as an active BWP. Switching an active BWP from BWP3 1030 to BWP2 1040 and/or from BWP2 1040 to BWP1 1050 may be in response to receiving a DCI indicating an active BWP and/or in response to an expiry of BWP inactivity timer.

In an example, if a UE is configured for a secondary cell with a default DL BWP among configured DL BWPs and a timer value, UE procedures on a secondary cell may be same as on a primary cell using the timer value for the secondary cell and the default DL BWP for the secondary cell.

In an example, if a base station configures a UE with a first active DL BWP and a first active UL BWP on a secondary cell or carrier, a UE may employ an indicated DL BWP and an indicated UL BWP on a secondary cell as a respective first active DL BWP and first active UL BWP on a secondary cell or carrier.

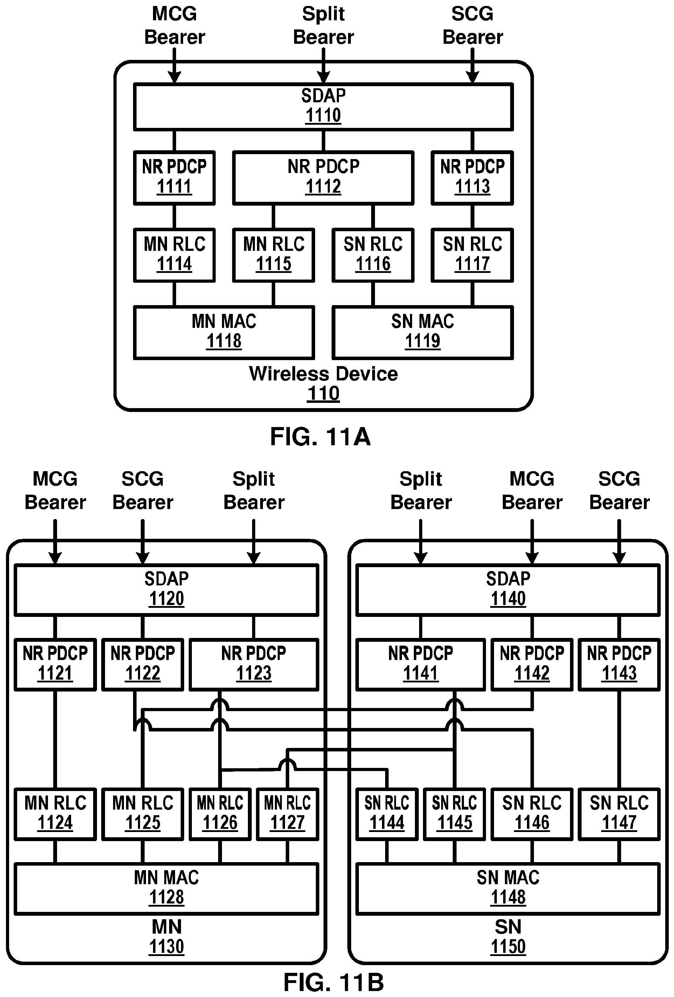

FIG. 11A and FIG. 11B show packet flows employing a multi connectivity (*e.g*. dual connectivity, multi connectivity, tight interworking, and/or the like). FIG. 11A is an example diagram of a protocol structure of a wireless device 110 (*e.g.* UE) with CA and/or multi connectivity as per an aspect of an embodiment. FIG. 11B is an example diagram of a protocol structure of multiple base stations with CA and/or multi connectivity as per an aspect of an embodiment. The multiple base stations may comprise a master node, MN 1130 (*e.g.* a master node, a master base station, a master gNB, a master eNB, and/or the like) and a secondary node, SN 1150 (*e.g.* a secondary node, a secondary base station, a secondary gNB, a secondary eNB, and/or the like). A master node 1130 and a secondary node 1150 may co-work to communicate with a wireless device 110.

When multi connectivity is configured for a wireless device 110, the wireless device 110, which may support multiple reception/transmission functions in an RRC connected state, may be configured to utilize radio resources provided by multiple schedulers of a multiple base stations. Multiple base stations may be inter-connected via a non-ideal or ideal backhaul (*e.g*. Xn interface, X2 interface, and/or the like). A base station involved in multi connectivity for a certain wireless device may perform at least one of two different roles: a base station may either act as a master base station or as a secondary base station. In multi connectivity, a wireless device may be connected to one master base station and one or more secondary base stations. In an example, a master base station (*e.g*. the MN 1130) may provide a master cell group (MCG) comprising a primary cell and/or one or more secondary cells for a wireless device (*e.g.* the wireless device 110). A secondary base station (*e.g*. the SN 1150) may provide a secondary cell group (SCG) comprising a primary secondary cell (PSCell) and/or one or more secondary cells for a wireless device (*e.g.* the wireless device 110).

In multi connectivity, a radio protocol architecture that a bearer employs may depend on how a bearer is setup. In an example, three different type of bearer setup options may be supported: an MCG bearer, an SCG bearer, and/or a split bearer. A wireless device may receive/transmit packets of an MCG bearer via one or more cells of the MCG, and/or may receive/transmits packets of an SCG bearer via one or more cells of an SCG. Multi-connectivity may also be described as having at least one bearer configured to use radio resources provided by the secondary base station. Multi-connectivity may or may not be configured/implemented in some of the example embodiments.

In an example, a wireless device (*e.g*. Wireless Device 110) may transmit and/or receive: packets of an MCG bearer via an SDAP layer (*e.g.* SDAP 1110), a PDCP layer (*e.g.* NR PDCP 1111), an RLC layer (*e.g.* MN RLC 1114), and a MAC layer (*e.g.* MN MAC 1118); packets of a split bearer via an SDAP layer (*e.g.* SDAP 1110), a PDCP layer (*e.g.* NR PDCP 1112), one of a master or secondary RLC layer (*e.g.* MN RLC 1115, SN RLC 1116), and one of a master or secondary MAC layer (*e.g.* MN MAC 1118, SN MAC 1119); and/or packets of an SCG bearer via an SDAP layer (*e.g.* SDAP 1110), a PDCP layer (*e.g.* NR PDCP 1113), an RLC layer (*e.g.* SN RLC 1117), and a MAC layer (*e.g.* MN MAC 1119).

In an example, a master base station (*e.g.* MN 1130) and/or a secondary base station (*e.g.* SN 1150) may transmit/receive: packets of an MCG bearer via a master or secondary node SDAP layer (*e.g.* SDAP 1120, SDAP 1140), a master or secondary node PDCP layer (*e.g.* NR PDCP 1121, NR PDCP 1142), a master node RLC layer (*e.g.* MN RLC 1124, MN RLC 1125), and a master node MAC layer (*e.g.* MN MAC 1128); packets of an SCG bearer via a master or secondary node SDAP layer (*e.g.* SDAP 1120, SDAP 1140), a master or secondary node PDCP layer (*e.g.* NR PDCP 1122, NR PDCP 1143), a secondary node RLC layer (*e.g.* SN RLC 1146, SN RLC 1147), and a secondary node MAC layer (*e.g.* SN MAC 1148); packets of a split bearer via a master or secondary node SDAP layer (*e.g*. SDAP 1120, SDAP 1140), a master or secondary node PDCP layer (*e.g.* NR PDCP 1123, NR PDCP 1141), a master or secondary node RLC layer (*e.g.* MN RLC 1126, SN RLC 1144, SN RLC 1145, MN RLC 1127), and a master or secondary node MAC layer (*e.g.* MN MAC 1128, SN MAC 1148).

In multi connectivity, a wireless device may configure multiple MAC entities: one MAC entity (*e.g.* MN MAC 1118) for a master base station, and other MAC entities (*e.g.* SN MAC 1119) for a secondary base station. In multi-connectivity, a configured set of serving cells for a wireless device may comprise two subsets: an MCG comprising serving cells of a master base station, and SCGs comprising serving cells of a secondary base station. For an SCG, one or more of following configurations may be applied: at least one cell of an SCG has a configured UL CC and at least one cell of a SCG, named as primary secondary cell (PSCell, PCell of SCG, or sometimes called PCell), is configured with PUCCH resources; when an SCG is configured, there may be at least one SCG bearer or one Split bearer; upon detection of a physical layer problem or a random access problem on a PSCell, or a number of NR RLC retransmissions has been reached associated with the SCG, or upon detection of an access problem on a PSCell during a SCG addition or a SCG change: an RRC connection re-establishment procedure may not be triggered, UL transmissions towards cells of an SCG may be stopped, a master base station may be informed by a wireless device of a SCG failure type, for split bearer, a DL data transfer over a master base station may be maintained; an NR RLC acknowledged mode (AM) bearer may be configured for a split bearer; PCell and/or PSCell may not be de-activated; PSCell may be changed with a SCG change procedure (*e.g*. with security key change and a RACH procedure); and/or a bearer type change between a split bearer and a SCG bearer or simultaneous configuration of a SCG and a split bearer may or may not supported.

With respect to interaction between a master base station and a secondary base stations for multi-connectivity, one or more of the following may be applied: a master base station and/or a secondary base station may maintain RRM measurement configurations of a wireless device; a master base station may (*e.g*. based on received measurement reports, traffic conditions, and/or bearer types) may decide to request a secondary base station to provide additional resources (*e.g*. serving cells) for a wireless device; upon receiving a request from a master base station, a secondary base station may create/modify a container that may result in configuration of additional serving cells for a wireless device (or decide that the secondary base station has no resource available to do so); for a UE capability coordination, a master base station may provide (a part of) an AS configuration and UE capabilities to a secondary base station; a master base station and a secondary base station may exchange information about a UE configuration by employing of RRC containers (inter-node messages) carried via Xn messages; a secondary base station may initiate a reconfiguration of the secondary base station existing serving cells *(e.g.* PUCCH towards the secondary base station); a secondary base station may decide which cell is a PSCell within a SCG; a master base station may or may not change content of RRC configurations provided by a secondary base station; in case of a SCG addition and/or a SCG SCell addition, a master base station may provide recent (or the latest) measurement results for SCG cell(s); a master base station and secondary base stations may receive information of SFN and/or subframe offset of each other from OAM and/or via an Xn interface, (*e.g.* for a purpose of DRX alignment and/or identification of a measurement gap). In an example, when adding a new SCG SCell, dedicated RRC signaling may be used for sending required system information of a cell as for CA, except for a SFN acquired from a MIB of a PSCell of a SCG.

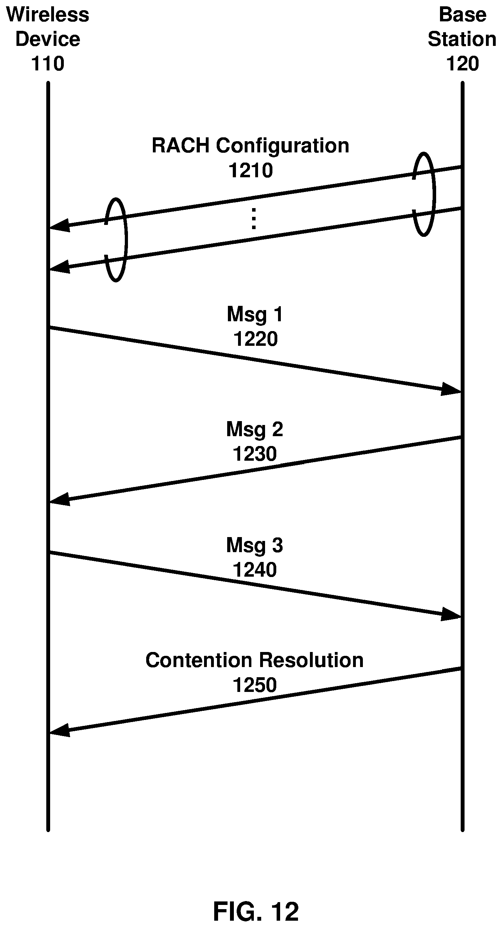

FIG. 12 is an example diagram of a random access procedure. One or more events may trigger a random access procedure. For example, one or more events may be at least one of following: initial access from RRC_IDLE, RRC connection re-establishment procedure, handover, DL or UL data arrival during RRC_CONNECTED when UL synchronization status is non-synchronized, transition from RRC_Inactive, and/or request for other system information. For example, a PDCCH order, a MAC entity, and/or a beam failure indication may initiate a random access procedure.

In an example embodiment, a random access procedure may be at least one of a contention based random access procedure and a contention free random access procedure. For example, a contention based random access procedure may comprise, one or more Msg 1 1220 transmissions, one or more Msg2 1230 transmissions, one or more Msg3 1240 transmissions, and contention resolution 1250. For example, a contention free random access procedure may comprise one or more Msg 1 1220 transmissions and one or more Msg2 1230 transmissions.

In an example, a base station may transmit (*e.g.*, unicast, multicast, or broadcast), to a UE, a RACH configuration 1210 via one or more beams. The RACH configuration 1210 may comprise one or more parameters indicating at least one of following: available set of PRACH resources for a transmission of a random access preamble, initial preamble power (*e.g.,* random access preamble initial received target power), an RSRP threshold for a selection of a SS block and corresponding PRACH resource, a power-ramping factor (*e.g.,* random access preamble power ramping step), random access preamble index, a maximum number of preamble transmission, preamble group A and group B, a threshold (*e.g.,* message size) to determine the groups of random access preambles, a set of one or more random access preambles for system information request and corresponding PRACH resource(s), if any, a set of one or more random access preambles for beam failure recovery request and corresponding PRACH resource(s), if any, a time window to monitor RA response(s), a time window to monitor response(s) on beam failure recovery request, and/or a contention resolution timer.

In an example, the Msg1 1220 may be one or more transmissions of a random access preamble. For a contention based random access procedure, a UE may select a SS block with a RSRP above the RSRP threshold. If random access preambles group B exists, a UE may select one or more random access preambles from a group A or a group B depending on a potential Msg3 1240 size. If a random access preambles group B does not exist, a UE may select the one or more random access preambles from a group A. A UE may select a random access preamble index randomly (*e.g.* with equal probability or a normal distribution) from one or more random access preambles associated with a selected group. If a base station semi-statistically configures a UE with an association between random access preambles and SS blocks, the UE may select a random access preamble index randomly with equal probability from one or more random access preambles associated with a selected SS block and a selected group.

For example, a UE may initiate a contention free random access procedure based on a beam failure indication from a lower layer. For example, a base station may semi-statistically configure a UE with one or more contention free PRACH resources for beam failure recovery request associated with at least one of SS blocks and/or CSI-RSs. If at least one of SS blocks with a RSRP above a first RSRP threshold amongst associated SS blocks or at least one of CSI-RSs with a RSRP above a second RSRP threshold amongst associated CSI-RSs is available, a UE may select a random access preamble index corresponding to a selected SS block or CSI-RS from a set of one or more random access preambles for beam failure recovery request.

For example, a UE may receive, from a base station, a random access preamble index via PDCCH or RRC for a contention free random access procedure. If a base station does not configure a UE with at least one contention free PRACH resource associated with SS blocks or CSI-RS, the UE may select a random access preamble index. If a base station configures a UE with one or more contention free PRACH resources associated with SS blocks and at least one SS block with a RSRP above a first RSRP threshold amongst associated SS blocks is available, the UE may select the at least one SS block and select a random access preamble corresponding to the at least one SS block. If a base station configures a UE with one or more contention free PRACH resources associated with CSI-RSs and at least one CSI-RS with a RSRP above a second RSPR threshold amongst the associated CSI-RSs is available, the UE may select the at least one CSI-RS and select a random access preamble corresponding to the at least one CSI-RS.

A UE may perform one or more Msg1 1220 transmissions by transmitting the selected random access preamble. For example, if a UE selects an SS block and is configured with an association between one or more PRACH occasions and one or more SS blocks, the UE may determine an PRACH occasion from one or more PRACH occasions corresponding to a selected SS block. For example, if a UE selects a CSI-RS and is configured with an association between one or more PRACH occasions and one or more CSI-RSs, the UE may determine a PRACH occasion from one or more PRACH occasions corresponding to a selected CSI-RS. A UE may transmit, to a base station, a selected random access preamble via a selected PRACH occasions. A UE may determine a transmit power for a transmission of a selected random access preamble at least based on an initial preamble power and a power-ramping factor. A UE may determine a RA-RNTI associated with a selected PRACH occasions in which a selected random access preamble is transmitted. For example, a UE may not determine a RA-RNTI for a beam failure recovery request. A UE may determine an RA-RNTI at least based on an index of a first OFDM symbol and an index of a first slot of a selected PRACH occasions, and/or an uplink carrier index for a transmission of Msg1 1220.

In an example, a UE may receive, from a base station, a random access response, Msg 2 1230. A UE may start a time window (*e.g., ra-ResponseWindow*) to monitor a random access response. For beam failure recovery request, a base station may configure a UE with a different time window (*e.g., bfr-ResponseWindow*) to monitor response on beam failure recovery request. For example, a UE may start a time window (*e.g., ra-ResponseWindow* or *bfr-ResponseWindow*) at a start of a first PDCCH occasion after a fixed duration of one or more symbols from an end of a preamble transmission. If a UE transmits multiple preambles, the UE may start a time window at a start of a first PDCCH occasion after a fixed duration of one or more symbols from an end of a first preamble transmission. A UE may monitor a PDCCH of a cell for at least one random access response identified by a RA-RNTI or for at least one response to beam failure recovery request identified by a C-RNTI while a timer for a time window is running.

In an example, a UE may consider a reception of random access response successful if at least one random access response comprises a random access preamble identifier corresponding to a random access preamble transmitted by the UE. A UE may consider the contention free random access procedure successfully completed if a reception of random access response is successful. If a contention free random access procedure is triggered for a beam failure recovery request, a UE may consider a contention free random access procedure successfully complete if a PDCCH transmission is addressed to a C-RNTI. In an example, if at least one random access response comprises a random access preamble identifier, a UE may consider the random access procedure successfully completed and may indicate a reception of an acknowledgement for a system information request to upper layers. If a UE has signaled multiple preamble transmissions, the UE may stop transmitting remaining preambles (if any) in response to a successful reception of a corresponding random access response.

In an example, a UE may perform one or more Msg 3 1240 transmissions in response to a successful reception of random access response (*e.g.,* for a contention based random access procedure). A UE may adjust an uplink transmission timing based on a timing advanced command indicated by a random access response and may transmit one or more transport blocks based on an uplink grant indicated by a random access response. Subcarrier spacing for PUSCH transmission for Msg3 1240 may be provided by at least one higher layer (*e.g.* RRC) parameter. A UE may transmit a random access preamble via PRACH and Msg3 1240 via PUSCH on a same cell. A base station may indicate an UL BWP for a PUSCH transmission of Msg3 1240 via system information block. A UE may employ HARQ for a retransmission of Msg 3 1240.

In an example, multiple UEs may perform Msg 1 1220 by transmitting a same preamble to a base station and receive, from the base station, a same random access response comprising an identity (*e.g.,* TC-RNTI). Contention resolution 1250 may ensure that a UE does not incorrectly use an identity of another UE. For example, contention resolution 1250 may be based on C-RNTI on PDCCH or a UE contention resolution identity on DL-SCH. For example, if a base station assigns a C-RNTI to a UE, the UE may perform contention resolution 1250 based on a reception of a PDCCH transmission that is addressed to the C-RNTI. In response to detection of a C-RNTI on a PDCCH, a UE may consider contention resolution 1250 successful and may consider a random access procedure successfully completed. If a UE has no valid C-RNTI, a contention resolution may be addressed by employing a TC-RNTI. For example, if a MAC PDU is successfully decoded and a MAC PDU comprises a UE contention resolution identity MAC CE that matches the CCCH SDU transmitted in Msg3 1250, a UE may consider the contention resolution 1250 successful and may consider the random access procedure successfully completed.

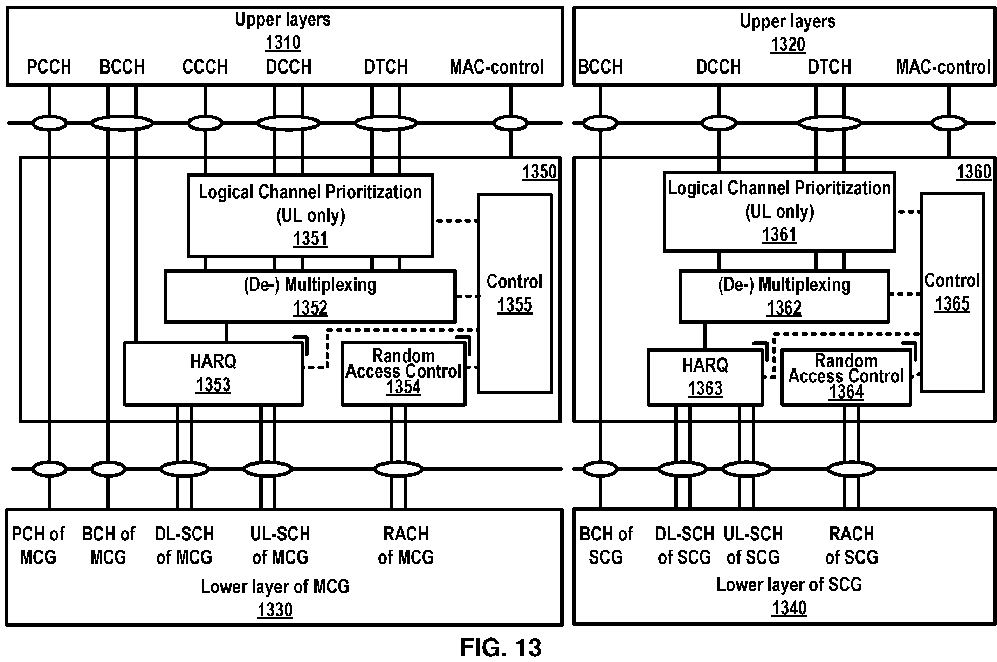

FIG. 13 is an example structure for MAC entities as per an aspect of an embodiment. In an example, a wireless device may be configured to operate in a multi-connectivity mode. A wireless device in RRC_CONNECTED with multiple RX/TX may be configured to utilize radio resources provided by multiple schedulers located in a plurality of base stations. The plurality of base stations may be connected via a non-ideal or ideal backhaul over the Xn interface. In an example, a base station in a plurality of base stations may act as a master base station or as a secondary base station. A wireless device may be connected to one master base station and one or more secondary base stations. A wireless device may be configured with multiple MAC entities, *e.g*. one MAC entity for master base station, and one or more other MAC entities for secondary base station(s). In an example, a configured set of serving cells for a wireless device may comprise two subsets: an MCG comprising serving cells of a master base station, and one or more SCGs comprising serving cells of a secondary base station(s). Figure 13 illustrates an example structure for MAC entities when MCG and SCG are configured for a wireless device.

In an example, at least one cell in a SCG may have a configured UL CC, wherein a cell of at least one cell may be called PSCell or PCell of SCG, or sometimes may be simply called PCell. A PSCell may be configured with PUCCH resources. In an example, when a SCG is configured, there may be at least one SCG bearer or one split bearer. In an example, upon detection of a physical layer problem or a random access problem on a PSCell, or upon reaching a number of RLC retransmissions associated with the SCG, or upon detection of an access problem on a PSCell during a SCG addition or a SCG change: an RRC connection reestablishment procedure may not be triggered, UL transmissions towards cells of an SCG may be stopped, a master base station may be informed by a UE of a SCG failure type and DL data transfer over a master base station may be maintained.

In an example, a MAC sublayer may provide services such as data transfer and radio resource allocation to upper layers (*e.g.* 1310 or 1320). A MAC sublayer may comprise a plurality of MAC entities (*e.g.* 1350 and 1360). A MAC sublayer may provide data transfer services on logical channels. To accommodate different kinds of data transfer services, multiple types of logical channels may be defined. A logical channel may support transfer of a particular type of information. A logical channel type may be defined by what type of information (*e.g*., control or data) is transferred. For example, BCCH, PCCH, CCCH and DCCH may be control channels and DTCH may be a traffic channel. In an example, a first MAC entity (*e.g.* 1310) may provide services on PCCH, BCCH, CCCH, DCCH, DTCH and MAC control elements. In an example, a second MAC entity (*e.g.* 1320) may provide services on BCCH, DCCH, DTCH and MAC control elements.

A MAC sublayer may expect from a physical layer (*e.g.* 1330 or 1340) services such as data transfer services, signaling of HARQ feedback, signaling of scheduling request or measurements (*e.g*. CQI). In an example, in dual connectivity, two MAC entities may be configured for a wireless device: one for MCG and one for SCG. A MAC entity of wireless device may handle a plurality of transport channels. In an example, a first MAC entity may handle first transport channels comprising a PCCH of MCG, a first BCH of MCG, one or more first DL-SCHs of MCG, one or more first UL-SCHs of MCG and one or more first RACHs of MCG. In an example, a second MAC entity may handle second transport channels comprising a second BCH of SCG, one or more second DL-SCHs of SCG, one or more second UL-SCHs of SCG and one or more second RACHs of SCG.

In an example, if a MAC entity is configured with one or more SCells, there may be multiple DL-SCHs and there may be multiple UL-SCHs as well as multiple RACHs per MAC entity. In an example, there may be one DL-SCH and UL-SCH on a SpCell. In an example, there may be one DL-SCH, zero or one UL-SCH and zero or one RACH for an SCell. A DL-SCH may support receptions using different numerologies and/or TTI duration within a MAC entity. A UL-SCH may also support transmissions using different numerologies and/or TTI duration within the MAC entity.

In an example, a MAC sublayer may support different functions and may control these functions with a control (*e.g.* 1355 or 1365) element. Functions performed by a MAC entity may comprise mapping between logical channels and transport channels (*e.g.,* in uplink or downlink), multiplexing (*e.g*. 1352 or 1362) of MAC SDUs from one or different logical channels onto transport blocks (TB) to be delivered to the physical layer on transport channels (*e.g*., in uplink), demultiplexing (*e.g*. 1352 or 1362) of MAC SDUs to one or different logical channels from transport blocks (TB) delivered from the physical layer on transport channels (*e.g.*, in downlink), scheduling information reporting (*e.g*., in uplink), error correction through HARQ in uplink or downlink (*e.g.* 1363), and logical channel prioritization in uplink (*e.g.* 1351 or 1361). A MAC entity may handle a random access process (*e.g.* 1354 or 1364).

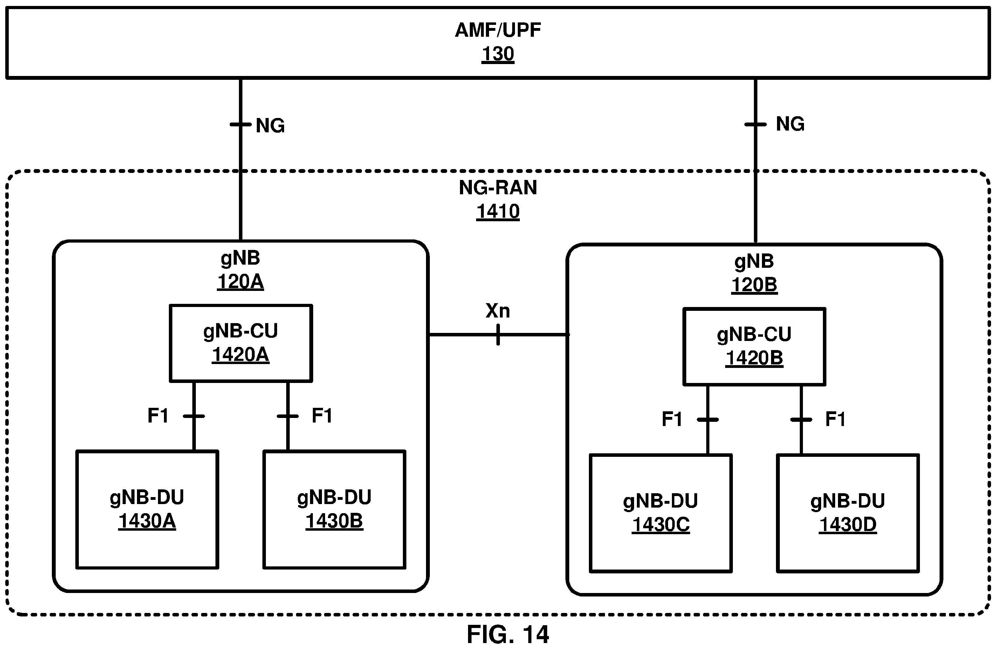

FIG. 14 is an example diagram of a RAN architecture comprising one or more base stations. In an example, a protocol stack (*e.g.* RRC, SDAP, PDCP, RLC, MAC, and PHY) may be supported at a node. A base station (*e.g*. gNB 120A or 120B) may comprise a base station central unit (CU) (*e.g.* gNB-CU 1420A or 1420B) and at least one base station distributed unit (DU) (*e.g.* gNB-DU 1430A, 1430B, 1430C, or 1430D) if a functional split is configured. Upper protocol layers of a base station may be located in a base station CU, and lower layers of the base station may be located in the base station DUs. An F1 interface (*e.g*. CU-DU interface) connecting a base station CU and base station DUs may be an ideal or non-ideal backhaul. F1-C may provide a control plane connection over an F1 interface, and F1-U may provide a user plane connection over the F1 interface. In an example, an Xn interface may be configured between base station CUs.

In an example, a base station CU may comprise an RRC function, an SDAP layer, and a PDCP layer, and base station DUs may comprise an RLC layer, a MAC layer, and a PHY layer. In an example, various functional split options between a base station CU and base station DUs may be possible by locating different combinations of upper protocol layers (RAN functions) in a base station CU and different combinations of lower protocol layers (RAN functions) in base station DUs. A functional split may support flexibility to move protocol layers between a base station CU and base station DUs depending on service requirements and/or network environments.

In an example, functional split options may be configured per base station, per base station CU, per base station DU, per UE, per bearer, per slice, or with other granularities. In per base station CU split, a base station CU may have a fixed split option, and base station DUs may be configured to match a split option of a base station CU. In per base station DU split, a base station DU may be configured with a different split option, and a base station CU may provide different split options for different base station DUs. In per UE split, a base station (base station CU and at least one base station DUs) may provide different split options for different wireless devices. In per bearer split, different split options may be utilized for different bearers. In per slice splice, different split options may be applied for different slices.

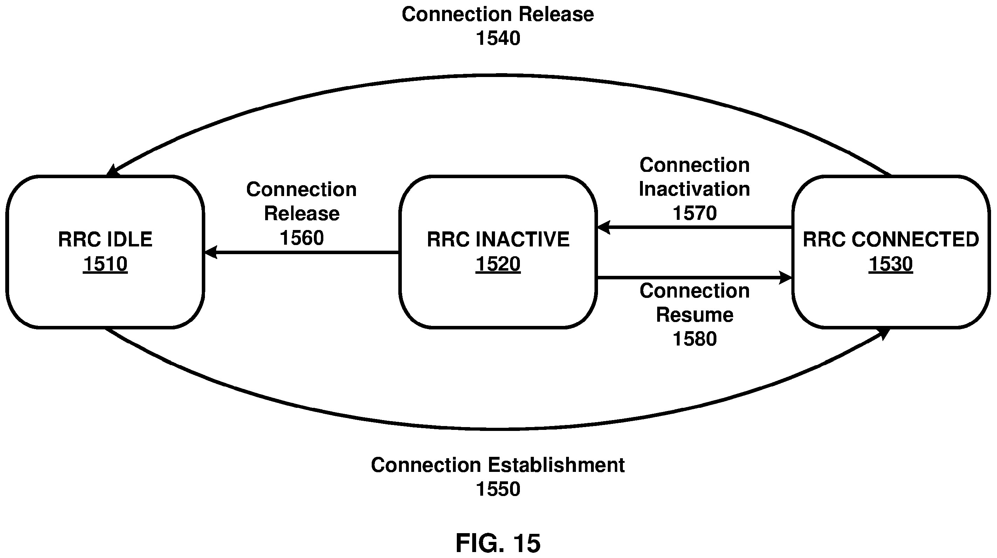

FIG. 15 is an example diagram showing RRC state transitions of a wireless device. In an example, a wireless device may be in at least one RRC state among an RRC connected state (*e.g.* RRC Connected 1530, RRC_Connected), an RRC idle state (*e.g.* RRC Idle 1510, RRC_Idle), and/or an RRC inactive state (*e*.*g.* RRC Inactive 1520, RRC_Inactive). In an example, in an RRC connected state, a wireless device may have at least one RRC connection with at least one base station (*e.g*. gNB and/or eNB), which may have a UE context of the wireless device. A UE context (*e.g.* a wireless device context) may comprise at least one of an access stratum context, one or more radio link configuration parameters, bearer (*e.g.* data radio bearer (DRB), signaling radio bearer (SRB), logical channel, QoS flow, PDU session, and/or the like) configuration information, security information, PHY/MAC/RLC/PDCP/SDAP layer configuration information, and/or the like configuration information for a wireless device. In an example, in an RRC idle state, a wireless device may not have an RRC connection with a base station, and a UE context of a wireless device may not be stored in a base station. In an example, in an RRC inactive state, a wireless device may not have an RRC connection with a base station. A UE context of a wireless device may be stored in a base station, which may be called as an anchor base station (*e.g*. last serving base station).

In an example, a wireless device may transition a UE RRC state between an RRC idle state and an RRC connected state in both ways (*e.g*. connection release 1540 or connection establishment 1550; or connection reestablishment) and/or between an RRC inactive state and an RRC connected state in both ways (*e.g.* connection inactivation 1570 or connection resume 1580). In an example, a wireless device may transition its RRC state from an RRC inactive state to an RRC idle state (*e.g*. connection release 1560).

In an example, an anchor base station may be a base station that may keep a UE context (a wireless device context) of a wireless device at least during a time period that a wireless device stays in a RAN notification area (RNA) of an anchor base station, and/or that a wireless device stays in an RRC inactive state. In an example, an anchor base station may be a base station that a wireless device in an RRC inactive state was lastly connected to in a latest RRC connected state or that a wireless device lastly performed an RNA update procedure in. In an example, an RNA may comprise one or more cells operated by one or more base stations. In an example, a base station may belong to one or more RNAs. In an example, a cell may belong to one or more RNAs.

In an example, a wireless device may transition a UE RRC state from an RRC connected state to an RRC inactive state in a base station. A wireless device may receive RNA information from the base station. RNA information may comprise at least one of an RNA identifier, one or more cell identifiers of one or more cells of an RNA, a base station identifier, an IP address of the base station, an AS context identifier of the wireless device, a resume identifier, and/or the like.

In an example, an anchor base station may broadcast a message (*e.g*. RAN paging message) to base stations of an RNA to reach to a wireless device in an RRC inactive state, and/or the base stations receiving the message from the anchor base station may broadcast and/or multicast another message (*e.g*. paging message) to wireless devices in their coverage area, cell coverage area, and/or beam coverage area associated with the RNA through an air interface.

In an example, when a wireless device in an RRC inactive state moves into a new RNA, the wireless device may perform an RNA update (RNAU) procedure, which may comprise a random access procedure by the wireless device and/or a UE context retrieve procedure. A UE context retrieve may comprise: receiving, by a base station from a wireless device, a random access preamble; and fetching, by a base station, a UE context of the wireless device from an old anchor base station. Fetching may comprise: sending a retrieve UE context request message comprising a resume identifier to the old anchor base station and receiving a retrieve UE context response message comprising the UE context of the wireless device from the old anchor base station.

In an example embodiment, a wireless device in an RRC inactive state may select a cell to camp on based on at least a on measurement results for one or more cells, a cell where a wireless device may monitor an RNA paging message and/or a core network paging message from a base station. In an example, a wireless device in an RRC inactive state may select a cell to perform a random access procedure to resume an RRC connection and/or to transmit one or more packets to a base station (*e.g.* to a network). In an example, if a cell selected belongs to a different RNA from an RNA for a wireless device in an RRC inactive state, the wireless device may initiate a random access procedure to perform an RNA update procedure. In an example, if a wireless device in an RRC inactive state has one or more packets, in a buffer, to transmit to a network, the wireless device may initiate a random access procedure to transmit one or more packets to a base station of a cell that the wireless device selects. A random access procedure may be performed with two messages (*e.g.* 2 stage random access) and/or four messages (*e.g.* 4 stage random access) between the wireless device and the base station.

In an example embodiment, a base station receiving one or more uplink packets from a wireless device in an RRC inactive state may fetch a UE context of a wireless device by transmitting a retrieve UE context request message for the wireless device to an anchor base station of the wireless device based on at least one of an AS context identifier, an RNA identifier, a base station identifier, a resume identifier, and/or a cell identifier received from the wireless device. In response to fetching a UE context, a base station may transmit a path switch request for a wireless device to a core network entity (*e.g.* AMF, MME, and/or the like). A core network entity may update a downlink tunnel endpoint identifier for one or more bearers established for the wireless device between a user plane core network entity (*e.g*. UPF, S-GW, and/or the like) and a RAN node (*e.g*. the base station), *e.g.* changing a downlink tunnel endpoint identifier from an address of the anchor base station to an address of the base station.

A gNB may communicate with a wireless device via a wireless network employing one or more new radio technologies. The one or more radio technologies may comprise at least one of: multiple technologies related to physical layer; multiple technologies related to medium access control layer; and/or multiple technologies related to radio resource control layer. Example embodiments of enhancing the one or more radio technologies may improve performance of a wireless network. Example embodiments may increase the system throughput, or data rate of transmission. Example embodiments may reduce battery consumption of a wireless device. Example embodiments may improve latency of data transmission between a gNB and a wireless device. Example embodiments may improve network coverage of a wireless network. Example embodiments may improve transmission efficiency of a wireless network.

Example Downlink Control Information (DCI) will be discussed. In an example, a gNB may transmit a DCI via a PDCCH for at least one of: a scheduling assignment/grant; a slot format notification; a pre-emption indication; and/or a power-control command(s). More specifically, the DCI may comprise at least one of: an identifier of a DCI format; a downlink scheduling assignment(s); an uplink scheduling grant(s); a slot format indicator; a pre-emption indication; a power-control for PUCCH/PUSCH; and/or a power-control for SRS.

In an example, a downlink scheduling assignment DCI may comprise parameters indicating at least one of: an identifier of a DCI format; a PDSCH resource indication; a transport format; HARQ information; control information related to multiple antenna schemes; and/or a command for power control of the PUCCH.

In an example, an uplink scheduling grant DCI may comprise parameters indicating at least one of: an identifier of a DCI format; a PUSCH resource indication; a transport format; HARQ related information; and/or a power control command of the PUSCH.

In an example, different types of control information may correspond to different DCI message sizes. For example, supporting multiple beams and/or spatial multiplexing in the spatial domain and noncontiguous allocation of RBs in the frequency domain may require a larger scheduling message in comparison with an uplink grant allowing for frequency-contiguous allocation. DCI may be categorized into different DCI formats, where a format corresponds to a certain message size and/or usage.

In an example, a wireless device may monitor one or more PDCCHs for detecting one or more DCI with one or more DCI formats in a common search space or a wireless device-specific search space. In an example, a wireless device may monitor a PDCCH with a limited set of DCI formats to save power consumption. In general, the wireless device consumes more power for each additional DCI format the wireless device is to detect.

In an example, the information in a DCI with a DCI format used for downlink scheduling may comprise at least one of: an identifier of a DCI format; a carrier indicator; frequency domain resource assignment; time domain resource assignment; a bandwidth part indicator; a HARQ process number; one or more MCSs; one or more NDIs; one or more RVs; MIMO related information; a Downlink Assignment Index (DAI); a PUCCH resource indicator; a PDSCH-to-HARQ_feedback timing indicator; a TPC for PUCCH; an SRS request; and padding if necessary. In an example, the MIMO related information may comprise at least one of: a PMI; precoding information; a transport block swap flag; a power offset between PDSCH and a reference signal; a reference-signal scrambling sequence; a number of layers; and/or antenna ports for downlink transmissions; and/or a Transmission Configuration Indication (TCI).

In an example, the information in a DCI with a DCI format used for uplink scheduling may comprise at least one of: an identifier of a DCI format; a carrier indicator; a bandwidth part indication; a resource allocation type; a frequency domain resource assignment; a time domain resource assignment; an MCS; an NDI; a phase rotation of the uplink DMRS; precoding information; a CSI request; an SRS request; an uplink index/DAI; a TPC for PUSCH; and/or padding if necessary.

In an example, a gNB may perform CRC scrambling for a DCI before transmitting the DCI via a PDCCH. The gNB may perform CRC scrambling by binary addition of multiple bits of at least one wireless device identifier (e.g., C-RNTI, CS-RNTI, TPC-CS-RNTI, TPC-PUCCH-RNTI, TPC-PUSCH-RNTI, SP CSI C-RNTI, or TPC-SRS-RNTI) and the CRC bits of the DCI. The wireless device may check the CRC bits of the DCI when detecting the DCI. The wireless device may receive the DCI when the CRC is scrambled by a sequence of bits that is the same as the at least one wireless device identifier.

In an example, in order to support wide bandwidth operation, a gNB may transmit one or more PDCCHs in different control resource sets ("coresets"). A gNB may transmit one or more RRC messages comprising configuration parameters of one or more coresets. A coreset may comprise at least one of: a first OFDM symbol; a number of consecutive OFDM symbols; a set of resource blocks; and/or a CCE-to-REG mapping. In an example, a gNB may transmit a PDCCH in a dedicated coreset for a particular purpose, including, for example, beam failure recovery confirmation.

In an example, a wireless device may monitor PDCCH for detecting DCI in one or more configured coresets, to reduce the power consumption.

Example MAC PDU structures will now be discussed. A gNB may transmit one or more MAC PDUs to a wireless device. In an example, a MAC PDU may be a bit string that is byte aligned (e.g., a multiple of eight bits) in length. In an example, bit strings may be represented by tables in which the most significant bit is the leftmost bit of the first line of the table, and the least significant bit is the rightmost bit on the last line of the table. More generally, the bit string may be read from left to right and then in the reading order of the lines. In an example, the bit order of a parameter field within a MAC PDU is represented with the first and most significant bit in the leftmost bit and the last and least significant bit in the rightmost bit.

In an example, a MAC SDU may be a bit string that is byte aligned (e.g., a multiple of eight bits) in length. In an example, a MAC SDU may be included in a MAC PDU from the first bit onward.

In an example, a MAC CE may be a bit string that is byte aligned (e.g., a multiple of eight bits) in length.

In an example, a MAC subheader may be a bit string that is byte aligned (e.g., a multiple of eight bits) in length. In an example, a MAC subheader may be placed immediately in front of a corresponding MAC SDU, MAC CE, or padding.

In an example, a MAC entity may ignore a value of reserved bits in a DL MAC PDU.

In an example, a MAC PDU may comprise one or more MAC subPDUs. A MAC subPDU of the one or more MAC subPDUs may comprise: a MAC subheader only (including padding); a MAC subheader and a MAC SDU; a MAC subheader and a MAC CE; and/or a MAC subheader and padding. In an example, the MAC SDU may be of variable size. In an example, a MAC subheader may correspond to a MAC SDU, a MAC CE, or padding.

In an example, when a MAC subheader corresponds to a MAC SDU, a variable-sized MAC CE, or padding, the MAC subheader may comprise: an R field with a one bit length; an F field with a one bit length; an LCID field with a multi-bit length; and/or an L field with a multi-bit length.

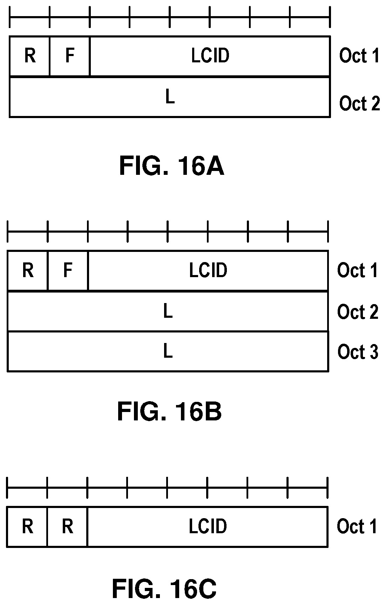

FIG. 16A shows an example of a MAC subheader with an R field, an F field, an LCID field, and an L field. In the example MAC subheader of FIG. 16A, the LCID field may be six bits in length, and the L field may be eight bits in length. FIG. 16B shows example of a MAC subheader with an R field, a F field, an LCID field, and an L field. In the example MAC subheader of FIG. 16B, the LCID field may be six bits in length, and the L field may be sixteen bits in length.

In an example, when a MAC subheader corresponds to a fixed sized MAC CE or padding, the MAC subheader may comprise: an R field with a two bit length and an LCID field with a multi-bit length. FIG. 16C shows an example of a MAC subheader with an R field and an LCID field. In the example MAC subheader of FIG. 16C, the LCID field may be six bits in length, and the R field may be two bits in length.

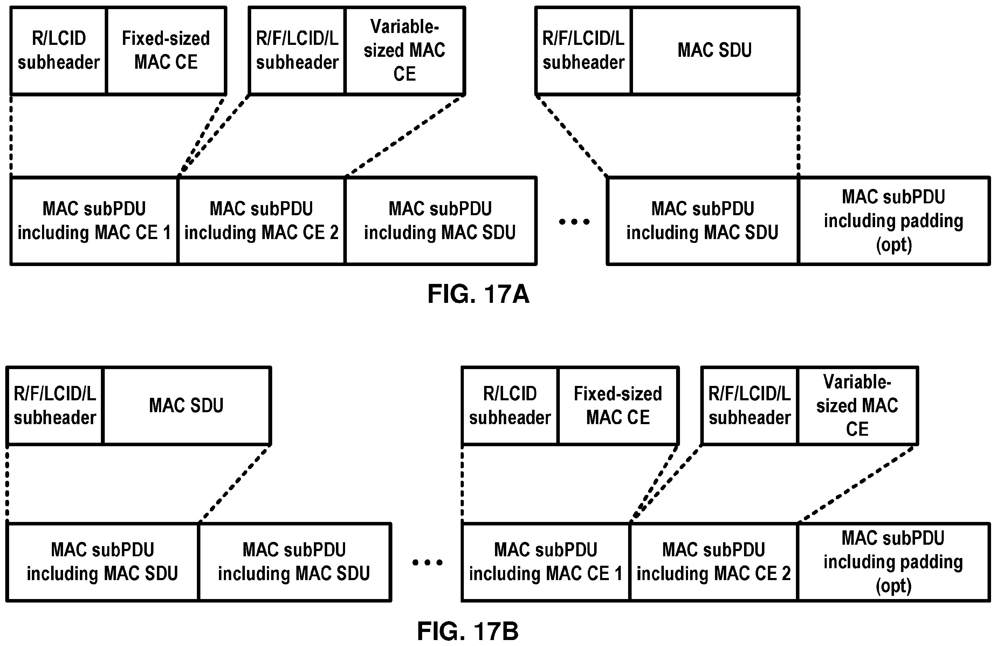

FIG. 17A shows an example of a DL MAC PDU. In the example of FIG. 17A, multiple MAC CEs, such as MAC CEs 1 and 2, may be placed together. A MAC subPDU comprising a MAC CE may be placed before any MAC subPDU comprising a MAC SDU or a MAC subPDU comprising padding.

FIG. 17B shows an example of a UL MAC PDU. In the example of FIG. 17B, multiple MAC CEs, such as MAC CEs 1 and 2, may be placed together. A MAC subPDU comprising a MAC CE may be placed after all MAC subPDUs comprising a MAC SDU. In addition, the MAC subPDU may be placed before a MAC subPDU comprising padding.

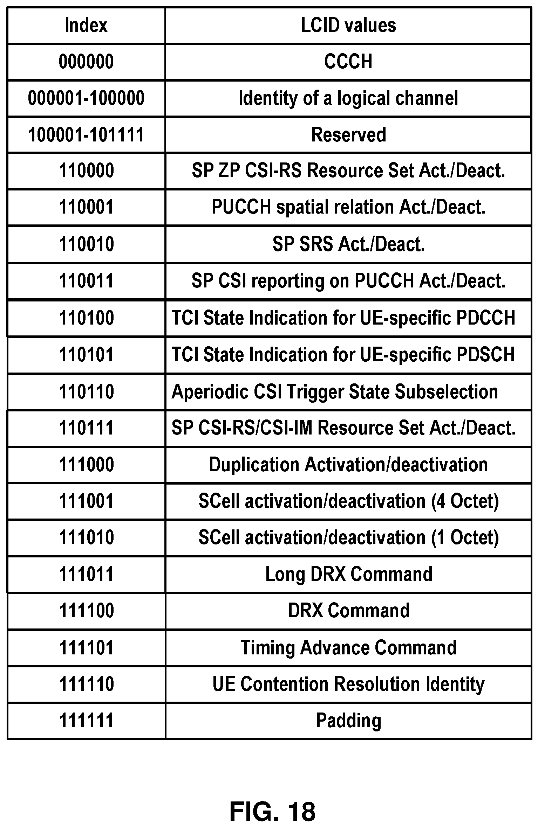

In an example, a MAC entity of a gNB may transmit one or more MAC CEs to a MAC entity of a wireless device. FIG. 18 shows an example of multiple LCIDs that may be associated with the one or more MAC CEs. In the example of FIG. 18, the one or more MAC CEs comprise at least one of: a SP ZP CSI-RS Resource Set Activation/Deactivation MAC CE; a PUCCH spatial relation Activation/Deactivation MAC CE; a SP SRS Activation/Deactivation MAC CE; a SP CSI reporting on PUCCH Activation/Deactivation MAC CE; a TCI State Indication for UE-specific PDCCH MAC CE; a TCI State Indication for UE-specific PDSCH MAC CE; an Aperiodic CSI Trigger State Subselection MAC CE; a SP CSI-RS/CSI-IM Resource Set Activation/Deactivation MAC CE; a UE contention resolution identity MAC CE; a timing advance command MAC CE; a DRX command MAC CE; a Long DRX command MAC CE; an SCell activation/deactivation MAC CE (1 Octet); an SCell activation/deactivation MAC CE (4 Octet); and/or a duplication activation/deactivation MAC CE. In an example, a MAC CE, such as a MAC CE transmitted by a MAC entity of a gNB to a MAC entity of a wireless device, may have an LCID in the MAC subheader corresponding to the MAC CE. Different MAC CE may have different LCID in the MAC subheader corresponding to the MAC CE. For example, an LCID given by 111011 in a MAC subheader may indicate a MAC CE associated with the MAC subheader is a long DRX command MAC CE.

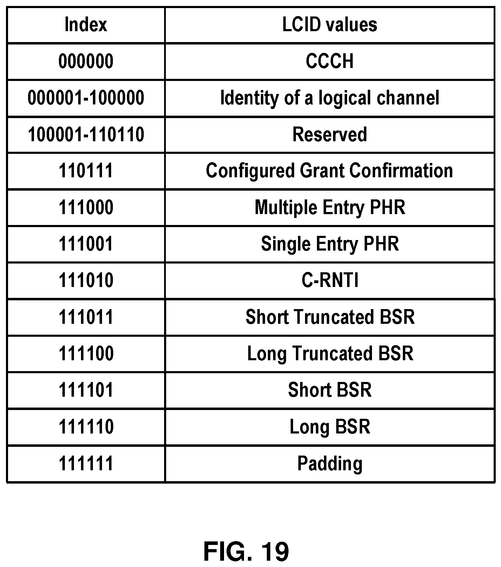

In an example, the MAC entity of the wireless device may transmit to the MAC entity of the gNB one or more MAC CEs. FIG. 19 shows an example of the one or more MAC CEs. The one or more MAC CEs may comprise at least one of: a short buffer status report (BSR) MAC CE; a long BSR MAC CE; a C-RNTI MAC CE; a configured grant confirmation MAC CE; a single entry PHR MAC CE; a multiple entry PHR MAC CE; a short truncated BSR; and/or a long truncated BSR. In an example, a MAC CE may have an LCID in the MAC subheader corresponding to the MAC CE. Different MAC CE may have different LCID in the MAC subheader corresponding to the MAC CE. For example, an LCID given by 111011 in a MAC subheader may indicate a MAC CE associated with the MAC subheader is a shorttruncated command MAC CE.

Example activation/deactivation mechanisms for carrier aggregation will now be discussed. In carrier aggregation (CA), two or more component carriers (CCs) may be aggregated. A wireless device may simultaneously receive or transmit on one or more CCs, depending on capabilities of the wireless device, using the technique of CA. In an example, a wireless device may support CA for contiguous CCs and/or for non-contiguous CCs. CCs may be organized into cells. For example, CCs may be organized into one primary cell (PCell) and one or more secondary cells (SCells).

When configured with CA, a wireless device may have one RRC connection with a network. During an RRC connection establishment/re-establishment/handover, a cell providing NAS mobility information may be a serving cell. During an RRC connection reestablishment/handover procedure, a cell providing a security input may be a serving cell. In an example, the serving cell may denote the PCell. In an example, a gNB may transmit, to a wireless device, one or more messages comprising configuration parameters of a plurality of one or more SCells, depending on capabilities of the wireless device.

When configured with CA, a base station and/or a wireless device may employ an activation/deactivation mechanism of an SCell to improve battery or power consumption of the wireless device. When a wireless device is configured with one or more SCells, a gNB may activate or deactivate at least one of the one or more SCells. Upon configuration of an SCell, the SCell may be deactivated unless an SCell state associated with the SCell is set to "activated" or "dormant".

In an example, a wireless device may activate/deactivate an SCell in response to receiving an SCell Activation/Deactivation MAC CE.

In an example, a base station may transmit, to a wireless device, one or more messages comprising an SCell timer (e.g., *sCellDeactivationTimer).* In an example, a wireless device may deactivate an SCell in response to an expiry of the SCell timer.

When a wireless device receives an SCell Activation/Deactivation MAC CE activating an SCell, the wireless device may activate the SCell. In response to the activating the SCell, the wireless device may perform operations comprising: SRS transmissions on the SCell; CQI/PMI/RI/CRI reporting for the SCell; PDCCH monitoring on the SCell; PDCCH monitoring for the SCell; and/or PUCCH transmissions on the SCell.

In an example, in response to the activating the SCell, the wireless device may start or restart a first SCell timer (e.g., *sCellDeactivationTimer*) associated with the SCell. The wireless device may start or restart the first SCell timer in the slot when the SCell Activation/Deactivation MAC CE activating the SCell has been received. In an example, in response to the activating the SCell, the wireless device may (re-)initialize one or more suspended configured uplink grants of a configured grant Type 1 associated with the SCell according to a stored configuration. In an example, in response to the activating the SCell, the wireless device may trigger PHR.

When a wireless device receives an SCell Activation/Deactivation MAC CE deactivating an activated SCell, the wireless device may deactivate the activated SCell.

In an example, when a first SCell timer (e.g., *sCellDeactivationTimer)* associated with an activated SCell expires, the wireless device may deactivate the activated SCell. In response to the deactivating the activated SCell, the wireless device may stop the first SCell timer associated with the activated SCell. In an example, in response to the deactivating the activated SCell, the wireless device may clear one or more configured downlink assignments and/or one or more configured uplink grants of a configured uplink grant Type 2 associated with the activated SCell. In an example, in response to the deactivating the activated SCell, the wireless device may further suspend one or more configured uplink grants of a configured uplink grant Type 1 associated with the activated SCell. The wireless device may flush HARQ buffers associated with the activated SCell.

In an example, when an SCell is deactivated, a wireless device may not perform operations comprising: transmitting SRS on the SCell; reporting CQI/PMI/RI/CRI for the SCell; transmitting on UL-SCH on the SCell; transmitting on RACH on the SCell; monitoring at least one first PDCCH on the SCell; monitoring at least one second PDCCH for the SCell; and/or transmitting a PUCCH on the SCell.

In an example, when at least one first PDCCH on an activated SCell indicates an uplink grant or a downlink assignment, a wireless device may restart a first SCell timer (e.g., *sCellDeactivationTimer)* associated with the activated SCell. In an example, when at least one second PDCCH on a serving cell (e.g*.* a PCell or an SCell configured with PUCCH, i.e. PUCCH SCell) scheduling the activated SCell indicates an uplink grant or a downlink assignment for the activated SCell, a wireless device may restart the first SCell timer (e.g., *sCellDeactivationTimer)* associated with the activated SCell.

In an example, when an SCell is deactivated, if there is an ongoing random access procedure on the SCell, a wireless device may abort the ongoing random access procedure on the SCell.

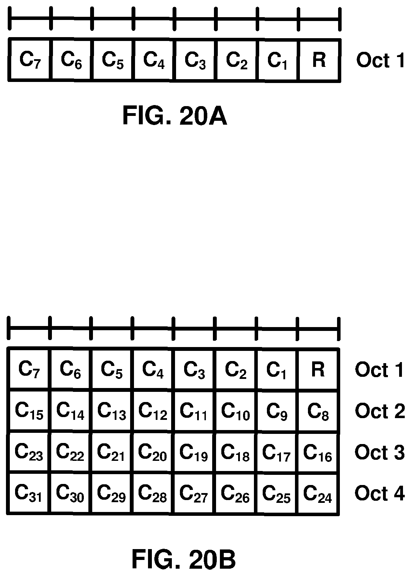

Examples of SCell Activation/Deactivation MAC-CE will now be discussed. FIG. 20A shows an example of an SCell Activation/Deactivation MAC CE of one octet. A first MAC PDU subheader with a first LCID (e.g., '111010' as shown in FIG. 18) may identify the SCell Activation/Deactivation MAC CE of one octet. The SCell Activation/Deactivation MAC CE of one octet may have a fixed size. The SCell Activation/Deactivation MAC CE of one octet may comprise a single octet. The single octet may comprise a first number of C-fields (e.g. seven) and a second number of R-fields (e.g., one).

FIG. 20B shows an example of an SCell Activation/Deactivation MAC CE of four octets. A second MAC PDU subheader with a second LCID (e.g., '111001' as shown in FIG. 18) may identify the SCell Activation/Deactivation MAC CE of four octets. The SCell Activation/Deactivation MAC CE of four octets may have a fixed size. The SCell Activation/Deactivation MAC CE of four octets may comprise four octets. The four octets may comprise a third number of C-fields (e.g., 31) and a fourth number of R-fields (e.g., 1).

In FIG. 20A and/or FIG. 20B, a Cᵢ field may indicate an activation/deactivation status of an SCell with an SCell index i if an SCell with SCell index i is configured. In an example, when the Cᵢ field is set to one, an SCell with an SCell index i may be activated. In an example, when the Cᵢ field is set to zero, an SCell with an SCell index i may be deactivated. In an example, if there is no SCell configured with SCell index i, the wireless device may ignore the Cᵢ field. In FIG. 20A and FIG. 20B, an R field may indicate a reserved bit. The R field may be set to zero.

Examples of SCell hibernation mechanisms for carrier aggregation will now be discussed. When configured with CA, a base station and/or a wireless device may employ a hibernation mechanism of an SCell to improve battery or power consumption of the wireless device and/or for a quick SCell activation/addition. When the wireless device hibernates the SCell, the SCell may be transitioned into dormant state. In response to the SCell being transitioned into dormant state, the wireless device may: stop transmitting SRS on the SCell; report CQI/PMI/RI/PTI/CRI for the SCell according to a periodicity configured for the SCell in dormant state; not transmit on UL-SCH on the SCell; not transmit on RACH on the SCell; not monitor the PDCCH on the SCell; not monitor the PDCCH for the SCell; and/or not transmit PUCCH on the SCell. In an example, reporting CSI for an SCell and not monitoring the PDCCH on/for the SCell, when the SCell is in dormant state, may provide the base station an "always-updated" CSI for the SCell. With the always-updated CSI, the base station may employ a quick and/or accurate channel adaptive scheduling on the SCell once the SCell is transitioned back into active state, thereby speeding up the activation procedure of the SCell. In an example, reporting CSI for the SCell and not monitoring the PDCCH on/for the SCell, when the SCell is in dormant state, may improve battery or power consumption of the wireless device, while still providing the base station timely and/or accurate channel information feedback. In an example, a PCell/PSCell and/or a PUCCH secondary cell may not be configured or transitioned into dormant state.

When configured with one or more SCells, a gNB may activate, hibernate, or deactivate at least one of the one or more SCells. In an example, a gNB may transmit one or more RRC messages comprising parameters indicating at least one SCell being set to an active state, a dormant state, or an inactive state, to a wireless device.

In an example, when an SCell is in active state, the wireless device may perform: SRS transmissions on the SCell; CQI/PMI/RI/CRI reporting for the SCell; PDCCH monitoring on the SCell; PDCCH monitoring for the SCell; and/or PUCCH/SPUCCH transmissions on the SCell.

In an example, when an SCell is in inactive state, the wireless device may: not transmit SRS on the SCell; not report CQI/PMI/RI/CRI for the SCell; not transmit on UL-SCH on the SCell; not transmit on RACH on the SCell; not monitor PDCCH on the SCell; not monitor PDCCH for the SCell; and/or not transmit PUCCH/SPUCCH on the SCell.

In an example, when an SCell is in dormant state, the wireless device may: not transmit SRS on the SCell; report CQI/PMI/RI/CRI for the SCell; not transmit on UL-SCH on the SCell; not transmit on RACH on the SCell; not monitor PDCCH on the SCell; not monitor PDCCH for the SCell; and/or not transmit PUCCH/SPUCCH on the SCell.

When configured with one or more SCells, a gNB may activate, hibernate, or deactivate at least one of the one or more SCells. In an example, a gNB may transmit one or more MAC control elements comprising parameters indicating activation, deactivation, or hibernation of at least one SCell to a wireless device.

In an example, a gNB may transmit a first MAC CE (e.g., activation/deactivation MAC CE, as shown in FIG. 20A or FIG. 20B) indicating activation or deactivation of at least one SCell to a wireless device. In FIG. 20A and/or FIG. 20B, a Cᵢ field may indicate an activation/deactivation status of an SCell with an SCell index i if an SCell with SCell index i is configured. In an example, when the Cᵢ field is set to one, an SCell with an SCell index i may be activated. In an example, when the Cᵢ field is set to zero, an SCell with an SCell index i may be deactivated. In an example, if there is no SCell configured with SCell index i, the wireless device may ignore the Cᵢ field. In FIG. 20A and FIG. 20B, an R field may indicate a reserved bit. In an example, the R field may be set to zero.

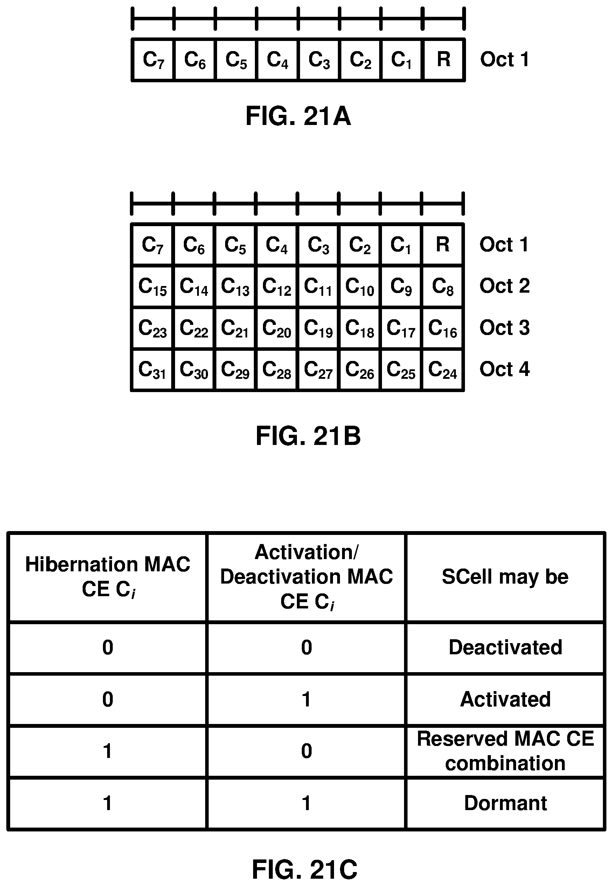

In an example, a gNB may transmit a second MAC CE (e.g., hibernation MAC CE) indicating activation or hibernation of at least one SCell to a wireless device. In an example, the second MAC CE may be associated with a second LCID different from a first LCID of the first MAC CE (e.g., activation/deactivation MAC CE). In an example, the second MAC CE may have a fixed size. In an example, the second MAC CE may consist of a single octet containing seven C-fields and one R-field. FIG. 21A shows an example of the second MAC CE with a single octet. In another example, the second MAC CE may consist of four octets containing 31 C-fields and one R-field. FIG. 21B shows an example of the second MAC CE with four octets. In an example, the second MAC CE with four octets may be associated with a third LCID different from the second LCID for the second MAC CE with a single octet, and/or the first LCID for activation/deactivation MAC CE. In an example, when there is no Scell with a serving cell index greater than 7, the second MAC CE of one octet may be applied, otherwise the second MAC CE of four octets may be applied.

In an example, when the second MAC CE is received, and the first MAC CE is not received, C*ᵢ* may indicate a dormant/activated status of an SCell with SCell index i if there is an SCell configured with SCell index i, otherwise the MAC entity may ignore the C*ᵢ* field. In an example, when C*ᵢ* is set to "1", the wireless device may transition an SCell associated with SCell index i into dormant state. In an example, when C*ᵢ* is set to "0", the wireless device may activate an SCell associated with SCell index i. In an example, when C*ᵢ* is set to "0" and the SCell with SCell index *i* is in dormant state, the wireless device may activate the SCell with SCell index *i.* In an example, when C*ᵢ* is set to "0" and the SCell with SCell index i is not in dormant state, the wireless device may ignore the C*ᵢ* field.

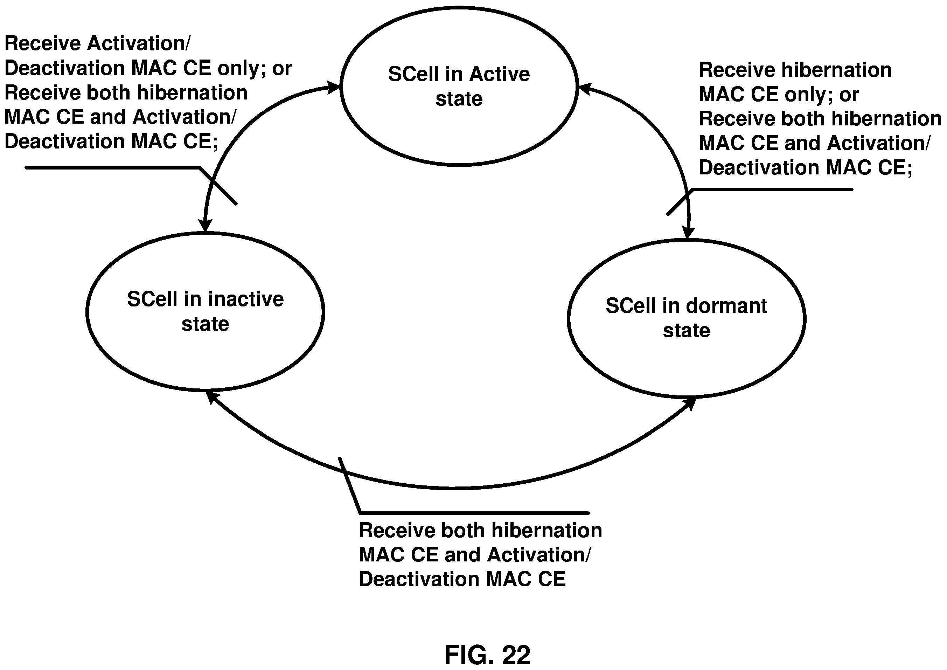

In an example, when both the first MAC CE (activation/deactivation MAC CE) and the second MAC CE (hibernation MAC CE) are received, two C*ᵢ* fields of the two MAC CEs may indicate possible state transitions of the SCell with SCell index i if there is an SCell configured with SCell index i, otherwise the MAC entity may ignore the C*ᵢ* fields. In an example, the C*ᵢ* fields of the two MAC CEs may be interpreted according to FIG. 21C. FIG. 22 shows an example of SCell state transitions based on activation/deactivation MAC CE and/or hibernation MAC CE.

When configured with one or more SCells, a gNB may activate, hibernate, or deactivate at least one of the one or more SCells. In an example, a MAC entity of a gNB and/or a wireless device may maintain an SCell deactivation timer (e.g., *sCellDeactivationTimer)* per configured SCell (except the SCell configured with PUCCH/SPUCCH, if any) and deactivate the associated SCell upon its expiry.

In an example, a MAC entity of a gNB and/or a wireless device may maintain an SCell hibernation timer (e.g., *sCellHibernationTimer*) per configured SCell (except the SCell configured with PUCCH/SPUCCH, if any) and hibernate the associated SCell upon the SCell hibernation timer expiry if the SCell is in active state. In an example, when both the SCell deactivation timer and the SCell hibernation timer are configured, the SCell hibernation timer may take priority over the SCell deactivation timer. In an example, when both the SCell deactivation timer and the SCell hibernation timer are configured, a gNB and/or a wireless device may ignore the SCell deactivation timer regardless of the SCell deactivation timer expiry.

In an example, a MAC entity of a gNB and/or a wireless device may maintain a dormant SCell deactivation timer (e.g., *dormantSCellDeactivationTimer*) per configured SCell (except the SCell configured with PUCCH/SPUCCH, if any), and deactivate the associated SCell upon the dormant SCell deactivation timer expiry if the SCell is in dormant state.

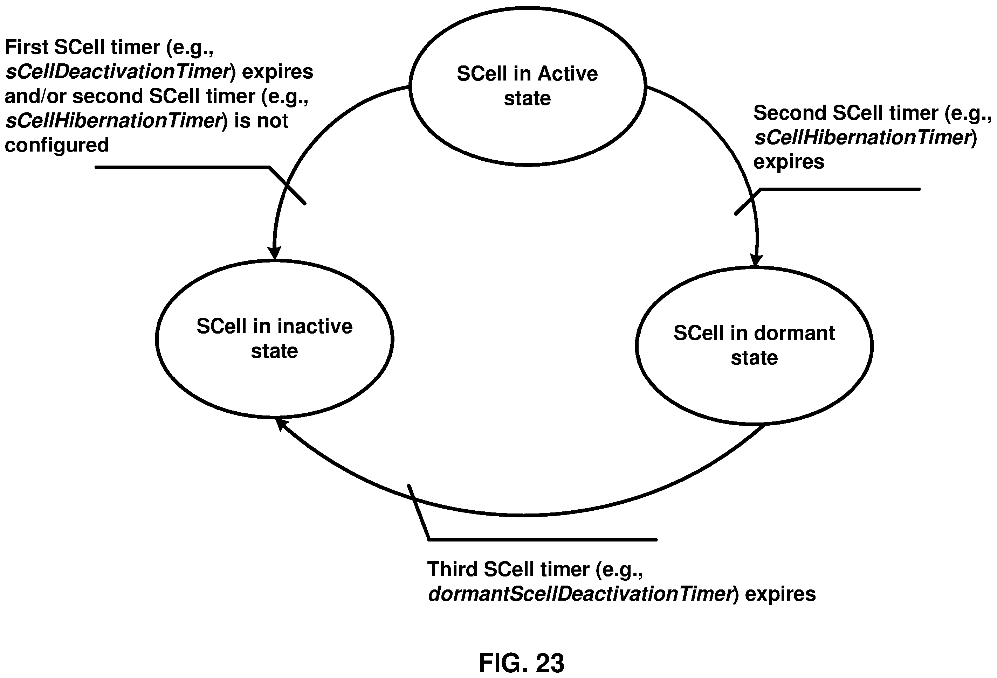

FIG. 23 shows an example of SCell state transitions based on a first SCell timer (e.g., an SCell deactivation timer or *sCellDeactivationTimer*)*,* a second SCell timer (e.g., an SCell hibernation timer or *sCellHibernationTimer*)*,* and/or a third SCell timer (e.g., a dormant SCell deactivation timer or *dormantSCellDeactivationTimer*)*.*

In an example, when a MAC entity of a wireless device is configured with an activated SCell upon SCell configuration, the MAC entity may activate the SCell. In an example, when a MAC entity of a wireless device receives a MAC CE(s) activating an SCell, the MAC entity may activate the SCell. In an example, the MAC entity may start or restart the SCell deactivation timer associated with the SCell in response to activating the SCell. In an example, the MAC entity may start or restart the SCell hibernation timer (if configured) associated with the SCell in response to activating the SCell. In an example, the MAC entity may trigger PHR procedure in response to activating the SCell.

In an example, when a MAC entity of a wireless device receives a MAC CE(s) indicating deactivating an SCell, the MAC entity may deactivate the SCell. In an example, in response to receiving the MAC CE(s), the MAC entity may: deactivate the SCell; stop an SCell deactivation timer associated with the SCell; and/or flush all HARQ buffers associated with the SCell.

In an example, when an SCell deactivation timer associated with an activated SCell expires and an SCell hibernation timer is not configured, the MAC entity may: deactivate the SCell; stop the SCell deactivation timer associated with the SCell; and/or flush all HARQ buffers associated with the SCell.

In an example, when a first PDCCH on an activated SCell indicates an uplink grant or downlink assignment, or a second PDCCH on a serving cell scheduling an activated SCell indicates an uplink grant or a downlink assignment for the activated SCell, or a MAC PDU is transmitted in a configured uplink grant or received in a configured downlink assignment, the MAC entity may: restart the SCell deactivation timer associated with the SCell; and/or restart the SCell hibernation timer associated with the SCell if configured. In an example, when an SCell is deactivated, an ongoing random access procedure on the SCell may be aborted.

In an example, for a configured SCell, when a MAC entity is configured with the SCell associated with an SCell state set to dormant state upon the SCell configuration, or when the MAC entity receives MAC CE(s) for transitioning the SCell into dormant state, the MAC entity may: transition the SCell into dormant state; stop an SCell deactivation timer associated with the SCell; stop an SCell hibernation timer associated with the SCell if configured; start or restart a dormant SCell deactivation timer associated with the SCell; and/or flush all HARQ buffers associated with the SCell. In an example, when the SCell hibernation timer associated with the activated SCell expires, the MAC entity may: hibernate the SCell; stop the SCell deactivation timer associated with the SCell; stop the SCell hibernation timer associated with the SCell; and/or flush all HARQ buffers associated with the SCell. In an example, when a dormant SCell deactivation timer associated with a dormant SCell expires, the MAC entity may: deactivate the SCell; and/or stop the dormant SCell deactivation timer associated with the SCell. In an example, when an SCell is in dormant state, ongoing random access procedure on the SCell may be aborted.

Examples of QCL will be discussed. A base station may configure a wireless device with one or more TCI-States by higher layer signaling. A number of the one or more TCI states may depend on a capability of the wireless device. The wireless device may use the one or more TCI-States to decode a PDSCH according to a detected PDCCH. Each of the one or more TCI-States state may include one RS set TCI-RS-SetConfig. The one RS set TCI-RS-SetConfig may contain one or more parameters. In an example, the one or more parameters may be used to configure quasi co-location relationship between one or more reference signals in the RS set and the DM-RS port group of the PDSCH. The one RS set may contain a reference to either one or two DL RSs and an associated quasi co-location type (QCL-Type) for each one configured by the higher layer parameter QCL-Type. For the case of the two DL RSs, the QCL types may not be the same. In an example, the references of the two DL RSs may be to the same DL RS or different DL RSs. The quasi co-location types indicated to the UE may be based on a higher layer parameter QCL-Type. The higher layer parameter QCL-Type may take one or a combination of the following types: QCL-TypeA': {Doppler shift, Doppler spread, average delay, delay spread}; QCL-TypeB': {Doppler shift, Doppler spread}; QCL-TypeC': {average delay, Doppler shift} and QCL-TypeD': {Spatial Rx parameter}.

In an example, a wireless device may receive an activation command. The activation command may be used to map one or more TCI states to one or more codepoints of the DCI field Transmission Configuration Indication (TCI). After the wireless device receives a higher layer configuration of TCI states and before reception of the activation command, the wireless device may assume that one or more antenna ports of one DM-RS port group of PDSCH of a serving cell are spatially quasi co-located with an SSB. In an example, the SSB may be determined in an initial access procedure with respect to Doppler shift, Doppler spread, average delay, delay spread, spatial Rx parameters, where applicable.

In an example, a wireless device may be configured, by a base station, with a higher layer parameter TCI-PresentInDCI. When the higher layer parameter TCI-PresentInDCI is set as 'Enabled' for a CORESET scheduling a PDSCH, the wireless device may assume that the TCI field is present in a DL DCI of a PDCCH transmitted on the CORESET. When the higher layer parameter TCI-PresentInDCI is set as 'Disabled' for a CORESET scheduling a PDSCH or the PDSCH is scheduled by a DCI format 1_0, for determining PDSCH antenna port quasi co-location, the wireless device may assume that the TCI state for the PDSCH is identical to the TCI state applied for the CORESET used for the PDCCH transmission.

When the higher layer parameter TCI-PresentinDCI is set as 'Enabled', the wireless device may use one or more TCI-States according to a value of the 'Transmission Configuration Indication' field in the detected PDCCH with DCI for determining PDSCH antenna port quasi co-location. The wireless device may assume that the antenna ports of one DM-RS port group of PDSCH of a serving cell are quasi co-located with one or more RS(s) in the RS set with respect to the QCL type parameter(s) given by the indicated TCI state if the time offset between the reception of the DL DCI and the corresponding PDSCH is equal to or greater than a threshold Threshold-Sched-Offset. In an example, the threshold may be based on UE capability. When the higher layer parameter TCI-PresentInDCI = 'Enabled' and the higher layer parameter TCI-PresentInDCI = 'Disabled', if the offset between the reception of the DL DCI and the corresponding PDSCH is less than the threshold Threshold-Sched-Offset, the wireless device may assume that the antenna ports of one DM-RS port group of PDSCH of a serving cell are quasi co-located based on the TCI state used for PDCCH quasi co-location indication of the lowest CORESET-ID in the latest slot in which one or more CORESETs are configured for the UE. If all configured TCI states do not contain QCL-TypeD', the wireless device may obtain the other QCL assumptions from the indicated TCI states for its scheduled PDSCH irrespective of the time offset between the reception of the DL DCI and the corresponding PDSCH.

Examples of a BFR procedure will be discussed. A gNB and/or a wireless device may have multiple antenna, to support a transmission with high data rate in a NR system. When configured with multiple antennas, a wireless device may perform one or more beam management procedures, as shown in FIG. 9B.

A wireless device may perform a downlink beam management based on one or more CSI-RSs, and/or one or more SSBs. In a beam management procedure, a wireless device may measure a channel quality of a beam pair link. The beam pair link may comprise a transmitting beam from a gNB and a receiving beam at the wireless device. When configured with multiple beams associated with multiple CSI-RSs or SSBs, a wireless device may measure the multiple beam pair links between the gNB and the wireless device.

In an example, a wireless device may transmit one or more beam management reports to a gNB. In a beam management report, the wireless device may indicate one or more beam pair quality parameters, comprising at least, one or more beam identifications; RSRP; PMI/CQI/RI of at least a subset of configured multiple beams.

In an example, a gNB and/or a wireless device may perform a downlink beam management procedure on one or multiple Transmission and Receiving Point (TRPs), as shown in FIG. 9B. Based on a wireless device's beam management report, a gNB may transmit to the wireless device a signal indicating that a new beam pair link is a serving beam. The gNB may transmit PDCCH and PDSCH to the wireless device using the serving beam.

In an example, a wireless device or a gNB may trigger a beam failure recovery mechanism. A wireless device may trigger a beam failure recovery (BFR) procedure, e.g., when at least a beam failure occurs. In an example, a beam failure may occur when quality of beam pair link(s) of at least one PDCCH falls below a threshold. The threshold may be a RSRP value (e.g., -140dbm, -110dbm) or a SINR value (e.g., -3dB, -1dB), which may be configured in a RRC message.

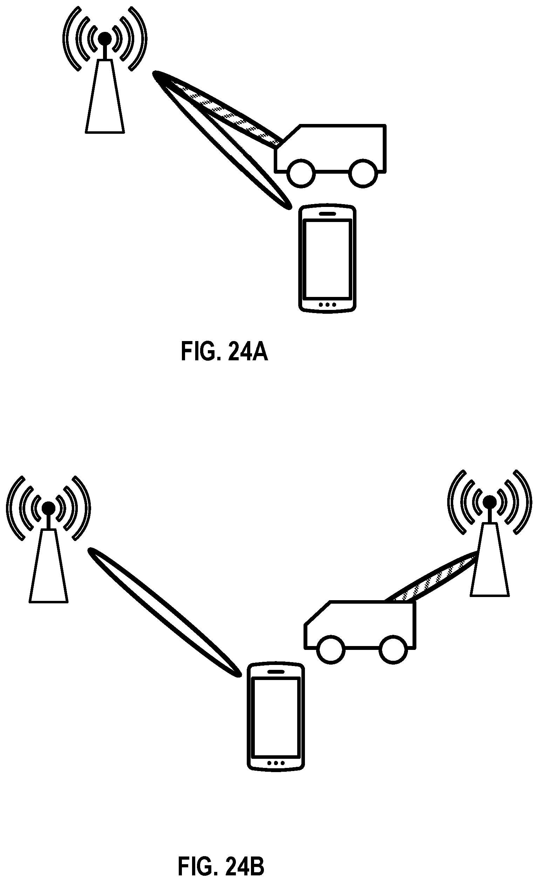

FIG. 24A shows example of a first beam failure scenario. In the example, a gNB may transmit a PDCCH from a transmission (Tx) beam to a receiving (Rx) beam of a wireless device from a TRP. When the PDCCH on the beam pair link (between the Tx beam of the gNB and the Rx beam of the wireless device) have a lower-than-threshold RSRP/SINR value due to the beam pair link being blocked (e.g., by a moving car or a building), the gNB and the wireless device may start a beam failure recovery procedure on the TRP.

FIG. 24B shows example of a second beam failure scenario. In the example, the gNB may transmit a PDCCH from a beam to a wireless device from a first TRP. When the PDCCH on the beam is blocked, the gNB and the wireless device may start a beam failure recovery procedure on a new beam on a second TRP.

In an example, a wireless device may measure quality of beam pair link using one or more RSs. The one or more RSs may be one or more SSBs, or one or more CSI-RS resources. A CSI-RS resource may be identified by a CSI-RS resource index (CRI). In an example, quality of beam pair link may be defined as a RSRP value, or a reference signal received quality (e.g. RSRQ) value, and/or a CSI (e.g., SINR) value measured on RS resources. In an example, a gNB may indicate whether an RS resource, used for measuring beam pair link quality, is QCLed (Quasi-Co-Located) with DM-RSs of a PDCCH. The RS resource and the DM-RSs of the PDCCH may be called QCLed when the channel characteristics from a transmission on an RS to a wireless device, and that from a transmission on a PDCCH to the wireless device, are similar or same under a configured criterion. In an example, The RS resource and the DM-RSs of the PDCCH may be called QCLed when doppler shift and/or doppler shift of the channel from a transmission on an RS to a wireless device, and that from a transmission on a PDCCH to the wireless device, are same.

In an example, a wireless device may monitor PDCCH on *M* beam (e.g. 2, 4, 8) pair links simultaneously, where *M*≥1 and the value of *M* may depend at least on capability of the wireless device. In an example, monitoring a PDCCH may comprise detecting a DCI via the PDCCH transmitted on common search spaces and/or wireless device specific search spaces. In an example, monitoring multiple beam pair links may increase robustness against beam pair link blocking. In an example, a gNB may transmit one or more messages comprising parameters indicating a wireless device to monitor PDCCH on different beam pair link(s) in different OFDM symbols.

In an example, a gNB may transmit one or more RRC messages or MAC CEs comprising parameters indicating Rx beam setting of a wireless device for monitoring PDCCH on multiple beam pair links. A gNB may transmit an indication of spatial QCL between an DL RS antenna port(s) and DL RS antenna port(s) for demodulation of DL control channel. In an example, the indication may be a parameter in a MAC CE, or an RRC message, or a DCI, and/or combination of these signaling.

In an example, for reception of data packet on a PDSCH, a gNB may indicate spatial QCL parameters between DL RS antenna port(s) and DM-RS antenna port(s) of DL data channel. A gNB may transmit DCI comprising parameters indicating the RS antenna port(s) QCL-ed with DM-RS antenna port(s).

In an example, when a gNB transmits a signal indicating QCL parameters between CSI-RS and DM-RS for PDCCH, a wireless device may measure a beam pair link quality based on CSI-RSs QCLed with DM-RS for PDCCH. In an example, when multiple contiguous beam failures occur, the wireless device may start a BFR procedure.

In an example, a wireless device transmits a BFR signal on an uplink physical channel to a gNB when starting a BFR procedure. The gNB may transmit a DCI via a PDCCH in a coreset in response to receiving the BFR signal on the uplink physical channel. The wireless may consider the BFR procedure successfully completed when receiving the DCI via the PDCCH in the coreset.

In an example, a gNB may transmit one or more messages comprising configuration parameters of an uplink physical channel or signal for transmitting a beam failure recovery request. The uplink physical channel or signal may be based on one of: a contention-free PRACH (BFR-PRACH), which may be a resource orthogonal to resources of other PRACH transmissions; a PUCCH (BFR-PUCCH); and/or a contention-based PRACH resource (CF-PRACH). Combinations of these candidate signal/channels may be configured by the gNB. In an example, when configured with multiple resources for a BFR signal, a wireless device may autonomously select a first resource for transmitting the BFR signal. In an example, when configured with a BFR-PRACH resource, a BFR-PUCCH resource, and a CF-PRACH resource, the wireless device may select the BFR-PRACH resource for transmitting the BFR signal. In an example, when configured with a BFR-PRACH resource, a BFR-PUCCH resource, and a CF-PRACH resource, the gNB may transmit a message to the wireless device indicating a resource for transmitting the BFR signal.

In an example, a gNB may transmit a response to a wireless device after receiving one or more BFR signals. The response may comprise the CRI associated with the candidate beam the wireless device indicates in the one or multiple BFR signals.

### Example of a BFR procedure.

In an NR system, when configured with multiple beams, a gNB and/or a wireless device may perform one or more beam management procedure. For example, the wireless device may perform a BFR procedure, if one or more beam pair links between the gNB and the wireless device fail.

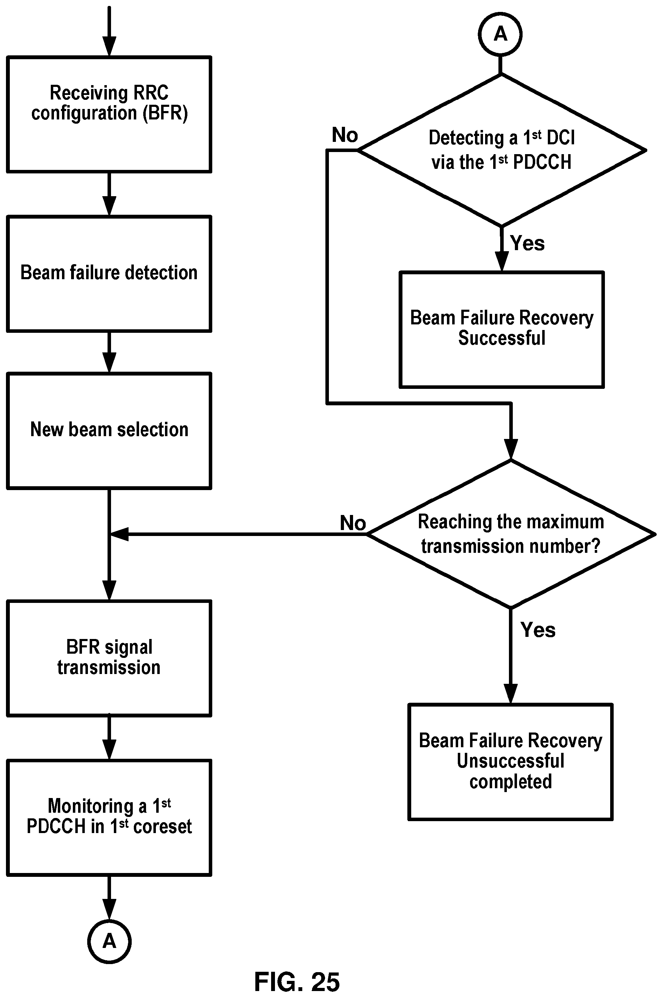

FIG. 25 shows an example flowchart of the BFR procedure. A wireless device may receive one or more RRC messages comprising BFR parameters. The one or more RRC messages may comprise an RRC message (e.g. RRC connection reconfiguration message, or RRC connection reestablishment message, or RRC connection setup message). The wireless device may detect at least one beam failure according to at least one of BFR parameters. The wireless device may start a first timer if configured in response to detecting the at least one beam failure. The wireless device may select a selected beam in response to detecting the at least one beam failure. The selected beam may be a beam with good channel quality (e.g., RSRP, SINR, or BLER) from a set of candidate beams. The candidate beams may be identified by a set of reference signals (e.g., SSBs, or CSI-RSs). The wireless device may transmit at least a first BFR signal to a gNB in response to the selecting the selected beam. The at least first BFR signal may be associated with the selected beam. The at least first BFR signal may be a preamble transmitted on a PRACH resource, or a beam failure request (e.g., similar to scheduling request) signal transmitted on a PUCCH resource, or a beam indication transmitted on a PUCCH/PUSCH resource. The wireless device may transmit the at least first BFR signal with a transmission beam corresponding to a receiving beam associated with the selected beam. The wireless device may start a response window in response to transmitting the at least first BFR signal. In an example, the response window may be a timer with a value configured by the gNB. When the response window is running, the wireless device may monitor a PDCCH in a first coreset. The first coreset may be associated with the BFR procedure. In an example, the wireless device may monitor the PDCCH in the first coreset in condition of transmitting the at least first BFR signal. The wireless device may receive a first DCI via the PDCCH in the first coreset when the response window is running. The wireless device may consider the BFR procedure successfully completed when receiving the first DCI via the PDCCH in the first coreset before the response window expires. The wireless device may stop the first timer if configured in response to the BFR procedure successfully being completed. The wireless device may stop the response window in response to the BFR procedure successfully being completed.

In an example, when the response window expires, and the wireless device does not receive the DCI, the wireless device may increment a transmission number, wherein, the transmission number is initialized to a first number (e.g., 0) before the BFR procedure is triggered. If the transmission number indicates a number less than the configured maximum transmission number, the wireless device may repeat one or more actions comprising at least one of: a BFR signal transmission; starting the response window; monitoring the PDCCH; incrementing the transmission number if no response received during the response window is running. If the transmission number indicates a number equal or greater than the configured maximum transmission number, the wireless device may declare the BFR procedure is unsuccessfully completed.

A MAC entity of a wireless device may be configured by an RRC with a beam failure recovery procedure. The beam failure recovery procedure may be used for indicating to a serving base station of a new (e.g., candidate) SSB or CSI-RS when a beam failure is detected. The beam failure may be detected on one or more serving SSB(s)/CSI-RS(s) of the serving base station. In an example, the beam failure may be detected by counting a beam failure instance indication from a lower layer of the wireless device (e.g. PHY layer) to the MAC entity.

In an example, an RRC may configure a wireless device with one or more parameters in BeamFailureRecoveryConfig for a beam failure detection and recovery procedure. The one or more parameters may comprise at least: beamFailureInstanceMaxCount for a beam failure detection; beamFailureDetectionTimer for the beam failure detection; beamFailureRecovery Timer for the beam failure recovery procedure; rsrp-ThresholdSSB: an RSRP threshold for a beam failure recovery; PowerRampingStep for the beam failure recovery; preambleReceivedTargetPower for the beam failure recovery; preambleTxMax for the beam failure recovery; and ra-ResponseWindow. The ra-ResponseWindow may be a time window to monitor one or more responses for the beam failure recovery using a contention-free Random Access preamble.

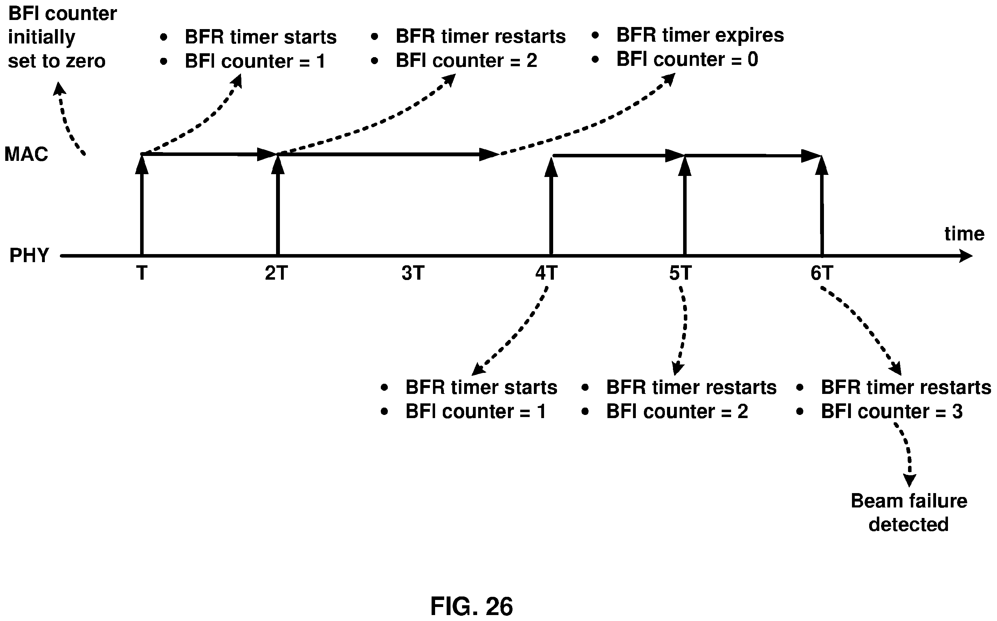

FIG. 26 shows an example of beam failure instance (BFI) indication. In an example, a wireless device may use at least one UE variable for a beam failure detection. BFI_COUNTER may be one of the at least one UE variable. The BFI_COUNTER may be a counter for a beam failure instance indication. The BFI_COUNTER may be initially set to zero.

In an example, if a MAC entity of a wireless device receives a beam failure instance indication from a lower layer (e.g. PHY) of the wireless device, the wireless device may start or restart beamFailureDetectionTimer (e.g., BFR timer in FIG. 26). In addition to starting or restarting the beamFailureDetectionTimer, the wireless device may increment BFI_COUNTER by one (e.g., at time T, 2T, 5T in FIG. 26).

In an example, if configured with BeamFailureRecoveryConfig, the wireless device may initiate a random access procedure (e.g. on an SpCell) for a beam failure recovery in response to the BFI_COUNTER being equal or greater than the beamFailureInstanceMaxCount. In an example, if configured with BeamFailureRecoveryConfig, the wireless device may start the beamFailureRecovery Timer (if configured) in response to the BFI _COUNTER being equal or greater than the beamFailureInstanceMaxCount. The wireless device may apply the one or more parameters in the BeamFailureRecoveryConfig (e.g., powerRampingStep, preambleReceivedTargetPower, and preambleTransMax) in response to the initiating the random access procedure. In an example, the random access procedure may be contention-free random access procedure.

In an example, if not configured with BeamFailureRecoveryConfig, the wireless device may initiate a random access procedure (e.g. on an SpCell) for a beam failure recovery in response to the BFI_COUNTER being equal or greater than the beamFailureInstanceMaxCount. In an example, the random access procedure may be contention-based random access procedure.

In an example, in FIG. 26, the wireless device may initiate the random access procedure at time 6T, when the first number (e.g., 3) is reached.

In an example, if the beamFailureDetectionTimer expires, the wireless device may set the BFI_COUNTER to zero (e.g., in FIG. 26, between time 3T and 4T).

In an example, if the random access procedure (e.g., contention-free random access or contention-based random access) is successfully completed, the wireless device may consider the beam failure recovery procedure successfully completed.

In an example, if the random access procedure (e.g., contention-free random access) is successfully completed, the wireless device may stop the beamFailureRecovery Timer (if configured).

If a MAC entity of a wireless device transmits a contention-free random access preamble for a beam failure recovery request, the MAC entity may start ra-ResponseWindow at a first PDCCH occasion from the end of the transmitting the contention-free random access preamble. The ra-ResponseWindow may be configured in BeamFailureRecoveryConfig. While the ra-ResponseWindow is running, the wireless device may monitor at least one PDCCH (e.g. of an SpCell) for a response to the beam failure recovery request. The beam failure recovery request may be identified by a C-RNTI.

In an example, if a MAC entity of a wireless device receives, from a lower layer of the wireless device, a notification of a reception of at least one PDCCH transmission and if the at least one PDCCH transmission is addressed to a C-RNTI and if a contention-free random access preamble for a beam failure recovery request is transmitted by the MAC entity, the wireless device may consider a random access procedure successfully completed.

In an example, a wireless device may initiate a contention-based random access preamble for a beam failure recovery request. When the wireless device transmits Msg3, a MAC entity of the wireless device may start ra-ContentionResolutionTimer. The ra-ContentionResolutionTimer may be configured by RRC. In response to the starting the ra-ContentionResolutionTimer, the wireless device may monitor at least one PDCCH while the ra-ContentionResolutionTimer is running. In an example, if the MAC entity receives, from a lower layer of the wireless device, a notification of a reception of the at least one PDCCH transmission; if a C-RNTI MAC-CE is included in the Msg3; if a random access procedure is initiated for a beam failure recovery and the at least one PDCCH transmission is addressed to a C-RNTI of the wireless device, the wireless device may consider the random access procedure successfully completed. In response to the random access procedure being successfully completed, the wireless device may stop the ra-ContentionResolutionTimer.

In an example, if a random access procedure of a beam failure recovery is successfully completed, the wireless device may consider the beam failure recovery successfully completed.

Examples of a BFR procedure will be discussed. A wireless device may be configured, for a serving cell, with a first set of periodic CSI-RS resource configuration indexes by higher layer parameter Beam-Failure-Detection-RS-ResourceConfig (e.g., failureDetectionResources). The wireless device may further be configured with a second set of CSI-RS resource configuration indexes and/or SS/PBCH block indexes by higher layer parameter Candidate-Beam-RS-List (e.g., candidateBeamRSList). In an example, the first set and/or the second set may be used for radio link quality measurements on the serving cell. If a wireless device is not provided with higher layer parameter Beam-Failure-Detection-RS-ResourceConfig, the wireless device may determine a first set to include SS/PBCH block indexes and periodic CSI-RS resource configuration indexes. In an example, the SS/PBCH block indexes and the periodic CSI-RS resource configuration indexes may be with same values as one or more RS indexes in one or more RS sets. In an example, the one or more RS indexes in the one or more RS sets may be indicated by one or more TCI states. In an example, the one or more TCI states may be used for respective control resource sets that the wireless device is configured for monitoring PDCCH. The wireless device may expect a single port RS in the first set.

In an example, the wireless device may expect the first set of periodic CSI-RS resource configurations to include up to two RS indexes. In an example, if the first set of periodic CSI-RS resource configurations includes two RS indexes, the first set of periodic CSI-RS resource configurations may include one or more RS indexes with QCL-TypeD configuration. In an example, the wireless device may expect a single port RS in the first set of periodic CSI-RS resource configurations.

In an example, a first threshold (e.g. Qout,LR) may correspond to a first default value of higher layer parameter RLM-IS-OOS-thresholdConfig (e.g., rlmInSyncOutOfSyncThreshold). In an example, a second threshold (e.g. Qin,LR) may correspond to a second default value of higher layer parameter Beam-failure-candidate-beam-threshold (e.g., rsrp-ThresholdSSB).

In an example, a physical layer in the wireless device may assess a first radio link quality according to the first set of periodic CSI-RS resource configurations against the first threshold. For the first set, the wireless device may assess the first radio link quality according to periodic CSI-RS resource configurations or SS/PBCH blocks. In an example, the periodic CSI-RS resource configurations or the SS/PBCH blocks may be associated (e.g. quasi co-located) with at least one DM-RS of PDCCH receptions monitored by the wireless device.

In an example, the wireless device may apply the second threshold to a first L1-RSRP measurement obtained from one or more SS/PBCH blocks. In an example, the wireless device may apply the second threshold to a second L1-RSRP measurement obtained for one or more periodic CSI-RS resources after scaling a respective CSI-RS reception power with a value provided by higher layer parameter Pc_SS (e.g., powerControlOffsetSS).

In an example, a wireless device may assess the first radio link quality of the first set. A physical layer in the wireless device may provide an indication to higher layers (e.g. MAC) when the first radio link quality for all corresponding resource configurations in the first set is worse (e.g., higher BLER, lower SINR, lower L1-RSRP, etc.) than the first threshold. In an example, the wireless device may use the all corresponding resource configurations in the first set to assess the first radio link quality. The physical layer may inform the higher layers (e.g. MAC, RRC) when the first radio link quality is worse than the first threshold with a first periodicity. The first periodicity may be determined by the maximum between the shortest periodicity of periodic CSI-RS configurations or SS/PBCH blocks in the first set and X (e.g. 2 msec). In an example, the wireless device may assess the periodic CSI-RS configurations or the SS/PBCH blocks for the first radio link quality.

In an example, in response to a request from higher layers (e.g. MAC), a wireless device may provide to the higher layers the periodic CSI-RS configuration indexes and/or the SS/PBCH blocks indexes from the second set. The wireless device may further provide, to the higher layers, corresponding L1-RSRP measurements that are larger than or equal to the second threshold.

A wireless device may be provided/configured with a control resource set (coreset) through a link to a search space set. In an example, the search space set may be provided by higher layer parameter recoverySearchSpaceId. The search space may be used for monitoring PDCCH in the control resource set. In an example, if the wireless device is provided by the higher layer parameter recoverySearchSpaceId, the wireless device may not expect to be provided with a second search space set for monitoring the coreset. In an example, the coreset may be associated with the search space set provided by the higher layer parameter recoverySearchSpaceId.

The wireless device may receive from higher layers (e.g. MAC), by parameter PRACH-ResourceDedicatedBFR, a configuration for a PRACH transmission. For the PRACH transmission in slot n and according to antenna port quasi co-location parameters associated with periodic CSI-RS configuration or SS/PBCH block with a first RS index, the wireless device may monitor the PDCCH in a search space set (e.g., provided by the higher layer parameter recoverySearchSpaceId) for detection of a DCI format starting from slot n+4 within a window. The window may be configured by higher layer parameter BeamFailureRecoveryConfig. The DCI format may be with CRC scrambled by C-RNTI. In an example, the first RS index may be provided by the higher layers.

In an example, for the PDCCH monitoring and for the corresponding PDSCH reception, the wireless device may assume the same antenna port quasi-collocation parameters with the first RS index (e.g. as for monitoring the PDCCH) until the wireless device receives by higher layers an activation for a TCI state or a parameter TCI-StatesPDCCH-ToAddlist and/or TCI-StatesPDCCH-ToReleaseList

In an example, after the wireless device detects the DCI format with CRC scrambled by the C-RNTI in the search space set (e.g., provided by the higher layer parameter recoverySearchSpaceId), the wireless device may monitor PDCCH candidates in the search space set until the wireless device receives a MAC-CE activation command for a TCI state or a higher layer parameters TCI-StatesPDCCH-ToAddlist and/or TCI-StatesPDCCH-ToReleaseList.

In an example, if the wireless device is not provided with a coreset for a search space set (e.g., provided by a higher layer parameter recoverySearchSpaceId), the wireless device may not expect to receive a PDCCH order triggering a PRACH transmission. In an example, the wireless device may initiate a contention-based random-access procedure for a beam failure recovery in response to not being provided with the coreset.

In an example, if the wireless device is not provided with a higher layer parameter recoverySearchSpaceId, the wireless device may not expect to receive a PDCCH order triggering a PRACH transmission. In an example, the wireless device may initiate a contention-based random-access procedure for a beam failure recovery in response to not being provided with the higher layer parameter recoverySearchSpaceId.

In an example, a wireless device may be provided, for a cell (e.g., SCell, PCell, BWP), with a first set of reference signal (RS) resources (e.g., SSB, CSI-RS) by a first higher layer parameter (e.g., failureDetectionResources).

In an example, the wireless device may be further provided, for the cell, with a first threshold by a second higher layer parameter (e.g., rlmInSyncOutOfSyncThreshold).

In an example, the wireless device may further be provided, for the cell, with one or more parameters by a third higher layer parameter (e.g., BeamFailureRecoveryConfig). The third higher layer parameter may be for a beam failure detection and/or a beam failure recovery procedure of the cell. In an example, the one or more parameters may comprise at least: beamFailureInstanceMaxCount for the beam failure detection, beamFailureDetectionTimer for the beam failure detection, and beamFailureRecovery Timer for the beam failure recovery procedure.

In an example, a physical layer in the wireless device may assess a first radio link quality (e.g., BLER, L1- RSRP) according to the first set of RS resources against the first threshold. The physical layer may provide a beam failure instance (BFI) indication to a medium-access (MAC) entity of the wireless device when the first radio link quality is worse (e.g., higher BLER, lower SINR, lower L1-RSRP, etc.) than the first threshold.

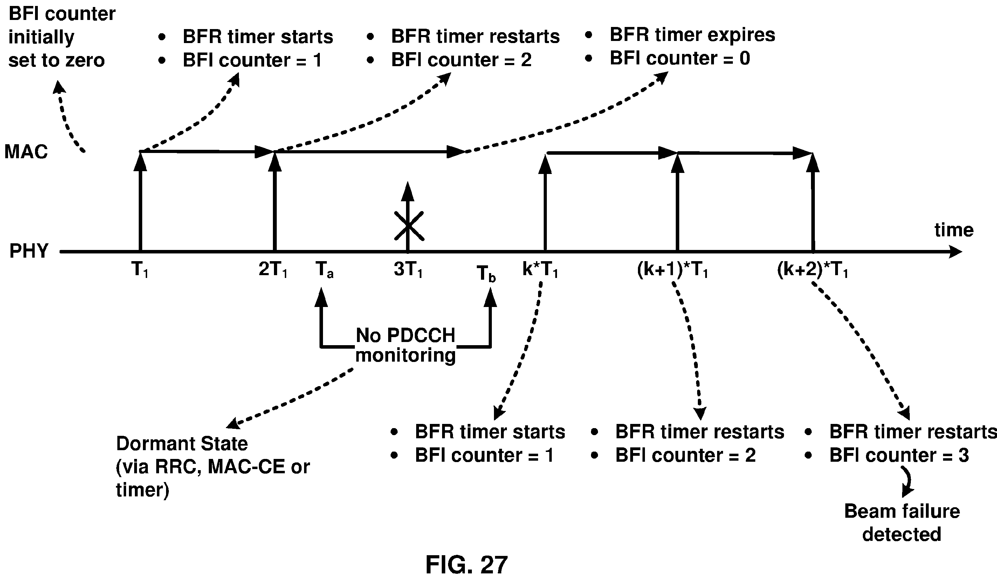

In an example, the physical layer may provide the BFI indication to the MAC entity with a first periodicity. The first periodicity may be determined by a maximum of a period of an RS of the first set of RS resources and a second value (e.g. 2 msec). In an example, the RS may have the shortest periodicity among the first set of RS resources. In an example, the second value may be configured by higher layers (e.g., RRC). In an example, the second value may be predefined/fixed. In an example, in FIG. 27, the periodicity is T1.

In an example, in response to receiving the BFI indication from the physical layer, the MAC entity may increment BFI_COUNTER (e.g., BFI counter in FIG. 26) by one. The BFI_COUNTER may be a variable used by the wireless device. The BFI_COUNTER may be a counter for a BFI indication. The BFI_COUNTER may be initially set to zero.

In an example, the MAC entity may start or restart the beamFailureDetectionTimer in response to receiving the BFI indication from the physical layer.

In an example, the beamFailureDetectionTimer may expire. The wireless device may set the BFI _COUNTER to zero in response to the beamFailureDetectionTimer expiring.

In an example, if configured with the third higher layer parameter, the wireless device may initiate a random access procedure for a beam failure recovery of the cell in response to the BFI_COUNTER being equal to or greater than the beamFailureInstanceMaxCount.

In an example, if configured with the third higher layer parameter, the wireless device may start the beamFailureRecovery Timer (if configured) in response to the initiating the random access procedure (or in response to the BFI_COUNTER being equal to or greater than the beamFailureInstanceMaxCount). In an example, the random access procedure may be a contention-free random access procedure.

In an example, if not configured with the third higher layer parameter, the wireless device may initiate a random access procedure for a beam failure recovery in response to the BFI_COUNTER being equal to or greater than the beamFailureInstanceMaxCount. In an example, the random access procedure may be a contention-based random access procedure.

In an example, a base station may configure a wireless device with one or more cells comprising a cell (e.g., SCell). In an example, the base station may activate, hibernate, or deactivate the cell.

In an example, the base station may transmit, to the wireless device, one or more MAC CE(s), for transition of the cell into dormant state (e.g., FIG. 22). In response to receiving the one or more MAC CE(s), the wireless device may transition the cell into dormant state.

In an example, the base station may transmit one or more RRC messages comprising parameters. The parameters may indicate a scell state indicator (e.g., sCellState) associated with the cell. In an example, the scell state indicator may be set to dormant state. In response to the scell state indicator being set to dormant state, the wireless device may transition the cell into dormant state.

In an example, an SCell hibernation timer (e.g., sCellHibernationTimer) associated with the cell may expire. In response to the SCell hibernation timer expiring, the wireless device may transition the cell into dormant state (e.g., FIG. 23).

In an example, when the cell is in dormant state, the wireless device may not monitor PDCCH on the cell. In an example, when the cell is in dormant state, the wireless device may not monitor PDCCH for the cell.

In an example, the wireless device may (re-)start a dormant SCell deactivation timer (e.g., *dormantSCellDeactivationTimer)* of the cell in response to the transiting the cell into dormant state.

FIG. 27 shows an example embodiment. In an example, at time Tₐ, the wireless device may transit the cell into dormant state. In an example, the wireless device may not monitor PDCCH in the dormant state (e.g., between Tₐ and T_{b} in FIG. 27). The wireless device may not receive one or more downlink signals in the dormant state (e.g., between Ta and Tb in FIG. 27). The wireless device may not asses the first radio link quality according to the first set of RS resources against the first threshold in the dormant state (e.g., between Ta and Tb in FIG. 27).

In an example, the wireless device may not perform a beam failure detection in the dormant state. The beam failure detection may comprise assessing the first radio link quality according to the first set of RS resources against the first threshold. In an example, a duration of the dormant state may be long (e.g., 50, 100, 500 msec). In an example, the not performing the beam failure detection may enhance power saving of the wireless device.

In an example, in the dormant state, the wireless device may asses a second radio link quality of a subset of the first set of RS resources. In an example, a BFI indication based on the second radio link quality may not be reliable.

In an example, an instance of the BFI indication may be within the dormant state (e.g., 3T1 in FIG. 27). In an example, the physical layer may not send a BFI indication to the MAC entity (e.g., at 3T₁ in FIG. 27) when the wireless device is not monitoring PDCCH. In an example, the physical layer may not send a BFI indication for the cell to the MAC entity (e.g., at 3T₁ in FIG. 27) when the wireless device is in dormant state (e.g., between Ta and Tb in FIG. 27). In an example, the not sending the BFI indication may be in response to the not monitoring PDCCH in the dormant state.

In an example, the physical layer may not provide a BFI indication to the MAC entity in the dormant state (e.g., at 3T₁ in FIG. 27). In an example, beamFailureDetectionTimer (e.g., BFR timer in FIG. 27) may expire in response to not receiving the BFI indication (e.g., between 3T₁ and T_{b} in FIG. 27). In an example, the wireless device may set the BFI COUNTER to zero in response to the beamFailureDetectionTimer expiring. The setting the BFI_COUNTER to zero may delay an initiation of a beam failure recovery procedure for the cell. For example, in FIG. 27, the beam failure recovery may be initiated at time (k+2)*T₁ instead of at time k*T₁.

In an example, the first set RS resources may have a first radio link quality worse (e.g., higher BLER, lower SINR, lower L1-RSRP, etc.) than the first threshold in the dormant state. In that case, not providing the BFI indication in the dormant state may not reflect a true radio link quality of one or more downlink control channels associated (QCLed) with the first set of RS resources.

In an example, the physical layer may provide a BFI indication to the MAC entity in the dormant state. In an example, the BFI indication in the dormant state may be same as a previous BFI indication. In an example, in FIG. 27, in the dormant state, an instance of a BFI indication period may exist (e.g., at time 3T1). In an example, the physical layer may provide a BFI indication to the MAC entity in the dormant state (e.g., at time 3T1) if a second BFI indication was provided in the previous instance of a BFI indication period (e.g., at time 2T1). In an example, the physical layer may not provide a BFI indication to the MAC entity in the dormant state (e.g., at time 3T1) if a second BFI indication was not provided in the previous instance of a BFI indication period (e.g., at time 2T1).

In an example, providing the BFI indication in the dormant state may enable the BFI_COUNTER not to reset during the dormant state. In an example, not resetting the BFI_COUNTER during the dormant state may result in a faster BFR procedure. In an example, the BFI_COUNTER may reach to the beamFailureInstanceMaxCount faster. In an example, in response to the BFI_COUNTER being equal to or greater than the beamFailureInstanceMaxCount, the wireless device may initiate a random access procedure for a beam failure recovery. In an example, the initiating the random access may avoid radio link failure (RLF).

In an example, a physical layer of a wireless device may not provide a BFI indication to a MAC entity of the wireless device in the dormant state. In an example, beamFailureDetectionTimer may expire in response to the not providing the BFI indication. In an example, when the beamFailureDetectionTimer expires in the dormant state, the wireless device may not set the BFI_COUNTER to zero in response to the wireless device being in the dormant state.

In an example, a physical layer of a wireless device may not send a BFI indication to a MAC layer of the wireless device in the dormant state. In an example, beamFailureDetectionTimer may expire in response to the not providing the BFI indication. The wireless device may reset BFI_COUNTER to zero in response to the beamFailureDetectionTimer expiring.

In an example, the wireless device may stop/reset the beamFailureDetectionTimer in response to the wireless device being in the dormant state.

In an example, the wireless device may stop/reset the beamFailureDetectionTimer when the wireless device transits into the dormant state (e.g., Ta in FIG. 27).

In an example, the beamFailureDetectionTimer may not be running in the dormant state. The stopping/resetting the beamFailureDetectionTimer may avoid resetting the BFI_COUNTER to zero.

In an example, the wireless device may transition the cell into an active state from the dormant state. In an example, the transition may be triggered by one or more MAC-CEs (e.g., FIG. 22). In an example, in response to the transitioning the cell into the active state, the wireless device may restart the beamFailureDetectionTimer.

In an example, the wireless device may transition the cell into an inactive state (e.g., deactivated) from the dormant state. In an example, the transition may be triggered by one or more MAC-CEs (e.g., FIG. 22) or an expiry of a dormant SCell deactivation timer (e.g., FIG. 23). In an example, in response to the transitioning the cell into the inactive state, the wireless device may reset the beamFailureDetectionTimer. In an example, in response to the transitioning the cell into the inactive state, the wireless device may reset the BFI_COUNTER.

In an example, in response to transiting into the dormant state, the wireless device may restart the beamFailureDetectionTimer. The restarting the beamFailureDetectionTimer may enable the BFI_COUNTER not to reset to zero in the dormant state.

In an example, beamFailureDetectionTimer may expire in the dormant state. In an example, in response to the wireless device being in the dormant state, the wireless device may restart the beamFailureDetectionTimer. The restarting the beamFailureDetectionTimer may enable the BFI_COUNTER not to reset to zero in the dormant state.

In an example, in response to the restarting the beamFailureDetectionTimer, the physical layer may not provide a BFI indication to the MAC entity in the dormant state.

In an example, the wireless device may monitor a subset of the first set of RS resources between a previous instance of BFI indication period (e.g., 2T1 in FIG. 27) and a time (e.g., slot) the wireless device transits into the dormant state (e.g., Ta in FIG. 27).

In an example, the wireless device may monitor a subset of the first set of RS resources between a next instance of BFI indication period (e.g., k*T1 in FIG. 27) and a second time (e.g., slot) the wireless device transits out of the dormant state (e.g., (k+1)*T1 in FIG. 27).

In an example, the physical layer may provide a BFI indication to the MAC entity in response to the monitoring the subset if the wireless device assesses a second radio link quality of the subset of the one or more first RS resources worse (e.g., higher BLER, lower SINR, lower L1-RSRP, etc.) than the first threshold.

In an example, the physical layer may not provide a BFI indication to the MAC entity in response to the monitoring the subset if the wireless device assesses a second radio link quality of the subset of the one or more first RS resources better (e.g., lower BLER, higher SINR, higher L1-RSRP, etc.) than the first threshold.

In an example, the physical layer may provide a BFI indication to the MAC entity in response to the wireless device being in the dormant state (e.g., 3T1 in FIG. 27). The providing the BFI indication may enable the BFI_COUNTER not to reset to zero in the dormant state.

In an example, the BFI_COUNTER may be equal to or greater than the beamFailureInstanceMaxCount in response to the BFI indication. The wireless device may postpone/skip initiating a random access procedure for a beam failure recovery in the dormant state until the wireless device transits out of the dormant state (e.g., active state).

In an example, a wireless device may transition a cell into a dormant state. A dormant state may be a power saving state. In the dormant state, the wireless device may not monitor downlink control channels of the cell. In the dormant state, the wireless device may transmit, to a base station, a CSI report for the cell. In an example, the CSI report may be periodic. Based on not monitoring the downlink control channels in the dormant state, the wireless device may reduce power consumption during the dormant state. Based on transmitting the CSI report during the dormant state, the wireless device may reduce activation latency of the cell (e.g., faster SCell activation). In an example, the transitioning the cell from a deactivated state into an active state may take longer (e.g., 5ms, 10 ms) than transitioning the cell from the dormant state into the active state.

In a legacy system, a wireless device may initiate a beam failure recovery procedure in an activate state of a first cell. The wireless device may transmit an uplink signal (e.g., preamble, SR, MAC CE, and/or the like) for the beam failure recovery procedure, via a second cell, during the dormant state. In an example, the wireless device may monitor, for a downlink signal (e.g., DCI, random-access response, and/or the like) downlink control channels for the beam failure recovery procedure, via a second cell, during the dormant state. In an example, the second cell may be different from the first cell. In an example, the second cell and the first cell may be the same. The wireless device may transition into the dormant state (from the active state) during the beam failure recovery procedure. In existing systems, the wireless device may continue the beam failure recovery procedure, for the first cell, via the second cell when the first cell is in the dormant state. Implementation of existing beam failure recovery procedures based on transmitting the uplink signal and/or monitoring for the downlink signal for the beam failure recovery procedure during the dormant state may increase the power consumption at the wireless device and/or increase the uplink interference to other cells and/or wireless devices.

In an example system, a duration of the dormant state may be long (e.g., in seconds). A duration of a beam failure recovery procedure may be short (e.g., in milliseconds). Performing a beam failure recovery procedure and identifying a candidate beam for the beam failure recovery procedure during the dormant state may be inefficient. In an example, a quality of the candidate beam may degrade (e.g., quality lower than a threshold) during the dormant state based on the duration of the dormant state being longer than the duration of the beam failure recovery procedure. In an example, the base station may not serve (e.g., transmit and/or receive) the wireless device with the candidate beam identified during the dormant state when the cell is transitioned into an active state (e.g., the quality of the candidate beam may be lower when transitioned into the active state). Identifying the candidate beam may lead to increased power consumption (e.g., due to measuring the quality of a set of candidate beams). Serving the wireless device with a candidate beam with a low quality may increase the error rate and/or decrease the data rate resulting in a decreased quality of service.

There is a need to implement an enhanced procedure for a beam failure recovery procedure when a wireless device transitions a cell into a dormant state during the beam failure recovery procedure. Example embodiments implement an enhanced beam failure recovery procedure (e.g., when a wireless device transitions a cell into a dormant state during the beam failure recovery procedure). In an example, the wireless device may abort the beam failure recovery procedure when the wireless device transitions into the dormant state during the beam failure recovery procedure. In an example, the wireless device may stop transmitting an uplink signal, via a second cell, for the beam failure recovery procedure of the cell during the dormant state. In an example, the wireless device may stop monitoring downlink control channels, via second cell, for the beam failure recovery procedure of the cell during the dormant state. In an example, the wireless device may suspend the beam failure recovery procedure (e.g., stop the timers related to the beam failure recovery procedure until transitioning into an active time) when the wireless device transitions into the dormant state during the beam failure recovery procedure. This enhanced process reduces uplink overhead, interference and power consumption at the wireless device and/or the base station.

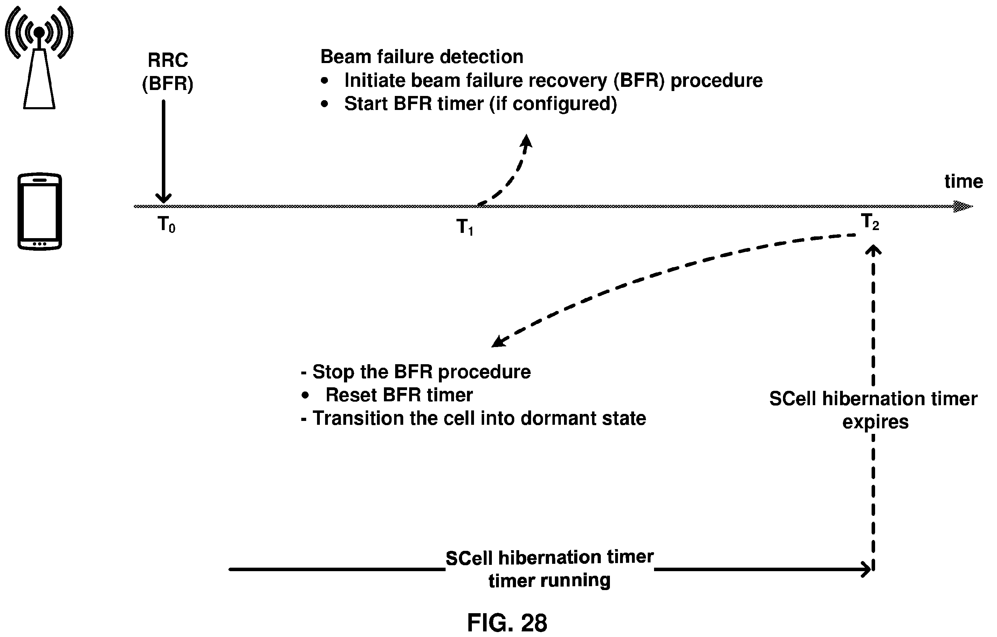

FIG. 28 shows an example embodiment. In an example, a wireless device may be configured with the first higher layer parameter, the second layer parameter and the third layer parameter (e.g., at time T0 in FIG. 28) for a cell.

In an example, the wireless device may initiate a random access procedure for a beam failure recovery of the cell in response to the BFI_COUNTER being equal to or greater than the beamFailureInstanceMaxCount (e.g., at time T1 in FIG. 28).

In an example, the wireless device may start, if configured, the beamFailureRecovery Timer (BFR timer in FIG. 28) in response to the initiating the random access procedure.

In an example, the wireless device may transition the cell into dormant state (e.g., time T2 in FIG. 28). In an example, the transitioning may be triggered in response to an SCell hibernation timer associated with the cell expiring (e.g., FIG. 23). In an example, the transitioning may be triggered in response to receiving one or more MAC CE(s) from the base station, for transition of the cell into dormant state (e.g., FIG. 22). In an example, the transitioning may be triggered in response to receiving one or more RRC messages comprising parameters from the base station. The parameters may indicate a scell state indicator set to dormant state.

In an example, in response to the transitioning the cell into dormant state, the wireless device may abort the random access procedure for the beam failure recovery of the cell. In an example, the wireless device may, if configured, reset/stop the beamFailureRecovery Timer in response to the aborting the random access procedure.

In an example, the wireless device may transmit at least first BFR signal (e.g., preamble) for the random access procedure. In response to the transmitting the at least first BFR signal, the wireless device may start a response window (e.g., ra-response-window). In an example, in response to the transitioning the cell into dormant state, the wireless device may stop the response window.

In an example, the wireless device may transmit at least first BFR signal (e.g., preamble) for the random access procedure. In response to the transmitting the at least first BFR signal, the wireless device may increment a transmission number (e.g., preamble transmission counter). In an example, the transmission number may be initialized to a first number (e.g., 0) in response to the initiating the random access procedure. In an example, in response to the transitioning the cell into dormant state, the wireless device may reset the transmission number to the first number (e.g., zero).

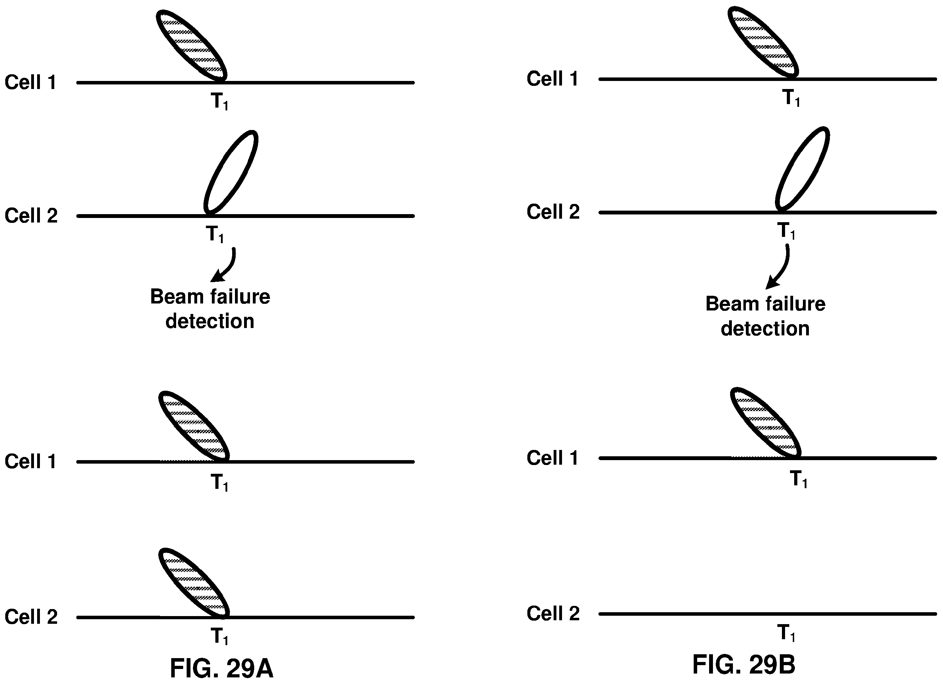

FIG. 29A and FIG. 29B show example embodiments. In an example, a base station may provide a wireless device with a first RS (e.g., SSB, CSI-RS) of the first set of RS resources of the cell (e.g., PCell, SCell, BWP). In an example, the first RS may have a first type QCL (e.g., QCL-TypeD).

In an example, the first RS may be used for radio link quality measurements for the cell. In an example, the wireless device may monitor the first RS for a beam failure detection of the cell. In an example, the first RS may be associated (e.g. QCL-ed) with at least one DMRS of PDCCH monitored by the wireless device on/for the cell.

In an example, a base station may configure a second RS of a second cell (e.g., SCell, BWP). In an example, the second RS may have a second type QCL (e.g., QCL-TypeA).

In an example, a first transmission of the first RS and a second transmission of the second RS may overlap (e.g., in at least one OFDM symbol, slot, frame at time T1 in FIG. 29A and FIG. 29B). In an example, the first RS (e.g., the first transmission) may be deemed more important than the second RS (e.g., the second transmission). The first RS may have a higher priority than the second RS.

In an example, in FIG. 29A, when the first type QCL and the second type QCL are not the same, the base station may override the second type QCL of the second cell. In an example, at time T1, in response to the overriding, the base station may apply the first type QCL of the first RS to the second transmission of the second RS. In an example, the base station may transmit the second RS with the first type QCL in response to the applying. In an example, at time T1, the base station may apply the first type QCL of the first RS to the first transmission of the cell.

In an example, when the first type QCL and the second type QCL are not the same, in response to the first RS being for the beam failure detection, the base station may apply the first type QCL of the first RS to the second transmission of the second RS. In an example, the base station may transmit the second RS with the first type QCL in response to the applying. In an example, the base station may apply the first type QCL of the first RS to the first transmission of the cell.

In an example, when the first type QCL and the second type QCL are not the same, in response to the first RS being for the beam failure detection, the wireless device may apply the first type QCL of the first RS to the second transmission of the second RS. In an example, the wireless device may receive the second RS with the first type QCL in response to the applying.

In an example, in FIG. 29B, when the first type QCL and the second type QCL are not the same, the base station may drop the second transmission of the second RS. In an example, at time T1, the base station may perform the first transmission of the first RS with the first type QCL. In an example, at time T1, the base station may drop (or skip) the second transmission of the second RS.

In an example, when the first type QCL and the second type QCL are not the same, in response to the first RS being for the beam failure detection, the base station may drop/skip the second transmission of the second RS. In an example, the base station may perform the first transmission of the first RS in response to the dropping.

In an example, the wireless device may expect to receive the first transmission of the first RS in response to the dropping.

In an example, the first transmission of the first RS of the cell and the second transmission of the second RS of the second cell may overlap (e.g., in at least one OFDM symbol, slot, frame, etc.). In an example, the first RS may have a first type QCL. In an example, the second RS may have a second type QCL.

In an example, the base station may drop/skip the first transmission of the first RS in response to the overlapping. In an example, the base station may not perform the first transmission in response to the dropping/skipping.

In an example, the base station may override the first transmission with a second type QCL in response to the overlapping. The overriding the first transmission with the second type QCL may comprise performing the first transmission of the first RS with the second type QCL.

In an example, a physical layer in the wireless device may assess the first radio link quality of the first RS worse (e.g., higher BLER, lower SINR, lower L1-RSRP) than the first threshold in response to the dropping/skipping or the overriding.

In an example, the physical layer may provide a BFI indication to a MAC entity of the wireless device in response to the assessing. In an example, in response to receiving the BFI indication from the physical layer, the MAC entity may increment BFI_COUNTER (e.g., BFI counter in FIG. 26) by one.

In an example, the wireless device may initiate a random access procedure for a beam failure recovery of the cell in response to the BFI_COUNTER being equal to or greater than the beamFailureInstanceMaxCount.

In an example, the dropping/skipping the first RS or the overriding the first transmission of the first RS with the second type QCL may result in initiating a random access procedure for a beam failure recovery of the cell earlier in time. The initiating the random access procedure for the beam failure recovery earlier in time may result in waste of resources. In an example, the first RS may have a good radio link quality. The wireless device may not assess the good radio link quality of the first RS in response to the dropping/skipping or the overriding. The initiating the random access procedure for the beam failure recovery earlier in time may result in initiating the random access procedure when the first radio link quality of the first RS is better (e.g., lower BLER, higher SINR, higher L1-RSRP) than the first threshold.

In an example, the cell may be a PCell, an SCell, a first bandwidth part (BWP) of a carrier. In an example, the second cell may be a PCell, an SCell, a second bandwidth part (BWP) of the carrier. In an example, the first BWP and the second BWP may be active simultaneously.

In an example, a wireless device may receive from a base station one or more messages. The one or more messages may comprise one or more configuration parameters of a cell. In an example, the one or more configuration parameters may indicate one or more reference signals (RSs) of the cell, a value of a beam failure instance counter and a threshold.

In an example, the one or more RSs may be SSBs and/or periodic CSI-RSs.

In an example, the threshold may be based on BLER or L1-RSRP or SINR.

In an example, a physical layer of the wireless device may assess a radio link quality of the one or more RSs. In an example, the physical layer may provide a beam failure instance (BFI) indication in response to the assessing the one or more RSs with the radio link quality worse (e.g., higher BLER, lower L1-RSRP, etc.) than the threshold.

In an example, the wireless device may initiate a random-access procedure for a beam failure recovery of the cell based on a number of BFI indications and the value. In an example, the number of BFI indications may be equal to or greater than the value.

In an example, the wireless device may start a beam failure recovery timer in response to the initiating the random access procedure. In an example, the one or more configuration parameters may further indicate the beam failure recovery timer.

In an example, the wireless device may transition the cell into a dormant state. In an example, the transitioning may be triggered in response to receiving, by the wireless device, one or more RRC messages comprising parameters from the base station. The parameters may indicate a scell state indicator. In an example, the scell state indicator may be set to dormant state. In an example, the transitioning may be triggered in response to an expiry of an SCell hibernation timer associated with the cell. In an example, the transitioning may be triggered in response to receiving one or more MAC CE(s) from the base station, for transition of the cell into dormant state.

In an example, the wireless device may abort the random-access procedure for the beam failure recovery in response to the transitioning the cell into the dormant state.

In an example, the wireless device may stop the beam failure recovery timer in response to the transitioning the cell into the dormant state.

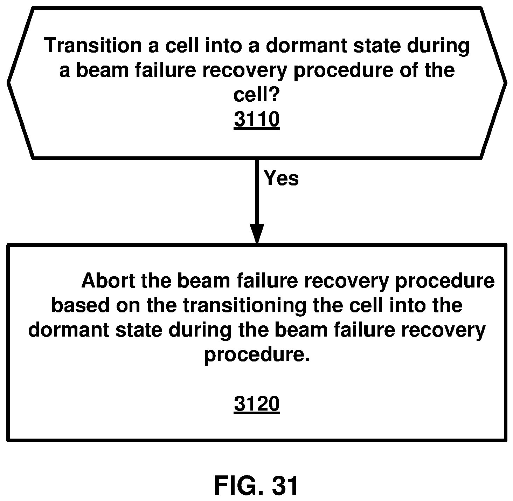

FIG. 31 is a flow diagram as per an aspect of an example embodiment of the present disclosure. At 3110, a wireless device may transition a cell into a dormant state during a beam failure recovery procedure of the cell. At 3120, the beam failure recovery procedure may be aborted based on the transitioning the cell into the dormant state during the beam failure recovery procedure.

According to an example embodiment, a wireless device may transition a bandwidth part (BWP) into a dormant state during a beam failure recovery procedure of the BWP. The beam failure recovery procedure may be aborted based on the transitioning the BWP into the dormant state during the beam failure recovery procedure.

According to an example embodiment, a wireless device may initiate a beam failure recovery procedure of a cell based on a beam failure detection for the cell. The cell may be transitioned into a dormant state during the beam failure recovery procedure. Based on the transitioning the cell into the dormant state during the beam failure recovery procedure, the beam failure recovery procedure may be aborted.

In an example, a wireless device may receive one or more messages. The one or more messages may comprise one or more configuration parameters of a cell. The wireless device may initiate a beam failure recovery procedure of the cell based on a beam failure detection for the cell. The cell may be transitioned into a dormant state during the beam failure recovery procedure. A channel state information for the cell may be reported in the dormant state. Based on the transitioning the cell into the dormant state during the beam failure recovery procedure, the beam failure recovery procedure may be aborted.

According to an example embodiment, transitioning the cell into the dormant state may be based on an expiry of a hibernation timer. According to an example embodiment, transitioning the cell into an inactive state may be based on an expiry of a cell-deactivation timer. According to an example embodiment, the one or more configuration parameters may indicate the hibernation timer for the cell. According to an example embodiment, the cell may be transitioned into an active state. Based on the transitioning the cell into the active state, the cell-deactivation timer may be started. Based on the transitioning the cell into the active state, the hibernation timer may be started. According to an example embodiment, the cell-deactivation timer may be stopped based on the transitioning the cell into the dormant state. According to an example embodiment, the hibernation timer may be stopped based on the transitioning the cell into the dormant state. According to an example embodiment, a dormant cell deactivation timer may be started based on the transitioning the cell into the dormant state. According to an example embodiment, transitioning the cell from the dormant state to the inactive state may be based on an expiry of the dormant cell deactivation timer. According to an example embodiment, transitioning the cell into an inactive state may be based on an expiry of a cell-deactivation timer when a hibernation timer is not configured. According to an example embodiment, transitioning the cell into the dormant state may be based on receiving one or more hibernation MAC-CE commands for the cell. According to an example embodiment, transitioning the cell into the dormant state may be based on receiving one or more radio resource control (RRC) commands indicating a scell state indicator set to the dormant state for the cell.

According to an example embodiment, monitoring downlink control channels for the cell may be stopped in the dormant state.

According to an example embodiment, the beam failure detection may be initiated. According to an example embodiment, the beam failure detection may be stopped based on the transitioning the cell into the dormant state. According to an example embodiment, the beam failure detection may comprise assessing a radio link quality of one or more reference signals of the cell with a quality lower than a threshold. According to an example embodiment, the beam failure detection may comprise providing a beam failure instance indication, by a physical layer of the wireless device, to a medium-access control layer of the wireless device. According to an example embodiment, the beam failure instance indication may comprise a radio link quality of one or more reference signals being lower than a threshold.

According to an example embodiment, the one or more configuration parameters may indicate a beam failure detection timer. According to an example embodiment, the beam failure detection timer may be stopped based on the transitioning the cell into the dormant state. According to an example embodiment, the beam failure detection timer may be restarted based on transitioning the cell into an active state from the dormant state. According to an example embodiment, the beam failure detection timer may be restarted based on the transitioning the cell into the dormant state.

According to an example embodiment, the one or more configuration parameters may indicate a beam failure recovery timer for the cell. According to an example embodiment, the beam failure recovery timer may be stopped based on the aborting the beam failure recovery procedure. According to an example embodiment, the beam failure recovery timer may be started based on the initiating the beam failure recovery procedure.

According to an example embodiment, the beam failure recovery procedure may comprise transmitting an uplink signal indicating the beam failure detection. According to an example embodiment, a counter may be incremented based on the transmitting the uplink signal. According to an example embodiment, the counter may be reset based on the aborting the beam failure recovery procedure.

According to an example embodiment, the cell may be deactivated. According to an example embodiment, the deactivating the cell may comprise stopping the reporting channel state information for the cell. According to an example embodiment, the deactivating may be in response to an expiry of a cell-deactivation timer. According to an example embodiment, the deactivating may be in response to receiving a deactivation MAC CE.

According to an example embodiment, the reporting a channel state information may comprise at least one of the following: a Channel Quality Indicator (CQI); a Pre-coding Matrix Indicator (PMI); a Rank Indicator (RI); or a channel state information reference signal resource Indicator (CRI).

According to an example embodiment, a wireless device may receive one or more messages comprising one or more configuration parameters of a cell. The one or more configuration parameters may indicate one or more reference signals (RSs) of the cell. The one or more configuration parameters may indicate a beam failure detection timer. The one or more configuration parameters may indicate a threshold. Based on measuring the one or more RSs with a radio link quality lower than the threshold, a beam failure instance indication may be determined. Based on the beam failure instance indication, the beam failure detection timer may be started. The cell may be transitioned into a dormant state. Based on the transitioning the cell into the dormant state, the beam failure detection timer may be stopped. The cell may be transitioned from the dormant state to an active state of the cell. Based on transitioning the cell from the dormant state to the active state of the cell, the beam failure detection timer may be restarted.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). A base station may comprise multiple sectors. When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, because those wireless devices or base stations perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed to one or more of the various embodiments.

If A and B are sets and every element of A is also an element of B, A is called a subset of B. In this specification, only non-empty sets and subsets are considered. For example, possible subsets of B = {cell1, cell2} are: {+cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may also refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, various embodiments are disclosed. Limitations, features, and/or elements from the disclosed example embodiments can be combined to create further embodiments.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Furthermore, many features presented above are described as being optional through the use of "may" or the use of parentheses. For the sake of brevity and legibility, the present disclosure does not explicitly recite each and every permutation that may be obtained by choosing from the set of optional features. However, the present disclosure is to be interpreted as explicitly disclosing all such permutations. For example, a system described as having three optional features may be embodied in seven different ways, namely with just one of the three possible features, with any two of the three possible features or with all three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (i.e. hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally, it may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The above mentioned technologies are often used in combination to achieve the result of a functional module.

While various embodiments have been described above, it should be understood that they have been presented by way of example, and not limitation. It will be apparent to persons skilled in the relevant art(s) that various changes in form and detail can be made therein to obtain further embodiments. In fact, after reading the above description, it will be apparent to one skilled in the relevant art(s) how to implement alternative embodiments. Thus, the present embodiments should not be limited by any of the above described exemplary embodiments.

In addition, it should be understood that any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

## Claims

1. A method comprising:
receiving, by a wireless device, one or more radio resource control, RRC, messages comprising beam failure detection parameters of a secondary cell, wherein the beam failure detection parameters indicate:
one or more channel state information reference signal, CSI-RS, of the secondary cell; and
a maximum beam failure instance count;
performing a beam failure detection of the secondary cell in a dormant state, charcterized in that the beam failure detection of the secondary cell is based on:
one or more radio link qualities of the one or more CSI-RS of the secondary cell;
a block error rate, BLER, threshold; and
the maximum beam failure instance count; and
performing a beam failure recovery of the secondary cell in the dormant state based on detecting a beam failure of the secondary cell.

2. The method of claim 1, further comprising receiving, by the wireless device, a control command comprising a dormancy indication field, wherein a value of the field indicates the dormant state for the secondary cell.

3. The method of claim 2, further comprising transitioning the secondary cell into the dormant state based on receiving the control command.

4. The method of claim 3, wherein, in response to the secondary cell being in the dormant state, the wireless device:
does not monitor physical downlink control channel, PDCCH, on the secondary cell;
does not monitor PDCCH for the secondary cell;
does not report CSI on the secondary cell; and
does not transmit sounding reference signals, SRSs, on the secondary cell.

5. The method of any one of claims 2 to 4, wherein the control command is a medium-access control control element, MAC-CE.

6. The method of any one of claims 2 to 5, wherein the value is one.

7. The method of any one of claims 2 to 6, further comprising receiving, by the wireless device, a second control command comprising a second dormancy indication field, wherein:
a value of the second dormancy indication field indicates an active state for the secondary cell.

8. The method of claim 7, further comprising transitioning the secondary cell into an active state based on the secondary cell activation field indicating the activation of the secondary cell.

9. The method of any one of claims 1 to 8, further comprising:
measuring the one or more radio link qualities of the one or more CSI-RS of the secondary cell for the beam failure detection of the secondary cell; and
incrementing a beam failure instance counter based a comparison of the one or more radio link qualities and the BLER threshold.

10. The method of claim 9, wherein the performing the beam failure recovery of the secondary cell is based on the beam failure instance counter reaching the maximum beam failure instance count.

11. The method of any one of claims 9 to 10, wherein the one or more beam failure detection parameters further indicate a beam failure detection timer.

12. The method of claim 11, further comprising:
resetting the beam failure detection timer based on the incrementing the beam failure instance counter; and
setting the beam failure instance counter to zero, based on the beam failure detection timer expiring.

13. The method of any one of claims 1 to 12, wherein the secondary cell transitions into the dormant state in response to an expiration of a secondary cell hibernation timer associated with the secondary cell.

14. A wireless device comprising:
one or more processors; and
memory storing instructions that, when executed by the one or more processors, cause the wireless device to perform the method of any one of claims 1 to 13.

15. A non-transitory computer-readable medium comprising instructions that, when executed by one or more processors of a wireless device, cause the wireless device to perform the method of any one of claims 1 to 13.

## Patentansprüche

1. Verfahren, umfassend:
Empfangen, durch eine drahtlose Vorrichtung, von einer oder mehreren Funkressourcensteuerungs-, RRC-, Nachrichten, die Parameter zur Erkennung eines Strahlausfalls einer Sekundärzelle umfassen, wobei die Parameter zur Erkennung eines Strahlausfalls Folgendes angeben:
ein oder mehrere Kanalzustandsinformations-Referenzsignale, CSI-RS, der Sekundärzelle; und
eine maximale Anzahl von Strahlausfallereignissen;
Ausführen einer Strahlausfallerkennung der Sekundärzelle im Ruhezustand,
**dadurch gekennzeichnet, dass** die Strahlausfallerkennung der Sekundärzelle auf Folgendem basiert:
einer oder mehreren Funkverbindungsqualitäten der einen oder mehreren CSI-RS der Sekundärzelle;
einem Schwellenwert für die Blockfehlerrate, BLER; und
der maximalen Anzahl von Strahlausfallereignissen; und
Ausführen einer Wiederherstellung nach einem Strahlausfall der Sekundärzelle im Ruhezustand basierend auf der Erkennung eines Strahlausfalls der Sekundärzelle.

2. Verfahren nach Anspruch 1, weiter umfassend das Empfangen, durch die drahtlose Vorrichtung, eines Steuerungsbefehls, der ein Ruhezustandsanzeigefeld umfasst, wobei ein Wert des Feldes den Ruhezustand für die Sekundärzelle angibt.

3. Verfahren nach Anspruch 2, weiter umfassend das Versetzen der Sekundärzelle in den Ruhezustand basierend auf dem Empfang des Steuerungsbefehls.

4. Verfahren nach Anspruch 3, wobei die drahtlose Vorrichtung, als Reaktion darauf, dass sich die Sekundärzelle im Ruhezustand befindet:
den physikalischen Downlink-Steuerkanal, PDCCH, der Sekundärzelle nicht überwacht;
den PDCCH für die Sekundärzelle nicht überwacht;
keine CSI-Daten für die Sekundärzelle meldet; und
keine Sondierungsreferenzsignale, SRS, auf der Sekundärzelle sendet.

5. Verfahren nach einem der Ansprüche 2 bis 4, wobei der Steuerungsbefehl ein Element zur Steuerung des Medienzugriffs, MAC-CE, ist.

6. Verfahren nach einem der Ansprüche 2 bis 5, wobei der Wert gleich eins ist.

7. Verfahren nach einem der Ansprüche 2 bis 6, weiter umfassend das Empfangen, durch die drahtlose Vorrichtung, eines zweiten Steuerungsbefehls, der ein zweites Ruhezustandsanzeigefeld umfasst, wobei:
ein Wert des zweiten Ruhezustands-Anzeigefelds anzeigt, dass sich die Sekundärzelle im aktiven Zustand befindet.

8. Verfahren nach Anspruch 7, weiter umfassend das Versetzen der Sekundärzelle in einen aktiven Zustand basierend auf dem Aktivierungsfeld der Sekundärzelle, das die Aktivierung der Sekundärzelle anzeigt.

9. Verfahren nach einem der Ansprüche 1 bis 8, weiter umfassend:
Messen der Qualität der einen oder mehreren Funkverbindungen des einen oder der mehreren CSI-RS der Sekundärzelle zur Erkennung eines Strahlausfalls der Sekundärzelle; und
Erhöhen eines Zählers für Strahlausfallereignisse basierend auf einem Vergleich der Qualität einer oder mehrerer Funkverbindungen und des BLER-Schwellenwerts.

10. Verfahren nach Anspruch 9, wobei das Ausführen der Wiederherstellung nach einem Strahlausfall der Sekundärzelle darauf basiert, dass der Zähler für Strahlausfallereignisse die maximale Anzahl von Strahlausfallereignissen erreicht.

11. Verfahren nach einem der Ansprüche 9 bis 10, wobei der eine oder die mehreren Parameter zur Strahlausfallerkennung ferner einen Zeitgeber zur Strahlausfallerkennung angeben.

12. Verfahren nach Anspruch 11, weiter umfassend:
Zurücksetzen des Zeitgebers zur Strahlausfallerkennung basierend auf der Erhöhung des Zählers für Strahlausfallereignisse, und
Setzen des Zählers für Strahlausfallereignisse auf Null, basierend auf dem Ablauf des Zeitgebers zur Strahlausfallerkennung.

13. Verfahren nach einem der Ansprüche 1 bis 12, wobei die Sekundärzelle als Reaktion auf das Ablaufen eines der Sekundärzelle zugeordneten Ruhezustandszeitgebers der Sekundärzelle in den Ruhezustand übergeht.

14. Drahtlose Vorrichtung, umfassend:
einen oder mehrere Prozessoren; und
einen Speicher, der Anweisungen speichert, die, wenn sie durch den einen oder die mehreren Prozessoren ausgeführt werden, die drahtlose Vorrichtung veranlassen, das Verfahren nach einem der Ansprüche 1 bis 13 auszuführen.

15. Nicht-transitorisches computerlesbares Medium, umfassend Anweisungen, die, wenn sie durch einen oder mehrere Prozessoren einer drahtlosen Vorrichtung ausgeführt werden, die drahtlose Vorrichtung veranlassen, das Verfahren nach einem der Ansprüche 1 bis 13 auszuführen.

## Revendications

1. Procédé comprenant :
la réception, par un dispositif sans fil, d'un ou de plusieurs messages de contrôle de ressources radio, RRC, comprenant des paramètres de détection de défaillance de faisceau d'une cellule secondaire, dans lequel les paramètres de détection de défaillance de faisceau indiquent :
un ou plusieurs signaux de référence d'informations d'état de canal, CSI-RS, de la cellule secondaire ; et
un nombre maximal d'instances de défaillance de faisceau ;
l'exécution d'une détection de défaillance de faisceau de la cellule secondaire dans un état dormant,
**caractérisé en ce que** la détection de défaillance de faisceau de la cellule secondaire est basée sur :
une ou plusieurs qualités de liaison radio des un ou plusieurs CSI-RS de la cellule secondaire ;
un seuil de taux d'erreur par bloc, BLER ; et
le nombre maximal d'instances de défaillance de faisceau ; et
l'exécution d'une reprise sur défaillance de faisceau de la cellule secondaire dans l'état dormant sur la base de la détection d'une défaillance de faisceau de la cellule secondaire.

2. Procédé selon la revendication 1, comprenant en outre la réception, par le dispositif sans fil, d'une commande de contrôle comprenant un champ d'indication de dormance, dans lequel une valeur du champ indique l'état dormant pour la cellule secondaire.

3. Procédé selon la revendication 2, comprenant en outre le passage de la cellule secondaire dans l'état dormant sur la base de la réception de la commande de contrôle.

4. Procédé selon la revendication 3, dans lequel, en réponse au fait que la cellule secondaire est dans l'état dormant, le dispositif sans fil :
ne surveille pas de canal de commande de liaison descendante physique, PDCCH, sur la cellule secondaire ;
ne surveille pas de PDCCH pour la cellule secondaire ;
ne rapporte pas de CSI sur la cellule secondaire ; et
ne transmet pas de signaux de référence de sondage, SRS, sur la cellule secondaire.

5. Procédé selon l'une quelconque des revendications 2 à 4, dans lequel la commande de contrôle est un élément de contrôle de contrôle d'accès au support, MAC-CE.

6. Procédé selon l'une quelconque des revendications 2 à 5, dans lequel la valeur est un.

7. Procédé selon l'une quelconque des revendications 2 à 6, comprenant en outre la réception, par le dispositif sans fil, d'une seconde commande de contrôle comprenant un second champ d'indication de dormance, dans lequel :
une valeur du second champ d'indication de dormance indique un état actif pour la cellule secondaire.

8. Procédé selon la revendication 7, comprenant en outre le passage de la cellule secondaire dans un état actif sur la base du champ d'activation de cellule secondaire indiquant l'activation de la cellule secondaire.

9. Procédé selon l'une quelconque des revendications 1 à 8, comprenant en outre :
la mesure des une ou plusieurs qualités de liaison radio des un ou plusieurs CSI-RS de la cellule secondaire pour la détection de défaillance de faisceau de la cellule secondaire ; et
l'incrémentation d'un compteur d'instances de défaillance de faisceau sur la base d'une comparaison des une ou plusieurs qualités de liaison radio et du seuil BLER.

10. Procédé selon la revendication 9, dans lequel l'exécution de la reprise sur défaillance de faisceau de la cellule secondaire est basée sur le fait que le compteur d'instances de défaillance de faisceau atteint le nombre maximal d'instances de défaillance de faisceau.

11. Procédé selon l'une quelconque des revendications 9 à 10, dans lequel les un ou plusieurs paramètres de détection de défaillance de faisceau indiquent en outre un temporisateur de détection de défaillance de faisceau.

12. Procédé selon la revendication 11, comprenant en outre :
la réinitialisation du temporisateur de détection de défaillance de faisceau sur la base de l'incrémentation du compteur d'instances de défaillance de faisceau ; et
le réglage du compteur d'instances de défaillance de faisceau sur zéro, sur la base de l'expiration du temporisateur de détection de défaillance de faisceau.

13. Procédé selon l'une quelconque des revendications 1 à 12, dans lequel la cellule secondaire passe dans l'état dormant en réponse à une expiration d'un temporisateur d'hibernation de cellule secondaire associé à la cellule secondaire.

14. Dispositif sans fil comprenant :
un ou plusieurs processeurs ; et
une mémoire stockant des instructions qui, lorsqu'elles sont mises en œuvre par les un ou plusieurs processeurs, amènent le dispositif sans fil à exécuter le procédé selon l'une quelconque des revendications 1 à 13.

15. Support non transitoire lisible par ordinateur comprenant des instructions qui, lorsqu'elles sont mises en œuvre par un ou plusieurs processeurs d'un dispositif sans fil, amènent le dispositif sans fil à exécuter le procédé selon l'une quelconque des revendications 1 à 13.
